(19) Europäisches Patentamt
European Patent Office
Office européen des brevets

(11) **EP 4 667 996 A2**

(12) **EUROPEAN PATENT APPLICATION**

(43) Date of publication:
**24.12.2025 Bulletin 2025/52**

(21) Application number: **25177557.3**

(22) Date of filing: **20.05.2025**

(51) International Patent Classification (IPC):
***G02B 13/00*** (2006.01)   ***G02B 9/62*** (2006.01)

(52) Cooperative Patent Classification (CPC):
**G02B 13/0045; G02B 9/62; H04N 23/55**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.05.2024 TW 113120138**

(71) Applicant: **LARGAN Precision Co., Ltd.
Taichung City (TW)**

(72) Inventors:
• **CHEN, I-Chieh
Taichung City (TW)**
• **SHIH, Yu-Han
Taichung City (TW)**

(74) Representative: **Müller Schupfner & Partner
Patent- und Rechtsanwaltspartnerschaft mbB (Muc)
Bavariaring 11
80336 München (DE)**

(54) **PHOTOGRAPHY OPTICAL LENS ASSEMBLY, IMAGE CAPTURING UNIT AND ELECTRONIC DEVICE**

(57) A photography optical lens assembly includes six lens elements (E1, E2, E3, E4, E5, E6) which are, in order from an object side to an image side along an optical path: a first lens element (E1), a second lens element (E2), a third lens element (E3), a fourth lens element (E4), a fifth lens element (E5) and a sixth lens element (E6). Each of the six lens elements (E1, E2, E3, E4, E5, E6) has an object-side surface facing toward the object side and an image-side surface facing toward the image side. The first lens element (E1) has positive refractive power. The image-side surface of the fifth lens element (E5) is concave in a paraxial region thereof and has at least one critical point (C) in an off-axis region thereof. The object-side surface of the sixth lens element (E6) is convex in a paraxial region thereof and has at least one critical point (C) in an off-axis region thereof.

FIG. 1

**EP 4 667 996 A2**

## Description

## BACKGROUND

Technical Field

The present disclosure relates to a photography optical lens assembly, an image capturing unit and an electronic device, more particularly to a photography optical lens assembly and an image capturing unit applicable to an electronic device.

Description of Related Art

With the development of semiconductor manufacturing technology, the performance of image sensors has improved, and the pixel size thereof has been scaled down. Therefore, featuring high image quality becomes one of the indispensable features of an optical system nowadays.

Furthermore, due to the rapid changes in technology, electronic devices equipped with optical systems are trending towards multi-functionality for various applications, and therefore the functionality requirements for the optical systems have been increasing. However, it is difficult for a conventional optical system to obtain a balance among the requirements such as high image quality, low sensitivity, a proper aperture size, miniaturization and a desirable field of view.

## SUMMARY

According to one aspect of the present disclosure, a photography optical lens assembly includes six lens elements. The six lens elements are, in order from an object side to an image side along an optical path, a first lens element, a second lens element, a third lens element, a fourth lens element, a fifth lens element and a sixth lens element. Each of the six lens elements has an object-side surface facing toward the object side and an image-side surface facing toward the image side.

Preferably, the first lens element has positive refractive power. Preferably, the image-side surface of the fifth lens element is concave in a paraxial region thereof. Preferably, the image-side surface of the fifth lens element has at least one critical point in an off-axis region thereof. Preferably, the object-side surface of the sixth lens element is convex in a paraxial region thereof. Preferably, the object-side surface of the sixth lens element has at least one critical point in an off-axis region thereof.

When a fourth smallest value among Abbe numbers of all lens elements of the photography optical lens assembly is VS4, a central thickness of the first lens element is CT1, a central thickness of the second lens element is CT2, an axial distance between the first lens element and the second lens element is T12, an axial distance between the second lens element and the third lens element is T23, a curvature radius of the image-side surface of the fourth lens element is R8, and a curvature radius of the image-side surface of the sixth lens element is R12, the following conditions are preferably satisfied:

$$10.0 < VS4 < 46.0;$$

$$1.50 < CT1/CT2 < 7.00;$$

$$0.00 < T23/T12 < 0.72;$$

and

$$-4.80 < R8/R12 < -0.80.$$

According to another aspect of the present disclosure, a photography optical lens assembly includes six lens elements. The six lens elements are, in order from an object side to an image side along an optical path, a first lens element, a second lens element, a third lens element, a fourth lens element, a fifth lens element and a sixth lens element. Each of the six lens elements has an object-side surface facing toward the object side and an image-side surface facing toward the image side.

Preferably, the object-side surface of the fourth lens element is concave in a paraxial region thereof. Preferably, the image-side surface of the fourth lens element is convex in a paraxial region thereof. Preferably, the image-side surface of the fifth lens element is concave in a paraxial region thereof. Preferably, the object-side surface of the sixth lens element is convex in a paraxial region thereof. Preferably, the object-side surface of the sixth lens element has at least one critical point in an off-axis region thereof.

When a fourth smallest value among Abbe numbers of all lens elements of the photography optical lens assembly is VS4, a central thickness of the first lens element is CT1, a central thickness of the second lens element is CT2, an axial distance between the second lens element and the third lens element is T23, a curvature radius of the image-side surface of the fourth lens element is R8, a curvature radius of the image-side surface of the sixth lens element is R12, and a focal length of the photography optical lens assembly is f, the following conditions are preferably satisfied:

$$10.0 < VS4 < 46.0;$$

$$1.50 < CT1/CT2 < 7.00;$$

$$0.00 < 10 \times T23/CT1 < 3.00;$$

and

$$0.01 < |R8|/f + |R12|/f < 3.00.$$

According to another aspect of the present disclosure, an image capturing unit includes one of the aforementioned photography optical lens assemblies and an image sensor, wherein the image sensor is disposed on an image surface of the photography optical lens assembly.

According to another aspect of the present disclosure, an electronic device includes the aforementioned image capturing unit.

**BRIEF DESCRIPTION OF THE DRAWINGS**

The disclosure can be better understood by reading the following detailed description of the embodiments, with reference made to the accompanying drawings as follows:

Fig. 1 is a schematic view of an image capturing unit according to the 1st embodiment of the present disclosure;
Fig. 2 shows spherical aberration curves, astigmatic field curves and a distortion curve of the image capturing unit according to the 1st embodiment;
Fig. 3 is a schematic view of an image capturing unit according to the 2nd embodiment of the present disclosure;
Fig. 4 shows spherical aberration curves, astigmatic field curves and a distortion curve of the image capturing unit according to the 2nd embodiment;
Fig. 5 is a schematic view of an image capturing unit according to the 3rd embodiment of the present disclosure;
Fig. 6 shows spherical aberration curves, astigmatic field curves and a distortion curve of the image capturing unit according to the 3rd embodiment;
Fig. 7 is a schematic view of an image capturing unit according to the 4th embodiment of the present disclosure;
Fig. 8 shows spherical aberration curves, astigmatic field curves and a distortion curve of the image capturing unit according to the 4th embodiment;
Fig. 9 is a schematic view of an image capturing unit according to the 5th embodiment of the present disclosure;
Fig. 10 shows spherical aberration curves, astigmatic field curves and a distortion curve of the image capturing unit according to the 5th embodiment;
Fig. 11 is a schematic view of an image capturing unit according to the 6th embodiment of the present disclosure;
Fig. 12 shows spherical aberration curves, astigmatic field curves and a distortion curve of the image capturing unit according to the 6th embodiment;
Fig. 13 is a schematic view of an image capturing unit according to the 7th embodiment of the present disclosure;
Fig. 14 shows spherical aberration curves, astigmatic field curves and a distortion curve of the image capturing unit according to the 7th embodiment;
Fig. 15 is a schematic view of an image capturing unit according to the 8th embodiment of the present disclosure;
Fig. 16 shows spherical aberration curves, astigmatic field curves and a distortion curve of the image capturing unit according to the 8th embodiment;
Fig. 17 is a schematic view of an image capturing unit according to the 9th embodiment of the present disclosure;

Fig. 18 shows spherical aberration curves, astigmatic field curves and a distortion curve of the image capturing unit according to the 9th embodiment;

Fig. 19 is a schematic view of an image capturing unit according to the 10th embodiment of the present disclosure;

Fig. 20 shows spherical aberration curves, astigmatic field curves and a distortion curve of the image capturing unit according to the 10th embodiment;

Fig. 21 is a schematic view of an image capturing unit according to the 11th embodiment of the present disclosure;

Fig. 22 shows spherical aberration curves, astigmatic field curves and a distortion curve of the image capturing unit according to the 11th embodiment;

Fig. 23 is a schematic view of an image capturing unit according to the 12th embodiment of the present disclosure;

Fig. 24 shows spherical aberration curves, astigmatic field curves and a distortion curve of the image capturing unit according to the 12th embodiment;

Fig. 25 is a perspective view of an image capturing unit according to the 13th embodiment of the present disclosure;

Fig. 26 is a perspective view of an electronic device according to the 14th embodiment of the present disclosure;

Fig. 27 is another perspective view of the electronic device in Fig. 26;

Fig. 28 is a perspective view of an electronic device according to the 15th embodiment of the present disclosure;

Fig. 29 is another perspective view of the electronic device in Fig. 28;

Fig. 30 is a block diagram of the electronic device in Fig. 28;

Fig. 31 is a perspective view of an electronic device according to the 16th embodiment of the present disclosure;

Fig. 32 is a perspective view of an electronic device according to the 17th embodiment of the present disclosure;

Fig. 33 shows a schematic view of inflection points on lens surfaces and critical points on lens surfaces according to the 1st embodiment of the present disclosure;

Fig. 34 shows a schematic view of ET1, ET2, ET3, ET4, SAG2R1, SAG3R1, SAG5R1, Y5R1, Y5R2 and Y6R1 according to the 1st embodiment of the present disclosure;

Fig. 35 shows a schematic view of a configuration of a light-folding element in a photography optical lens assembly according to one embodiment of the present disclosure;

Fig. 36 shows a schematic view of another configuration of a light-folding element in a photography optical lens assembly according to one embodiment of the present disclosure; and

Fig. 37 shows a schematic view of a configuration of two light-folding elements in a photography optical lens assembly according to one embodiment of the present disclosure.

## DETAILED DESCRIPTION

A photography optical lens assembly includes six lens elements. The six lens elements are, in order from an object side to an image side along an optical path, a first lens element, a second lens element, a third lens element, a fourth lens element, a fifth lens element and a sixth lens element. Each of the six lens elements has an object-side surface facing toward the object side and an image-side surface facing toward the image side.

The first lens element can have positive refractive power. Therefore, it is favorable for reducing the size of the photography optical lens assembly at an object end thereof. The object-side surface of the first lens element can be convex in a paraxial region thereof. Therefore, it is favorable for reducing the outer diameter of the photography optical lens assembly at the object end thereof for an improved screen-to-body ratio.

The object-side surface of the fourth lens element can be concave in a paraxial region thereof. Therefore, it is favorable for adjusting the surface shape and the refractive power of the fourth lens element so as to correct aberrations, thereby enlarging the image surface. The image-side surface of the fourth lens element can be convex in a paraxial region thereof. Therefore, it is favorable for converging light to reduce the total track length of the lens.

The image-side surface of the fifth lens element is concave in a paraxial region thereof. Therefore, it is favorable for correcting distortion to improve image quality at the central field of view.

The object-side surface of the sixth lens element is convex in a paraxial region thereof. Therefore, it is favorable for collaborating with the surface shape of the image-side surface of the sixth lens element to correct field curvature and astigmatism. The image-side surface of the sixth lens element can be concave in a paraxial region thereof. Therefore, it is favorable for reducing the back focal length to reduce the lens size.

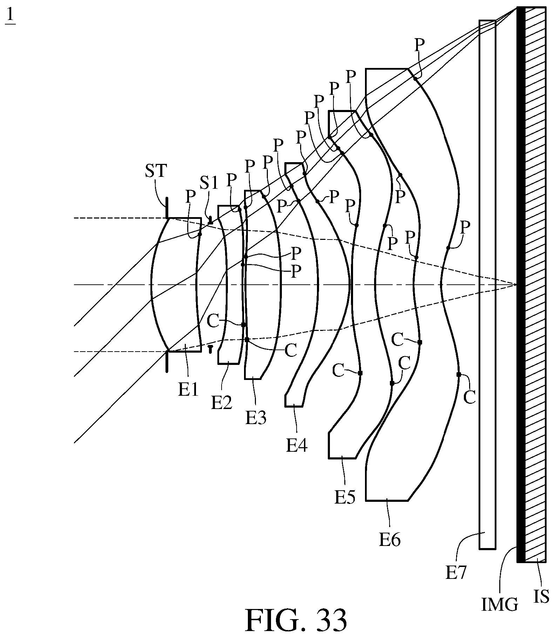

According to the present disclosure, the image-side surface of the fifth lens element can have at least one critical point in an off-axis region thereof. Therefore, it is favorable for increasing aspheric surface variation on the image-side surface of the fifth lens element, thereby correcting coma accumulated at the object end of the lens. According to the present disclosure, the object-side surface of the sixth lens element has at least one critical point in an off-axis region thereof. Therefore, it is favorable for correcting aberrations such as image distortion, thereby improving image quality. According to the present disclosure, the image-side surface of the sixth lens element can have at least one critical point in an off-axis region thereof. Therefore, it is favorable for ensuring a certain degree of variation on the overall surface shape of the image-side surface of the sixth lens element, thereby eliminating distortion. Please refer to Fig. 33, which shows a schematic view of critical points C on the image-side surface of the fifth lens element E5, the object-side surface of the sixth lens element E6 and the image-side surface of the sixth lens element E6 according to the 1st embodiment of the present disclosure. The abovementioned critical points C on the image-side surface of the fifth lens element E5, the object-side surface of the sixth lens element E6 and the image-side surface of the sixth lens element E6, as well as critical points C on the image-side surface of the second lens element E2, the object-side surface of the third lens element E3 and the object-side surface of the fifth lens element E5 in Fig. 33 are exemplary. Each of lens surfaces in various embodiments of the present disclosure may also have one or more critical points in an off-axis region thereof.

According to the present disclosure, there can be an air gap in a paraxial region between each of all adjacent lens elements of the photography optical lens assembly; that is, each of the first through sixth lens elements can be a single and non-cemented lens element. The manufacturing process of cemented lenses is more complex than the non-cemented lenses, particularly when an image-side surface of one lens element and an object-side surface of the following lens element need to have accurate curvatures to ensure both lenses being properly cemented. In addition, during the cementing process, those two lens elements might not be well cemented due to misalignment, which is not favorable for the image quality. Therefore, having an air gap in a paraxial region between adjacent lens elements of the photography optical lens assembly in the present disclosure is favorable for improving manufacturability and effectively utilizing air medium so as to increase flexibility in optical lens design and thus to improve image quality.

According to the present disclosure, the photography optical lens assembly can further include an aperture stop that can be located at an object side of the second lens element. Therefore, it is favorable for adjusting the position of the aperture stop so as to obtain a proper balance between the field of view, the total track length and relative illuminance at the peripheral field of view.

When a fourth smallest value among Abbe numbers of all lens elements of the photography optical lens assembly is VS4, the following condition is satisfied: $10.0 < VS4 < 46.0$. Therefore, it is favorable for effectively suppressing dispersion so as to increase contour contrast and detail recognizability of the image. Moreover, the following condition can also be satisfied: $15.0 < VS4 < 45.5$. Moreover, the following condition can also be satisfied: $28.2 \leq VS4 \leq 44.8$.

When a central thickness of the first lens element is CT1, and a central thickness of the second lens element is CT2, the following condition is satisfied: $1.50 < CT1/CT2 < 7.00$. Therefore, it is favorable for receiving and reflecting incident light so as to increase the field of view of the photography optical lens assembly. Moreover, the following condition can also be satisfied: $1.70 < CT1/CT2 < 6.00$. Moreover, the following condition can also be satisfied: $1.90 < CT1/CT2 < 5.00$. Moreover, the following condition can also be satisfied: $2.24 \leq CT1/CT2 \leq 4.21$.

When an axial distance between the first lens element and the second lens element is T12, and an axial distance between the second lens element and the third lens element is T23, the following condition can be satisfied: $0.00 < T23/T12 < 0.72$. Therefore, it is favorable for adjusting the position of the second lens element, thereby harmonizing the optical path at the object end of the photography optical lens assembly and improving the lens photography effect. Moreover, the following condition can also be satisfied: $0.01 < T23/T12 < 0.63$. Moreover, the following condition can also be satisfied: $0.02 < T23/T12 < 0.56$. Moreover, the following condition can also be satisfied: $0.06 \leq T23/T12 \leq 0.21$.

When a curvature radius of the image-side surface of the fourth lens element is R8, and a curvature radius of the image-side surface of the sixth lens element is R12, the following condition can be satisfied: $-4.80 < R8/R12 < -0.80$. Therefore, it is favorable for adjusting the surface shapes and the refractive powers of the fourth and sixth lens elements, thereby correcting astigmatism. Moreover, the following condition can also be satisfied: $-3.80 < R8/R12 < -0.90$. Moreover, the following condition can also be satisfied: $-2.79 \leq R8/R12 \leq -1.15$.

When the axial distance between the second lens element and the third lens element is T23, and the central thickness of the first lens element is CT1, the following condition can be satisfied: $0.00 < 10{\times}T23/CT1 < 3.00$. Therefore, it is favorable for adjusting light at the object end of the lens so as to obtain a proper balance between the field of view and the spherical aberration correction. Moreover, the following condition can also be satisfied: $0.10 < 10{\times}T23/CT1 < 2.80$. Moreover, the following condition can also be satisfied: $0.58 \leq 10{\times}T23/CT1 \leq 2.35$.

When the curvature radius of the image-side surface of the fourth lens element is R8, the curvature radius of the image-side surface of the sixth lens element is R12, and a focal length of the photography optical lens assembly is f, the following condition can be satisfied: $0.01 < |R8|/f+|R12|/f < 3.00$. Therefore, it is favorable for having a sufficient degree of curvature of the lens element, thereby correcting field curvature and astigmatism to improve image quality. Moreover, the following condition can also be satisfied: $0.15 < |R8|/f+|R12|/f < 2.50$. Moreover, the following condition can also be satisfied: $0.30 < |R8|/f+|R12|/f < 2.00$. Moreover, the following condition can also be satisfied: $0.52 \leq |R8|/f+|R12|/f \leq 1.11$.

When a curvature radius of the object-side surface of the first lens element is R1, and a curvature radius of the image-side surface of the first lens element is R2, the following condition can be satisfied: $-0.30 < R1/R2 < 2.00$. Therefore, it is favorable for adjusting the lens shape of the first lens element so as to correct spherical aberration and field curvature of the photography optical lens assembly. Moreover, the following condition can also be satisfied: $-0.15 < R1/R2 < 1.00$.

When an f-number of the photography optical lens assembly is Fno, the following condition can be satisfied: $1.20 < Fno < 2.50$. Therefore, it is favorable for adjusting the size of the aperture to obtain a proper balance between image quality of the overall field of view and relative illuminance of the peripheral field of view. Moreover, the following condition can also be satisfied: 1.50 < Fno < 2.50.

When the axial distance between the first lens element and the second lens element is T12, the axial distance between the second lens element and the third lens element is T23, and an axial distance between the third lens element and the fourth lens element is T34, the following condition can be satisfied: 0.00 < T23/(T12+T34) < 0.20. Therefore, it is favorable for adjusting the spatial distribution of lens elements within the lens, thereby obtain a proper balance between the field of view and the aberration correction. Moreover, the following condition can also be satisfied: 0.01 < T23/(T12+T34) < 0.18.

When an Abbe number of the sixth lens element is V6, the following condition can be satisfied: 10.0 < V6 < 48.0. Therefore, a proper material selection of the sixth lens element is favorable for effectively correcting chromatic aberration and thus improving image quality. Moreover, the following condition can also be satisfied: 15.0 < V6 < 45.5.

When a central thickness of the fifth lens element is CT5, and a central thickness of the sixth lens element is CT6, the following condition can be satisfied: 0.30 < CT5/CT6 < 1.50. Therefore, it is favorable for collaborating the fifth and sixth lens elements in balancing the size distribution at the image end of the photography optical lens assembly. Moreover, the following condition can also be satisfied: 0.40 < CT5/CT6 < 1.30.

When an axial distance between the image-side surface of the sixth lens element and the image surface is BL, and an axial distance between the object-side surface of the first lens element and the image surface is TL, the following condition can be satisfied: 0.05 < BL/TL < 0.35. Therefore, it is favorable for adjusting the lens distribution and the back focal length, thereby reducing the back focal length to meet the requirement of compactness.

When the axial distance between the third lens element and the fourth lens element is T34, an axial distance between the fifth lens element and the sixth lens element is T56, and the central thickness of the second lens element is CT2, the following condition can be satisfied: 2.00 < (T34+T56)/CT2 < 8.00. Therefore, a proper thickness adjustment between air medium and lens material medium is favorable for correcting aberrations, thereby reducing assembly difficulty. Moreover, the following condition can also be satisfied: 2.60 < (T34+T56)/CT2 < 7.00.

When a curvature radius of the image-side surface of the fifth lens element is R10, and a curvature radius of the object-side surface of the sixth lens element is R11, the following condition can be satisfied: 0.03 < R11/R10 < 1.43. Therefore, it is favorable for collaborating the fifth and sixth lens elements in adjusting the optical path, thereby improving convergence quality at the central and adjacent fields of view. Moreover, the following condition can also be satisfied: 0.06 < R11/R10 < 1.25. Moreover, the following condition can also be satisfied: 0.28 < R11/R10 < 1.18.

When the axial distance between the object-side surface of the first lens element and the image surface is TL, and the focal length of the photography optical lens assembly is f, the following condition can be satisfied: 1.00 < TL/f < 1.48. Therefore, it is favorable for utilizing the overall focal length to adjust the total track length of the lens, thereby standardizing the basic specification of the lens so as to be applicable in various applications.

When an Abbe number of the second lens element is V2, and the Abbe number of the sixth lens element is V6, the following condition can be satisfied: 1.10 < V6/V2 < 3.80. Therefore, it is favorable for adjusting the optical path of the photography optical lens assembly and optimizing the capability to control light beam between lens elements. Moreover, the following condition can also be satisfied: 1.20 < V6/V2 < 3.00.

When a composite focal length of the fourth lens element and the fifth lens element is f45, and a composite focal length of the fifth lens element and the sixth lens element is f56, the following condition can be satisfied: -18.00 < f45/f56 < 1.30. Therefore, it is favorable for adjusting the refractive power distribution of the photography optical lens assembly so as to correct aberrations. Moreover, the following condition can also be satisfied: -13.00 < f45/f56 < 1.20.

When the axial distance between the object-side surface of the first lens element and the image surface is TL, and a maximum image height of the photography optical lens assembly (which can be half of a diagonal length of an effective photosensitive area of the image sensor) is ImgH, the following condition can be satisfied: 0.80 < TL/ImgH < 1.80. Therefore, it is favorable for obtaining a proper balance between reduction in the total track length and enlargement of the image surface. Moreover, the following condition can also be satisfied: 0.90 < TL/ImgH < 1.65.

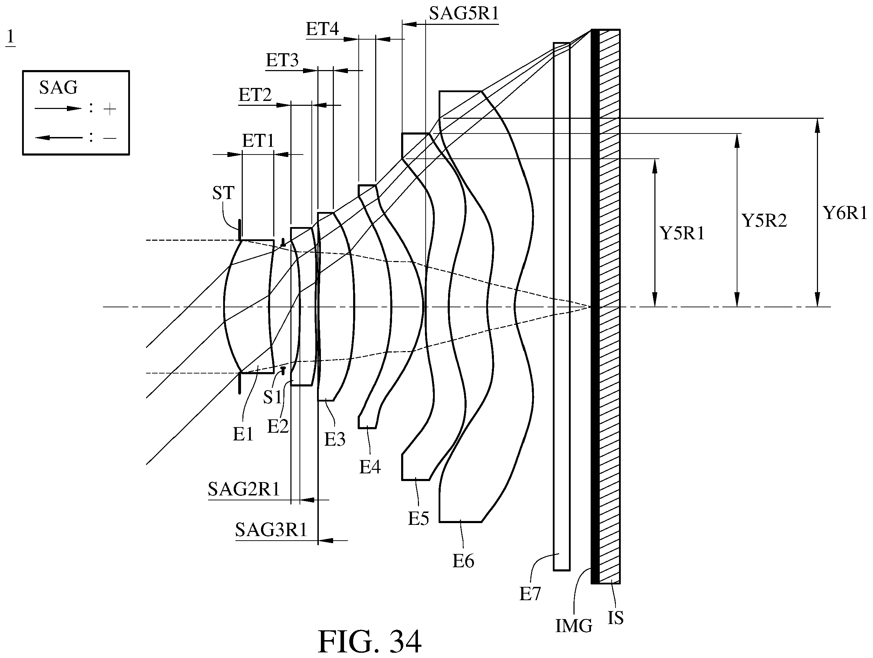

When a displacement in parallel with an optical axis from an axial vertex on the object-side surface of the fifth lens element to a maximum effective radius position on the object-side surface of the fifth lens element is SAG5R1, and a maximum effective radius of the object-side surface of the fifth lens element is Y5R1, the following condition can be satisfied: -0.30 < SAG5R1/Y5R1 < 0.10. Therefore, it is favorable for controlling the surface shape at the periphery of the object-side surface of the fifth lens element, thereby obtaining a proper balance between the image size, the reflective angle of peripheral light and the manufacturability. Please refer to Fig. 34, which shows a schematic view of SAG5R1 and Y5R1 according to the 1st embodiment of the present disclosure. When the direction from the axial vertex of one surface to the maximum effective radius position of the same surface is facing towards the image side of the photography optical lens assembly, the value of displacement is positive; when the direction from the axial vertex of the surface to the maximum effective radius position of the same surface is facing towards the object side of the photography optical lens assembly, the value of displacement is negative.

When a distance in parallel with the optical axis between a maximum effective radius position of the object-side surface of the second lens element and a maximum effective radius position of the image-side surface of the second lens

**EP 4 667 996 A2**

element is ET2, and a distance in parallel with the optical axis between a maximum effective radius position of the object-side surface of the third lens element and a maximum effective radius position of the image-side surface of the third lens element is ET3, the following condition can be satisfied: 1.00 < ET2/ET3 < 2.00. Therefore, it is favorable for adjusting the edge thickness of the second and third lens elements, thereby obtaining a proper balance between the difficulty of lens formation and yield rate of lens assembly. Please refer to Fig. 34, which shows a schematic view of ET2 and ET3 according to the 1st embodiment of the present disclosure.

When a maximum effective radius of the image-side surface of the fifth lens element is Y5R2, and a maximum effective radius of the object-side surface of the sixth lens element is Y6R1, the following condition can be satisfied: 1.00 < Y6R1/Y5R2 < 1.30. Therefore, it is favorable for harmonizing the optical path so as to obtain a proper balance between the field of the view and the image size, thereby preventing divergence of peripheral light. Please refer to Fig. 34, which shows a schematic view of Y5R2 and Y6R1 according to the 1st embodiment of the present disclosure.

When the Abbe number of the second lens element is V2, an Abbe number of the fifth lens element is V5, and the Abbe number of the sixth lens element is V6, the following condition can be satisfied: 30.0 < V2+V5+V6 < 95.2. Therefore, a proper standardization to Abbe numbers is favorable for preventing selection of materials with high refractive indices, which assist in enhancing capability of lens elements to reflect light. Moreover, the following condition can also be satisfied: 40.0 < V2+V5+V6 < 92.0. Moreover, the following condition can also be satisfied: 45.0 < V2+V5+V6 < 88.5.

When a central thickness of the third lens element is CT3, and the central thickness of the sixth lens element is CT6, the following condition can be satisfied: 0.50 < CT3/CT6 < 1.80. Therefore, it is favorable for balancing the ratio of central thicknesses of the third and sixth lens elements, thereby reducing manufacturing tolerance to improve yield rate. Moreover, the following condition can also be satisfied: 0.60 < CT3/CT6 < 1.75.

When a focal length of the first lens element is f1, and a focal length of the sixth lens element is f6, the following condition can be satisfied: 0.00 < |f1/f6| < 3.10. Therefore, it is favorable for collaborating the focal lengths of the first and sixth lens elements in increasing image resolution. Moreover, the following condition can also be satisfied: 0.01 < |f1/f6| < 2.60. Moreover, the following condition can also be satisfied: 0.01 < |f1/f6| < 2.00.

When the focal length of the first lens element is f1, a focal length of the second lens element is f2, a focal length of the third lens element is f3, and a focal length of the fifth lens element is f5, the following condition can be satisfied: 0.10 < (|f3|+|f5|)/(|f1|+|f2|) < 1.50. Therefore, it is favorable for adjusting the refractive power distribution of lens elements at the front end and the middle-rear end, thereby reducing eccentric sensitivity. Moreover, the following condition can also be satisfied: 0.20 < (|f3|+|f5|)/(|f1|+|f2|) < 1.30.

When an Abbe number of the fourth lens element is V4, the following condition can be satisfied: 10.0 < V4 < 48.0. Therefore, a proper standardization to material selection of the fourth lens element is favorable for balancing convergence abilities to light with different wavelengths. Moreover, the following condition can also be satisfied: 15.0 < V4 < 45.5.

When the curvature radius of the object-side surface of the sixth lens element is R11, the curvature radius of the image-side surface of the sixth lens element is R12, and the focal length of the photography optical lens assembly is f, the following condition can be satisfied: 0.03 < |R11+R12|/f < 2.30. Therefore, it is favorable for adjusting the curvature degree of the surfaces of the sixth lens element, thereby correcting field curvature and distortion. Moreover, the following condition can also be satisfied: 0.15 < |R11+R12|/f < 1.90. Moreover, the following condition can also be satisfied: 0.30 < |R11+R12|/f < 1.30.

When the curvature radius of the image-side surface of the first lens element is R2, the curvature radius of the image-side surface of the fourth lens element is R8, the curvature radius of the image-side surface of the fifth lens element is R10, and the curvature radius of the image-side surface of the sixth lens element is R12, the following condition can be satisfied: 0.10 < |R8/R2|+|R12/R10| < 2.30. Therefore, it is favorable for adjusting the overall optical path of the lens, such that aberrations can be compensated with one another. Moreover, the following condition can also be satisfied: 0.20 < |R8/R2|+|R12/R10| < 1.90.

When the axial distance between the fifth lens element and the sixth lens element is T56, and the central thickness of the fifth lens element is CT5, the following condition can be satisfied: 0.50 < T56/CT5 < 4.50. Therefore, it is favorable for adjusting the ratio of the lens interval to the lens thickness, thereby obtaining a proper balance between reduction in the manufacturing tolerance and reduction in the temperature effect. Moreover, the following condition can also be satisfied: 0.70 < T56/CT5 < 3.30. Moreover, the following condition can also be satisfied: 0.80 < T56/CT5 < 2.80.

When the focal length of the first lens element is f1, and a focal length of the fourth lens element is f4, the following condition can be satisfied: 1.00 < f1/f4 < 7.00. Therefore, it is favorable for adjusting the ratio of refractive powers of the first and fourth lens elements so as to correct spherical aberration. Moreover, the following condition can also be satisfied: 1.25 < f1/f4 < 5.00.

When the focal length of the photography optical lens assembly is f, and the focal length of the first lens element is f1, the following condition can be satisfied: 0.30 < f/f1 < 1.00. Therefore, it is favorable for having sufficient refractive power of the first lens element, thereby reducing the opening and the total track length. Moreover, the following condition can also be satisfied: 0.40 < f/f1 < 0.90.

When a displacement in parallel with the optical axis from an axial vertex on the object-side surface of the second lens element to a maximum effective radius position on the object-side surface of the second lens element is SAG2R1, and a displacement in parallel with the optical axis from an axial vertex on the object-side surface of the third lens element to a maximum effective radius position on the object-side surface of the third lens element is SAG3R1, the following condition can be satisfied: $0.00 \leq |SAG3R1/SAG2R1| < 0.85$. Therefore, it is favorable for collaborating the peripheral surface shapes of the second and third lens elements in controlling incident angle of peripheral light, thereby correcting aberrations in an off-axis region thereof. Moreover, the following condition can also be satisfied: $0.00 \leq |SAG3R1/SAG2R1| < 0.60$. Please refer to Fig. 34, which shows a schematic view of SAG2R1 and SAG3R1 according to the 1st embodiment of the present disclosure. When the direction from the axial vertex of one surface to the maximum effective radius position of the same surface is facing towards the image side of the photography optical lens assembly, the value of displacement is positive; when the direction from the axial vertex of the surface to the maximum effective radius position of the same surface is facing towards the object side of the photography optical lens assembly, the value of displacement is negative.

When a distance in parallel with the optical axis between a maximum effective radius position of the object-side surface of the first lens element and a maximum effective radius position of the image-side surface of the first lens element is ET1, and a distance in parallel with the optical axis between a maximum effective radius position of the object-side surface of the fourth lens element and a maximum effective radius position of the image-side surface of the fourth lens element is ET4, the following condition can be satisfied: $0.60 < ET1/ET4 < 2.10$. Therefore, it is favorable for adjusting peripheral light, thereby obtaining a proper balance between correction of aberrations at an off-axis region thereof and maintenance of stability of the photography optical lens assembly. Please refer to Fig. 34, which shows a schematic view of ET1 and ET4 according to the 1st embodiment of the present disclosure.

According to the present disclosure, the aforementioned features and conditions can be utilized in numerous combinations so as to achieve corresponding effects.

According to the present disclosure, the lens elements of the photography optical lens assembly can be made of either glass or plastic material. When the lens elements are made of glass material, the refractive power distribution of the photography optical lens assembly may be more flexible, and the influence on imaging caused by external environment temperature change may be reduced. The glass lens element can either be made by grinding or molding. When the lens elements are made of plastic material, the manufacturing costs can be effectively reduced. Furthermore, surfaces of each lens element can be arranged to be spherical or aspheric. Spherical lens elements are simple in manufacture. Aspheric lens element design allows more control variables for eliminating aberrations thereof and reducing the required number of lens elements, and the total track length of the photography optical lens assembly can therefore be effectively shortened. Additionally, the aspheric surfaces may be formed by plastic injection molding or glass molding.

According to the present disclosure, when a lens surface is aspheric, it means that the lens surface has an aspheric shape throughout its optically effective area, or a portion(s) thereof.

According to the present disclosure, one or more of the lens elements' material may optionally include an additive which generates light absorption and interference effects and alters the lens elements' transmittance in a specific range of wavelength for a reduction in unwanted stray light or color deviation. For example, the additive may optionally filter out light in the wavelength range of 600 nm to 800 nm to reduce excessive red light and/or near infrared light; or may optionally filter out light in the wavelength range of 350 nm to 450 nm to reduce excessive blue light and/or near ultraviolet light from interfering the final image. The additive may be homogeneously mixed with a plastic material to be used in manufacturing a mixed-material lens element by injection molding. Moreover, the additive may be coated on the lens surfaces to provide the abovementioned effects.

According to the present disclosure, each of an object-side surface and an image-side surface has a paraxial region and an off-axis region. The paraxial region refers to the region of the surface where light rays travel close to the optical axis, and the off-axis region refers to the region of the surface away from the paraxial region. Particularly, unless otherwise stated, when the lens element has a convex surface, it indicates that the surface is convex in the paraxial region thereof; when the lens element has a concave surface, it indicates that the surface is concave in the paraxial region thereof. Moreover, when a region of refractive power or focus of a lens element is not defined, it indicates that the region of refractive power or focus of the lens element is in the paraxial region thereof.

According to the present disclosure, an inflection point is a point on the surface of the lens element at which the surface changes from concave to convex, or vice versa. A critical point is a non-axial point of the lens surface where its tangent is perpendicular to the optical axis. Please refer to Fig. 33, which shows a schematic view of inflection points P on the image-side surface of the first lens element E1, the image-side surface of the second lens element E2, the object-side surface of the third lens element E3, the image-side surface of the third lens element E3, the object-side surface of the fourth lens element E4, the image-side surface of the fourth lens element E4, the object-side surface of the fifth lens element E5, the image-side surface of the fifth lens element E5, the object-side surface of the sixth lens element E6 and the image-side surface of the sixth lens element E6 according to the 1st embodiment of the present disclosure. The abovementioned inflection points P on the image-side surface of the first lens element E1, the image-side surface of the second lens element E2, the object-side surface of the third lens element E3, the image-side surface of the third lens element E3, the object-side surface of the fourth lens element E4, the image-side surface of the fourth lens element E4, the object-side surface of the fifth lens element E5, the image-side surface of the fifth lens element E5, the object-side surface of the sixth lens element E6 and the image-side surface of the sixth lens element E6 in Fig. 33 are exemplary. Each of lens surfaces in various embodiments of the present disclosure may also have one or more inflection points.

According to the present disclosure, the image surface of the photography optical lens assembly, based on the corresponding image sensor, can be flat or curved, especially a curved surface being concave facing towards the object side of the photography optical lens assembly.

According to the present disclosure, an image correction unit, such as a field flattener, can be optionally disposed between the lens element closest to the image side of the photography optical lens assembly along the optical path and the image surface for correction of aberrations such as field curvature. The optical properties of the image correction unit, such as curvature, thickness, index of refraction, position and surface shape (convex or concave surface with spherical, aspheric, diffractive or Fresnel types), can be adjusted according to the design of the image capturing unit. In general, a preferable image correction unit is, for example, a thin transparent element having a concave object-side surface and a planar image-side surface, and the thin transparent element is disposed near the image surface.

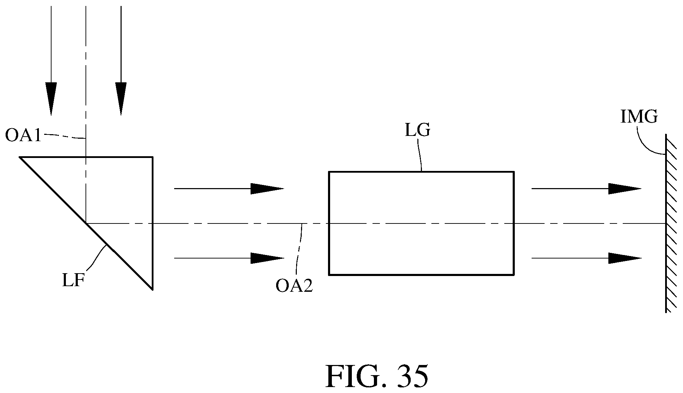

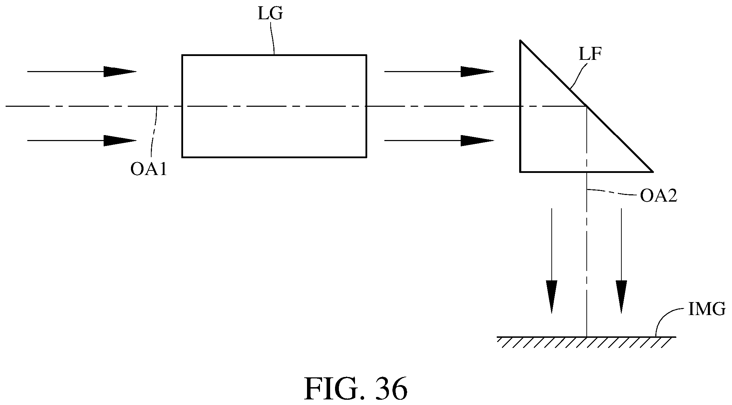

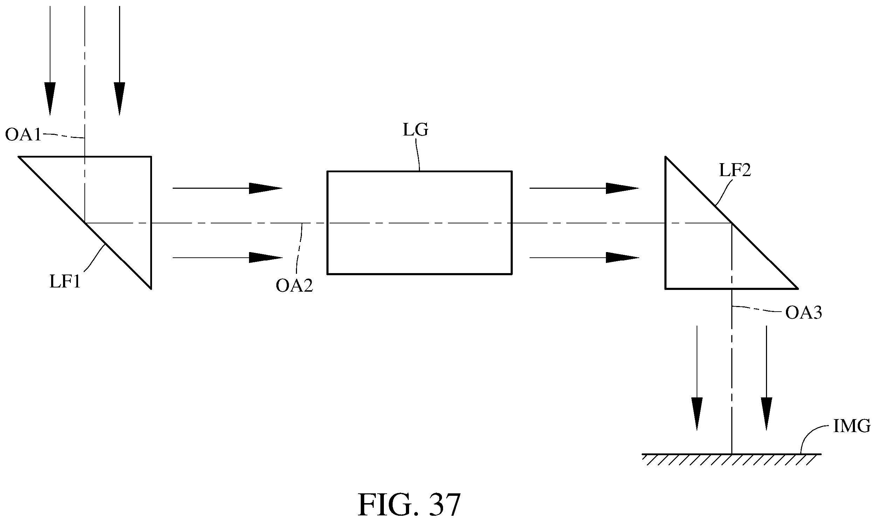

According to the present disclosure, at least one light-folding element, such as a prism or a mirror which can have a surface being planar, spherical, aspheric or in free-form, can be optionally disposed between an imaged object and the image surface on the imaging optical path, such that the photography optical lens assembly can be more flexible in space arrangement, and therefore the dimensions of an electronic device is not restricted by the total track length of the photography optical lens assembly. Specifically, please refer to Fig. 35 and Fig. 36. Fig. 35 shows a schematic view of a configuration of a light-folding element in a photography optical lens assembly according to one embodiment of the present disclosure, and Fig. 36 shows a schematic view of another configuration of a light-folding element in a photography optical lens assembly according to one embodiment of the present disclosure. In Fig. 35 and Fig. 36, the photography optical lens assembly can have, in order from an imaged object (not shown in the figures) to an image surface IMG along an optical path, a first optical axis OA1, a light-folding element LF and a second optical axis OA2. The light-folding element LF can be disposed between the imaged object and a lens group LG of the photography optical lens assembly as shown in Fig. 35 or disposed between a lens group LG of the photography optical lens assembly and the image surface IMG as shown in Fig. 36. Furthermore, please refer to Fig. 37, which shows a schematic view of a configuration of two light-folding elements in a photography optical lens assembly according to one embodiment of the present disclosure. In Fig. 37, the photography optical lens assembly can have, in order from an imaged object (not shown in the figure) to an image surface IMG along an optical path, a first optical axis OA1, a first light-folding element LF1, a second optical axis OA2, a second light-folding element LF2 and a third optical axis OA3. The first light-folding element LF1 is disposed between the imaged object and a lens group LG of the photography optical lens assembly, the second light-folding element LF2 is disposed between the lens group LG of the photography optical lens assembly and the image surface IMG, and the travelling direction of light on the first optical axis OA1 can be the same direction as the travelling direction of light on the third optical axis OA3 as shown in Fig. 37. The photography optical lens assembly can be optionally provided with three or more light-folding elements, and the present disclosure is not limited to the type, amount and position of the light-folding elements of the embodiments disclosed in the aforementioned figures.

According to the present disclosure, the photography optical lens assembly can include at least one stop, such as an aperture stop, a glare stop or a field stop. Said glare stop or said field stop is set for eliminating the stray light and thereby improving image quality thereof.

According to the present disclosure, an aperture stop can be configured as a front stop or a middle stop. A front stop disposed between an imaged object and the first lens element can provide a longer distance between an exit pupil of the photography optical lens assembly and the image surface to produce a telecentric effect, and thereby improves the image-sensing efficiency of an image sensor (for example, CCD or CMOS). A middle stop disposed between the first lens element and the image surface is favorable for enlarging the viewing angle of the photography optical lens assembly and thereby provides a wider field of view for the same.

According to the present disclosure, the photography optical lens assembly can include an aperture control unit. The aperture control unit may be a mechanical component or a light modulator, which can control the size and shape of the aperture through electricity or electrical signals. The mechanical component can include a movable member, such as a blade assembly or a light shielding sheet. The light modulator can include a shielding element, such as a filter, an electrochromic material or a liquid-crystal layer. The aperture control unit controls the amount of incident light or exposure time to enhance the capability of image quality adjustment. In addition, the aperture control unit can be the aperture stop of the present disclosure, which changes the f-number to obtain different image effects, such as the depth of field or lens speed.

According to the present disclosure, the photography optical lens assembly can include one or more optical elements for limiting the form of light passing through the photography optical lens assembly. Each optical element can be, but not limited to, a filter, a polarizer, etc., and each optical element can be, but not limited to, a single-piece element, a composite component, a thin film, etc. The optical element can be located at the object side or the image side of the photography optical lens assembly or between any two adjacent lens elements so as to allow light in a specific form to pass through, thereby meeting application requirements.

According to the present disclosure, the photography optical lens assembly can include at least one optical lens element, an optical element, or a carrier, which has at least one surface with a low reflection layer. The low reflection layer can effectively reduce stray light generated due to light reflection at the interface. The low reflection layer can be disposed in an optical non-effective area of an object-side surface or an image-side surface of the said optical lens element, or a connection surface between the object-side surface and the image-side surface. The said optical element can be a light-blocking element, an annular spacer, a barrel element, a cover glass, a blue glass, a filter, a color filter, an optical path folding element, a prism, a mirror, etc. The said carrier can be a base for supporting a lens assembly, a micro lens disposed on an image sensor, a substrate surrounding the image sensor, a glass plate for protecting the image sensor, etc.

According to the present disclosure, the object side and the image side are defined in accordance with the direction of the optical axis, and the axial optical data are calculated along the optical axis. Furthermore, if the optical axis is folded by a light-folding element, the axial optical data are also calculated along the folded optical axis.

According to the above description of the present disclosure, the following specific embodiments are provided for further explanation.

## 1st Embodiment

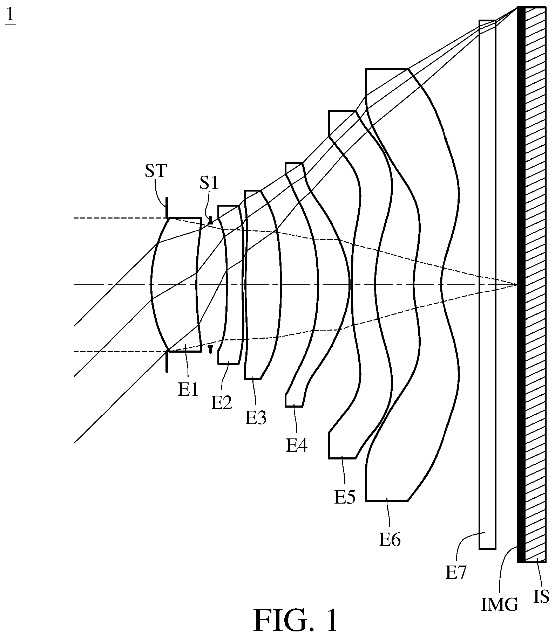

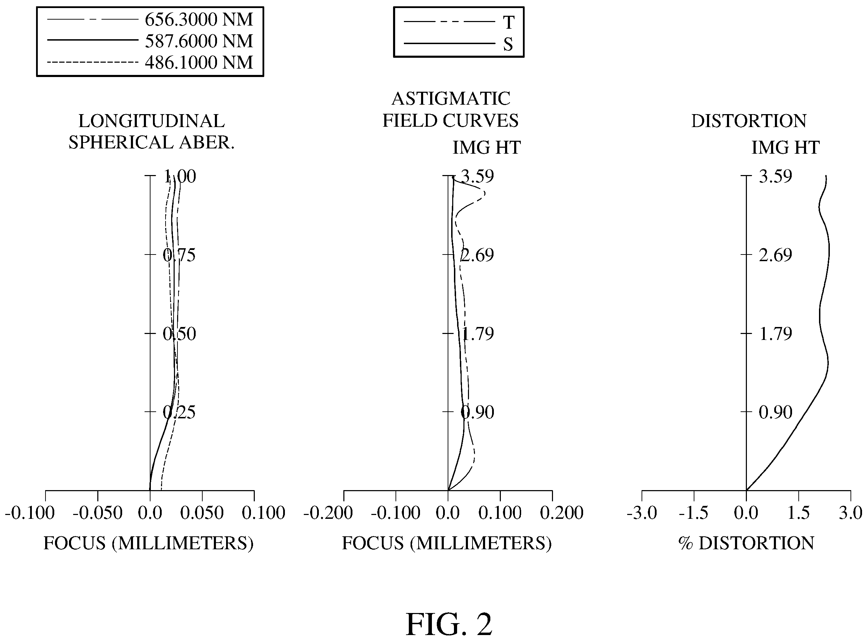

Fig. 1 is a schematic view of an image capturing unit according to the 1st embodiment of the present disclosure. Fig. 2 shows, in order from left to right, spherical aberration curves, astigmatic field curves and a distortion curve of the image capturing unit according to the 1st embodiment. In Fig. 1, the image capturing unit 1 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has two inflection points. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has two inflection points. The image-side surface of the fourth lens element E4 has two inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has four inflection points. The image-side surface of the fifth lens element E5 has two inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has two inflection points. The image-side surface of the sixth lens element E6 has two inflection points. The object-side surface of the sixth lens element E6 has one critical point in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The equation of the aspheric surface profiles of the aforementioned lens elements of the 1st embodiment is expressed as follows:

$$X(Y) = (Y^2/R)/\left(1 + sqrt\left(1 - (1+k) \times (Y/R)^2\right)\right) + \sum_i (Ai) \times (Y^i)$$

, where,

X is the displacement in parallel with an optical axis from an axial vertex on the aspheric surface to a point at a distance of Y from the optical axis on the aspheric surface;

Y is the vertical distance from the point on the aspheric surface to the optical axis;

R is the curvature radius;

k is the conic coefficient; and

Ai is the i-th aspheric coefficient, and in the embodiments, i may be, but is not limited to, 4, 6, 8, 10, 12, 14, 16, 18, 20, 22, 24, 26, 28 and 30.

In the photography optical lens assembly of the image capturing unit 1 according to the 1st embodiment, when a focal length of the photography optical lens assembly is f, an f-number of the photography optical lens assembly is Fno, and half of a maximum field of view of the photography optical lens assembly is HFOV, these parameters have the following values: f = 3.54 millimeters (mm), Fno = 2.05, and HFOV = 44.6 degrees (deg.).

When the maximum field of view of the photography optical lens assembly is FOV, the following condition is satisfied: FOV = 89.2 degrees.

When an axial distance between the object-side surface of the first lens element E1 and the image surface IMG is TL, and the focal length of the photography optical lens assembly is f, the following condition is satisfied: TL/f = 1.34.

When the axial distance between the object-side surface of the first lens element E1 and the image surface IMG is TL, and a maximum image height of the photography optical lens assembly is ImgH, the following condition is satisfied: TL/ImgH = 1.33.

When an axial distance between the image-side surface of the sixth lens element E6 and the image surface IMG is BL, and the axial distance between the object-side surface of the first lens element E1 and the image surface IMG is TL, the following condition is satisfied: BL/TL = 0.21.

When the focal length of the photography optical lens assembly is f, and a focal length of the first lens element E1 is f1, the following condition is satisfied: f/f1 = 0.70.

When the focal length of the first lens element E1 is f1, and a focal length of the fourth lens element E4 is f4, the following condition is satisfied: f1/f4 = 2.28.

When the focal length of the first lens element E1 is f1, and a focal length of the sixth lens element E6 is f6, the following condition is satisfied: |f1/f6| = 0.80.

When a composite focal length of the fourth lens element E4 and the fifth lens element E5 is f45, and a composite focal length of the fifth lens element E5 and the sixth lens element E6 is f56, the following condition is satisfied: f45/f56 = -4.65.

When the focal length of the first lens element E1 is f1, a focal length of the second lens element E2 is f2, a focal length of the third lens element E3 is f3, and a focal length of the fifth lens element E5 is f5, the following condition is satisfied: (|f3|+|f5|)/(|f1|+|f2|) = 0.73.

When a curvature radius of the object-side surface of the first lens element E1 is R1, and a curvature radius of the image-side surface of the first lens element E1 is R2, the following condition is satisfied: R1/R2 = 0.39.

When a curvature radius of the image-side surface of the fifth lens element E5 is R10, and a curvature radius of the object-side surface of the sixth lens element E6 is R11, the following condition is satisfied: R11/R10 = 0.71.

When a curvature radius of the image-side surface of the fourth lens element E4 is R8, and a curvature radius of the image-side surface of the sixth lens element E6 is R12, the following condition is satisfied: R8/R12 = -1.24.

When the curvature radius of the image-side surface of the fourth lens element E4 is R8, the curvature radius of the image-side surface of the sixth lens element E6 is R12, and the focal length of the photography optical lens assembly is f, the following condition is satisfied: |R8|/f+|R12|/f = 0.55.

When the curvature radius of the object-side surface of the sixth lens element E6 is R11, the curvature radius of the image-side surface of the sixth lens element E6 is R12, and the focal length of the photography optical lens assembly is f, the following condition is satisfied: |R11+R12|/f = 0.62.

When the curvature radius of the image-side surface of the first lens element E1 is R2, the curvature radius of the image-side surface of the fourth lens element E4 is R8, the curvature radius of the image-side surface of the fifth lens element E5 is R10, and the curvature radius of the image-side surface of the sixth lens element E6 is R12, the following condition is satisfied: |R8/R2|+|R12/R10| = 0.71.

When a central thickness of the first lens element E1 is CT1, and a central thickness of the second lens element E2 is CT2, the following condition is satisfied: CT1/CT2 = 2.88.

When an axial distance between the second lens element E2 and the third lens element E3 is T23, and the central thickness of the first lens element E1 is CT1, the following condition is satisfied: $10 \times$ T23/CT1 = 0.67. In this embodiment, an axial distance between two adjacent lens elements is a distance in a paraxial region between two adjacent lens surfaces of the two adjacent lens elements.

When an axial distance between the first lens element E1 and the second lens element E2 is T12, and the axial distance between the second lens element E2 and the third lens element E3 is T23, the following condition is satisfied: T23/T12 = 0.10.

When the axial distance between the first lens element E1 and the second lens element E2 is T12, the axial distance between the second lens element E2 and the third lens element E3 is T23, and an axial distance between the third lens element E3 and the fourth lens element E4 is T34, the following condition is satisfied: T23/(T12+T34) = 0.04.

When the axial distance between the third lens element E3 and the fourth lens element E4 is T34, an axial distance between the fifth lens element E5 and the sixth lens element E6 is T56, and the central thickness of the second lens element E2 is CT2, the following condition is satisfied: (T34+T56)/CT2 = 4.82.

When a central thickness of the third lens element E3 is CT3, and a central thickness of the sixth lens element E6 is CT6, the following condition is satisfied: CT3/CT6 = 1.29.

When the axial distance between the fifth lens element E5 and the sixth lens element E6 is T56, and a central thickness of the fifth lens element E5 is CT5, the following condition is satisfied: T56/CT5 = 1.66.

When the central thickness of the fifth lens element E5 is CT5, and the central thickness of the sixth lens element E6 is CT6, the following condition is satisfied: CT5/CT6 = 0.84.

When a fourth smallest value among Abbe numbers of all lens elements of the photography optical lens assembly is VS4, the following condition is satisfied: VS4 = 28.2. In this embodiment, among the first lens element E1 through the sixth lens element E6, an Abbe number of the sixth lens element E6 is larger than an Abbe number of the second lens element E2, an Abbe number of the fourth lens element E4 and an Abbe number of the fifth lens element E5, and is smaller than an Abbe number of the first lens element E1 and an Abbe number of the third lens element E3, and therefore VS4 is the Abbe number of the sixth lens element E6.

When the Abbe number of the fourth lens element E4 is V4, the following condition is satisfied: V4 = 25.4.

When the Abbe number of the sixth lens element E6 is V6, the following condition is satisfied: V6 = 28.2.

When the Abbe number of the second lens element E2 is V2, and the Abbe number of the sixth lens element E6 is V6, the following condition is satisfied: V6/V2 = 1.53.

When the Abbe number of the second lens element E2 is V2, the Abbe number of the fifth lens element E5 is V5, and the Abbe number of the sixth lens element E6 is V6, the following condition is satisfied: V2+V5+V6 = 62.9.

When a distance in parallel with the optical axis between a maximum effective radius position of the object-side surface of the first lens element E1 and a maximum effective radius position of the image-side surface of the first lens element E1 is ET1, and a distance in parallel with the optical axis between a maximum effective radius position of the object-side surface of the fourth lens element E4 and a maximum effective radius position of the image-side surface of the fourth lens element E4 is ET4, the following condition is satisfied: ET1/ET4 = 1.87.

When a distance in parallel with the optical axis between a maximum effective radius position of the object-side surface of the second lens element E2 and a maximum effective radius position of the image-side surface of the second lens element E2 is ET2, and a distance in parallel with the optical axis between a maximum effective radius position of the object-side surface of the third lens element E3 and a maximum effective radius position of the image-side surface of the third lens element E3 is ET3, the following condition is satisfied: ET2/ET3 = 1.33.

When a displacement in parallel with the optical axis from an axial vertex on the object-side surface of the fifth lens element E5 to a maximum effective radius position on the object-side surface of the fifth lens element E5 is SAG5R1, and a maximum effective radius of the object-side surface of the fifth lens element E5 is Y5R1, the following condition is satisfied: SAG5R1/Y5R1 = -0.16. In this embodiment, the direction of SAG5R1 is facing towards the object side of the photography optical lens assembly, so the value of SAG5R1 is negative.

When a displacement in parallel with the optical axis from an axial vertex on the object-side surface of the second lens element E2 to a maximum effective radius position on the object-side surface of the second lens element E2 is SAG2R1, and a displacement in parallel with the optical axis from an axial vertex on the object-side surface of the third lens element E3 to a maximum effective radius position on the object-side surface of the third lens element E3 is SAG3R1, the following condition is satisfied: |SAG3R1/SAG2R1| = 0.07. In this embodiment, the direction of SAG2R1 is facing towards the object side of the photography optical lens assembly, so the value of SAG2R1 is negative. In this embodiment, the direction of SAG3R1 is facing towards the object side of the photography optical lens assembly, so the value of SAG3R1 is negative.

When a maximum effective radius of the image-side surface of the fifth lens element E5 is Y5R2, and a maximum effective radius of the object-side surface of the sixth lens element E6 is Y6R1, the following condition is satisfied: Y6R1/Y5R2 = 1.09.

The detailed optical data of the 1st embodiment are shown in Table 1A and the aspheric surface data are shown in Table 1B below.

| TABLE 1A | | | | | | | | |
|---|---|---|---|---|---|---|---|---|
| 1st Embodiment | | | | | | | | |
| f = 3.54 mm, Fno = 2.05, HFOV = 44.6 deg. | | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.202 | | | | |
| 2 | Lens 1 | 1.7245 | (ASP) | 0.585 | Plastic | 1.515 | 56.4 | 5.09 |
| 3 | | 4.4596 | (ASP) | 0.182 | | | | |
| 4 | Stop | Plano | | 0.216 | | | | |
| 5 | Lens 2 | -23.7384 | (ASP) | 0.203 | Plastic | 1.686 | 18.4 | -5.98 |
| 6 | | 4.9788 | (ASP) | 0.039 | | | | |
| 7 | Lens 3 | 4.6847 | (ASP) | 0.459 | Plastic | 1.544 | 56.0 | 5.23 |
| 8 | | -6.9941 | (ASP) | 0.480 | | | | |
| 9 | Lens 4 | -4.4652 | (ASP) | 0.414 | Plastic | 1.615 | 25.4 | 2.24 |
| 10 | | -1.0879 | (ASP) | 0.030 | | | | |
| 11 | Lens 5 | 25.0407 | (ASP) | 0.300 | Plastic | 1.697 | 16.3 | -2.90 |
| 12 | | 1.8633 | (ASP) | 0.498 | | | | |
| 13 | Lens 6 | 1.3178 | (ASP) | 0.357 | Plastic | 1.584 | 28.2 | -6.33 |
| 14 | | 0.8745 | (ASP) | 0.500 | | | | |
| 15 | Filter | Plano | | 0.210 | Glass | 1.517 | 64.2 | - |
| 16 | | Plano | | 0.284 | | | | |
| 17 | Image | Plano | | - | | | | |
| Note: Reference wavelength is 587.6 nm (d-line). | | | | | | | | |
| An effective radius of the stop S1 (Surface 4) is 0.795 mm. | | | | | | | | |

| TABLE 1B | | | | |
|---|---|---|---|---|
| Aspheric Coefficients | | | | |
| Surface # | 2 | 3 | 5 | 6 |
| k = | -1.88783E+00 | 1.26273E+01 | 0.00000E+00 | 3.10067E+00 |
| A4 = | 4.793362483E-02 | -2.531366029E-02 | -2.101548996E-01 | -4.118242694E-01 |
| A6 = | 5.091291820E-02 | 2.260906868E-02 | 5.314748211E-01 | 1.384059258E+00 |
| A8 = | -2.691672064E-01 | -3.836649977E-01 | -2.745648969E+00 | -4.337061445E+00 |
| A10 = | 9.328957277E-01 | 1.738214441E+00 | 8.540188306E+00 | 8.736461688E+00 |
| A12 = | -1.956029671E+00 | -4.826085475E+00 | -1.688986587E+01 | -1.107889997E+01 |
| A14 = | 2.443674111E+00 | 7.591654198E+00 | 2.028468382E+01 | 8.535933381E+00 |
| A16 = | -1.678645443E+00 | -6.407318033E+00 | -1.356126018E+01 | -3.634305570E+00 |

(continued)

| TABLE 1B | | | | |
|---|---|---|---|---|
| Aspheric Coefficients | | | | |
| Surface # | 2 | 3 | 5 | 6 |
| A18 = | 4.836046956E-01 | 2.221138292E+00 | 3.843059712E+00 | 6.577329390E-01 |
| Surface # | 7 | 8 | 9 | 10 |
| k = | 6.77239E+00 | 0.00000E+00 | 4.46639E+00 | -8.60523E-01 |
| A4 = | -3.785856300E-01 | -8.124199590E-02 | -2.977803481E-01 | 3.353712917E-01 |
| A6 = | 1.359810225E+00 | -2.495399270E-01 | 5.407058205E-01 | -7.251981506E-01 |
| A8 = | -3.847652753E+00 | 2.638183584E+00 | -1.362269204E+00 | 1.091260808E+00 |
| A10 = | 7.053188519E+00 | -1.217527002E+01 | 5.493966607E+00 | -1.392290624E-01 |
| A12 = | -8.539987926E+00 | 3.538933149E+01 | -1.631621774E+01 | -3.461540837E+00 |
| A14 = | 6.926697291E+00 | -7.034109971E+01 | 3.137826717E+01 | 8.414191903E+00 |
| A16 = | -3.860322318E+00 | 9.761928999E+01 | -4.063202536E+01 | -1.092737551E+01 |
| A18 = | 1.504892443E+00 | -9.452067356E+01 | 3.637468887E+01 | 9.063358800E+00 |
| A20 = | -3.787588631E-01 | 6.271829818E+01 | -2.258618450E+01 | -4.991902490E+00 |
| A22 = | 4.439482659E-02 | -2.736348314E+01 | 9.551457225E+00 | 1.816896735E+00 |
| A24 = | - | 7.210071479E+00 | -2.624853033E+00 | -4.199985268E-01 |
| A26 = | - | -9.443532018E-01 | 4.226996880E-01 | 5.588266510E-02 |
| A28 = | - | 3.100750458E-02 | -3.027337444E-02 | -3.260954774E-03 |
| Surface # | 11 | 12 | 13 | 14 |
| k = | 7.94736E+01 | -8.66871E-01 | -1.02782E+00 | -1.00966E+00 |
| A4 = | 2.626089258E-01 | -3.063156614E-01 | -7.254187098E-01 | -8.087747299E-01 |
| A6 = | -1.499227683E-01 | 1.059416040E+00 | 9.145777210E-01 | 1.070900218E+00 |
| A8 = | -2.886928793E-01 | -2.323134582E+00 | -1.029888565E+00 | -1.200001789E+00 |
| A10 = | 4.866348439E-01 | 3.128526297E+00 | 9.077544220E-01 | 1.005310649E+00 |
| A12 = | -2.898382521E-01 | -2.889156223E+00 | -6.467684729E-01 | -6.199138320E-01 |
| A14 = | 1.541017132E-02 | 1.925080326E+00 | 3.672251478E-01 | 2.810136879E-01 |
| A16 = | 7.917335760E-02 | -9.481701960E-01 | -1.575781314E-01 | -9.360940620E-02 |
| A18 = | -4.415912197E-02 | 3.482021895E-01 | 4.926147948E-02 | 2.288638435E-02 |
| A20 = | 5.403248665E-03 | -9.498188900E-02 | -1.101928041E-02 | -4.084991468E-03 |
| A22 = | 4.033712714E-03 | 1.893518339E-02 | 1.737806880E-03 | 5.251256563E-04 |
| A24 = | -2.124723049E-03 | -2.672312551E-03 | -1.884553414E-04 | -4.729173180E-05 |
| A26 = | 4.623773421E-04 | 2.521488447E-04 | 1.337431180E-05 | 2.829826627E-06 |
| A28 = | -5.005722057E-05 | -1.423188132E-05 | -5.594782179E-07 | -1.010214243E-07 |
| A30 = | 2.209731240E-06 | 3.625885678E-07 | 1.046486669E-08 | 1.627831129E-09 |

In Table 1A, the curvature radius, the thickness and the focal length are shown in millimeters (mm). Surface numbers 0-17 represent the surfaces sequentially arranged from the object side to the image side along the optical axis. In Table 1B, k represents the conic coefficient of the equation of the aspheric surface profiles. A4-A30 represent the aspheric coefficients ranging from the 4th order to the 30th order. The tables presented below for each embodiment are the corresponding schematic parameter and aberration curves, and the definitions of the tables are the same as Table 1A and Table 1B of the 1st embodiment. Therefore, an explanation in this regard will not be provided again.

**2nd Embodiment**

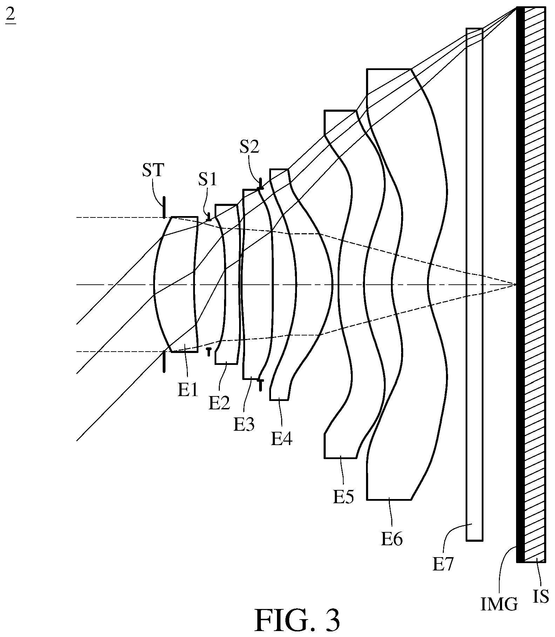

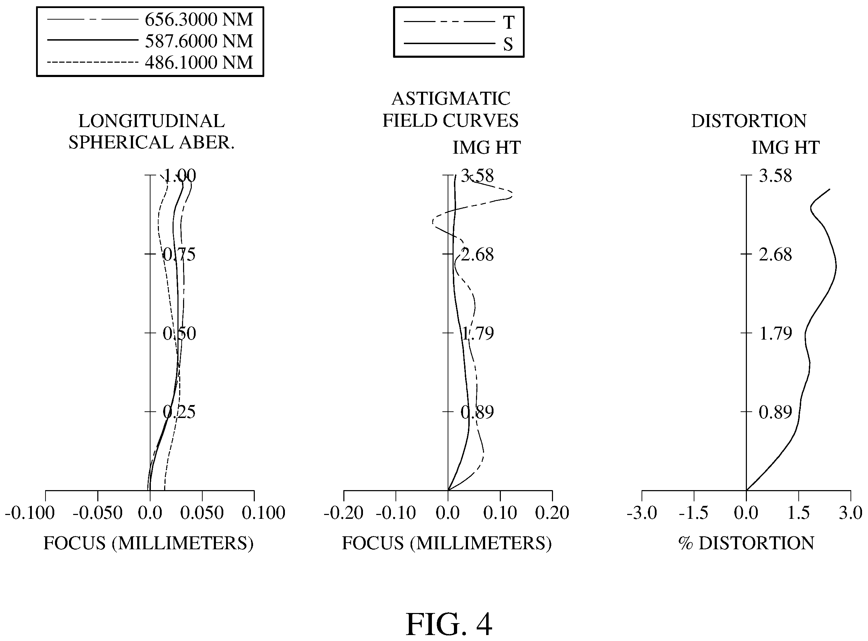

Fig. 3 is a schematic view of an image capturing unit according to the 2nd embodiment of the present disclosure. Fig. 4 shows, in order from left to right, spherical aberration curves, astigmatic field curves and a distortion curve of the image capturing unit according to the 2nd embodiment. In Fig. 3, the image capturing unit 2 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a stop S2, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point. The image-side surface of the first lens element E1 has one critical point in an off-axis region thereof.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has two inflection points. The image-side surface of the second lens element E2 has one critical point in an off-axis region thereof.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric. The object-side surface of the third lens element E3 has two inflection points. The image-side surface of the third lens element E3 has two inflection points. The object-side surface of the third lens element E3 has two critical points in an off-axis region thereof. The image-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points. The image-side surface of the fourth lens element E4 has two inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has two inflection points. The object-side surface of the fifth lens element E5 has one critical point in an off-axis region thereof. The image-side surface of the fifth lens element E5 has one critical point in an off-axis region thereof.

The sixth lens element E6 with positive refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has four inflection points. The image-side surface of the sixth lens element E6 has four inflection points. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 2nd embodiment are shown in Table 2A and the aspheric surface data are shown in Table 2B below.

| TABLE 2A | | | | | | |
|---|---|---|---|---|---|---|
| 2nd Embodiment | | | | | | |
| f = 3.40 mm, Fno = 1.96, HFOV = 45.6 deg. | | | | | | |
| Surface # | | Curvature Radius | Thickness | Material | Index | Abbe # | Focal Length |
| 0 | Object | Infinity | Infinity | | | | |

(continued)

| TABLE 2A | | | | | | | |
|---|---|---|---|---|---|---|---|
| 2nd Embodiment | | | | | | | |
| f = 3.40 mm, Fno = 1.96, HFOV = 45.6 deg. | | | | | | | |
| Surface # | | Curvature Radius | | Thickness | Material | Index | Abbe # | Focal Length |
| 1 | Ape. Stop | Plano | | -0.129 | | | | |
| 2 | Lens 1 | 1.7470 | (ASP) | 0.517 | Plastic | 1.515 | 56.4 | 5.07 |
| 3 | | 4.7491 | (ASP) | 0.192 | | | | |
| 4 | Stop | Plano | | 0.213 | | | | |
| 5 | Lens 2 | -16.7669 | (ASP) | 0.180 | Plastic | 1.614 | 25.6 | -6.61 |
| 6 | | 5.3689 | (ASP) | 0.030 | | | | |
| 7 | Lens 3 | 3.5468 | (ASP) | 0.405 | Plastic | 1.511 | 56.8 | 7.33 |
| 8 | | 64.6930 | (ASP) | -0.160 | | | | |
| 9 | Stop | Plano | | 0.463 | | | | |
| 10 | Lens 4 | -3.1986 | (ASP) | 0.470 | Plastic | 1.551 | 44.8 | 2.70 |
| 11 | | -1.0675 | (ASP) | 0.077 | | | | |
| 12 | Lens 5 | 6.3606 | (ASP) | 0.331 | Plastic | 1.697 | 16.3 | -3.17 |
| 13 | | 1.6039 | (ASP) | 0.360 | | | | |
| 14 | Lens 6 | 1.0603 | (ASP) | 0.467 | Plastic | 1.551 | 44.8 | 109.19 |
| 15 | | 0.9105 | (ASP) | 0.500 | | | | |
| 16 | Filter | Plano | | 0.210 | Glass | 1.517 | 64.2 | - |
| 17 | | Plano | | 0.445 | | | | |
| 18 | Image | Plano | | - | | | | |
| Note: Reference wavelength is 587.6 nm (d-line). | | | | | | | | |
| An effective radius of the stop S1 (Surface 4) is 0.833 mm. | | | | | | | | |
| An effective radius of the stop S2 (Surface 9) is 1.242 mm. | | | | | | | | |

| TABLE 2B | | | | |
|---|---|---|---|---|
| Aspheric Coefficients | | | | |
| Surface # | 2 | 3 | 5 | 6 |
| k = | -2.12642E+00 | 6.67178E+00 | 0.00000E+00 | 1.11071E+01 |
| A4 = | 5.082071485E-02 | -3.097886386E-02 | -1.697862850E-01 | -4.271345408E-01 |
| A6 = | 2.389173054E-02 | 8.428953581E-02 | 4.427070087E-01 | 1.770134744E+00 |
| A8 = | -1.700957540E-01 | -7.949457127E-01 | -2.766078491E+00 | -6.101121684E+00 |
| A10 = | 6.474190160E-01 | 2.920038867E+00 | 1.001868979E+01 | 1.317506743E+01 |
| A12 = | -1.602676054E+00 | -6.590436275E+00 | -2.258616481E+01 | -1.760687065E+01 |
| A14 = | 2.367710953E+00 | 8.550394451E+00 | 2.994168681E+01 | 1.407857379E+01 |
| A16 = | -1.926449900E+00 | -6.039211920E+00 | -2.167888607E+01 | -6.155502333E+00 |
| A18 = | 6.426508658E-01 | 1.792798132E+00 | 6.648206902E+00 | 1.137721645E+00 |
| Surface # | 7 | 8 | 10 | 11 |
| k = | 3.39994E+00 | 0.00000E+00 | -1.61435E+00 | -8.87334E-01 |

(continued)

| Surface # | 7 | 8 | 10 | 11 |
|---|---|---|---|---|
| A4 = | -4.836931382E-01 | -1.845877231E-01 | -3.082636518E-01 | 5.522316094E-01 |
| A6 = | 2.305245471E+00 | 2.651913133E-01 | 3.791911497E-01 | -2.352754272E+00 |
| A8 = | -8.139429477E+00 | 1.483143234E+00 | 1.618771635E+00 | 7.399384468E+00 |
| A10 = | 1.851676931E+01 | -1.058169339E+01 | -8.825338171E+00 | -1.644265438E+01 |
| A12 = | -2.868914875E+01 | 3.376902953E+01 | 2.397416280E+01 | 2.587518586E+01 |
| A14 = | 3.125549611E+01 | -7.002036955E+01 | -4.542585819E+01 | -2.873781735E+01 |
| A16 = | -2.401223717E+01 | 1.011045497E+02 | 6.258126596E+01 | 2.219730321E+01 |
| A18 = | 1.245438668E+01 | -1.026278163E+02 | -6.228272228E+01 | -1.158003368E+01 |
| A20 = | -3.875640422E+00 | 7.213616871E+01 | 4.403754163E+01 | 3.862378536E+00 |
| A22 = | 5.384231345E-01 | -3.384112699E+01 | -2.148835917E+01 | -7.218794320E-01 |
| A24 = | - | 9.865810138E+00 | 6.858728158E+00 | 4.057159221E-02 |
| A26 = | - | -1.541265306E+00 | -1.285588673E+00 | 8.609149037E-03 |
| A28 = | - | 8.698950521E-02 | 1.070982499E-01 | -1.200154881E-03 |
| Surface # | 12 | 13 | 14 | 15 |
| k = | -5.79238E+00 | -7.97688E-01 | -1.07492E+00 | -9.83446E-01 |
| A4 = | 5.403309383E-01 | -2.229611200E-01 | -6.668054980E-01 | -6.257385514E-01 |
| A6 = | -1.632535677E+00 | 6.592670997E-01 | 6.370011156E-01 | 5.746454836E-01 |
| A8 = | 3.840864670E+00 | -1.415905196E+00 | -4.789571656E-01 | -4.386988161E-01 |
| A10 = | -7.090293653E+00 | 1.777731253E+00 | 2.572717952E-01 | 2.631546537E-01 |
| A12 = | 9.467405275E+00 | -1.485260425E+00 | -1.436949121E-01 | -1.354483293E-01 |
| A14 = | -9.050045837E+00 | 8.765612620E-01 | 1.016564283E-01 | 6.179560982E-02 |
| A16 = | 6.234104214E+00 | -3.785268417E-01 | -5.949989045E-02 | -2.309154508E-02 |
| A18 = | -3.109514169E+00 | 1.226653289E-01 | 2.354324505E-02 | 6.503005122E-03 |
| A20 = | 1.120664409E+00 | -3.027015704E-02 | -6.208383769E-03 | -1.321178016E-03 |
| A22 = | -2.883276370E-01 | 5.669522482E-03 | 1.100588470E-03 | 1.889414094E-04 |
| A24 = | 5.155892145E-02 | -7.825460622E-04 | -1.301163786E-04 | -1.849320247E-05 |
| A26 = | -6.081931084E-03 | 7.464275962E-05 | 9.866974446E-06 | 1.178050234E-06 |
| A28 = | 4.252163209E-04 | -4.353343306E-06 | -4.351249409E-07 | -4.399061649E-08 |
| A30 = | -1.333898538E-05 | 1.159398636E-07 | 8.500043555E-09 | 7.306103023E-10 |

In the 2nd embodiment, the equation of the aspheric surface profiles of the aforementioned lens elements is the same as the equation of the 1st embodiment. Also, the definitions of these parameters shown in Table 2C are the same as those stated in the 1st embodiment with corresponding values for the 2nd embodiment, so an explanation in this regard will not be provided again.

Moreover, these parameters can be calculated from Table 2A and Table 2B as the following values and satisfy the following conditions:

| TABLE 2C | | | |
|---|---|---|---|
| Schematic Parameters | | | |
| f [mm] | 3.40 | CT1/CT2 | 2.87 |
| Fno | 1.96 | 10×T23/CT1 | 0.58 |

(continued)

| TABLE 2C | | | |
|---|---|---|---|
| Schematic Parameters | | | |
| HFOV [deg.] | 45.6 | T23/T12 | 0.07 |
| FOV [deg.] | 91.2 | T23/(T12+T34) | 0.04 |
| TL/f | 1.38 | (T34+T56)/CT2 | 3.68 |
| TL/ImgH | 1.31 | CT3/CT6 | 0.87 |
| BL/TL | 0.25 | T56/CT5 | 1.09 |
| f/f1 | 0.67 | CT5/CT6 | 0.71 |
| f1/f4 | 1.88 | VS4 | 44.8 |
| \|f1/f6\| | 0.05 | V4 | 44.8 |
| f45/f56 | -4.61 | V6 | 44.8 |
| (\|f3\|+\|f5\|)/(\|f1\|+\|f2\|) | 0.90 | V6/V2 | 1.75 |
| R1/R2 | 0.37 | V2+V5+V6 | 86.6 |
| R11/R10 | 0.66 | ET1/ET4 | 1.40 |
| R8/R12 | -1.17 | ET2/ET3 | 1.41 |
| \|R8\|/f+\|R12\|/f | 0.58 | SAG5R1/Y5R1 | -0.09 |
| \|R11+R12\|/f | 0.58 | \|SAG3R1/SAG2R1\| | 0.19 |
| \|R8/R2\|+\|R12/R10\| | 0.79 | Y6R1/Y5R2 | 1.09 |

### 3rd Embodiment

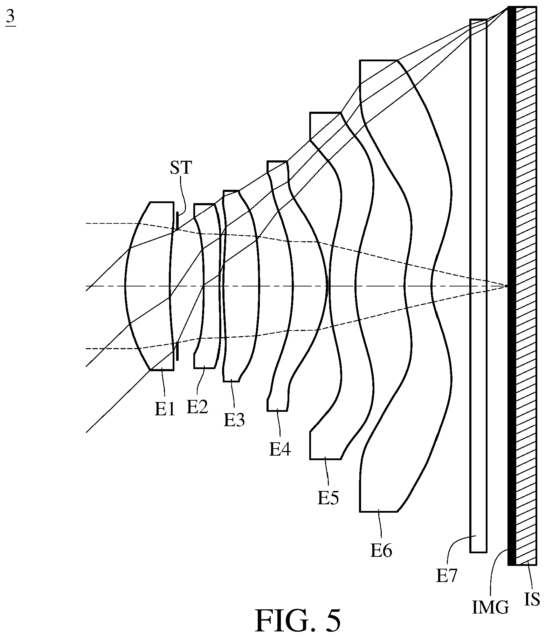

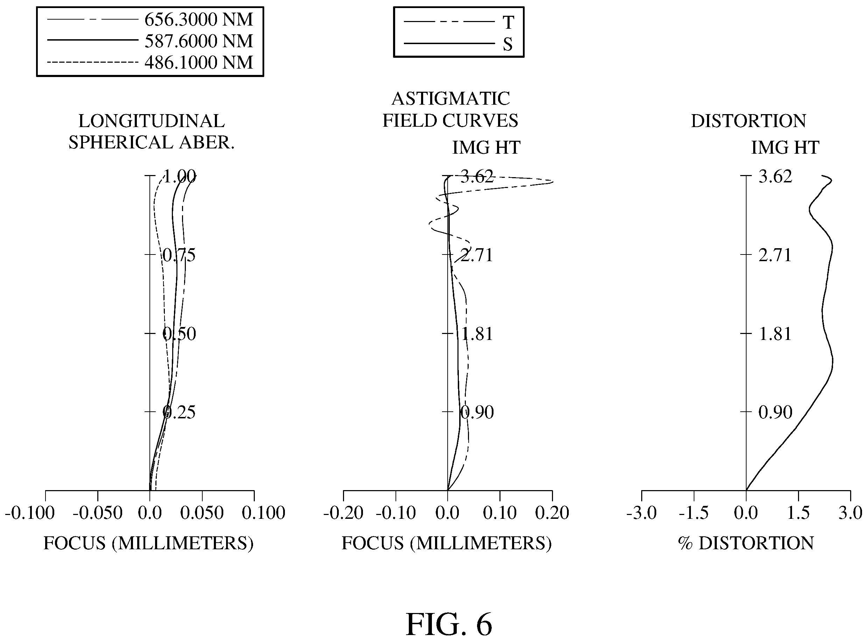

Fig. 5 is a schematic view of an image capturing unit according to the 3rd embodiment of the present disclosure. Fig. 6 shows, in order from left to right, spherical aberration curves, astigmatic field curves and a distortion curve of the image capturing unit according to the 3rd embodiment. In Fig. 5, the image capturing unit 3 includes the photography optical lens assembly (its reference numeral is omitted) of the present disclosure and an image sensor IS. The photography optical lens assembly includes, in order from an object side to an image side along an optical axis, a first lens element E1, an aperture stop ST, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of glass material and has the object-side surface and the image-side surface being both aspheric. The object-side surface of the first lens element E1 has two inflection points. The image-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has one inflection point. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has two critical points in an off-axis region thereof. The image-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has two inflection points. The image-side surface of the fourth lens element E4 has three inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has four inflection points. The image-side surface of the fifth lens element E5 has two inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has five inflection points. The image-side surface of the sixth lens element E6 has three inflection points. The object-side surface of the sixth lens element E6 has one critical point in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 3rd embodiment are shown in Table 3A and the aspheric surface data are shown in Table 3B below.

| TABLE 3A | | | | | | | | |
|---|---|---|---|---|---|---|---|---|
| 3rd Embodiment | | | | | | | | |
| f = 3.58 mm, Fno = 2.20, HFOV = 44.6 deg. | | | | | | | | |
| Surface # | | Curvature Radius | | Thickness | Material | Index | Abbe # | Focal Length |
| 0 | Object | Infinity | | Infinity | | | | |
| 1 | Lens 1 | 1.9835 | (ASP) | 0.577 | Glass | 1.523 | 58.7 | 5.36 |
| 2 | | 6.1030 | (ASP) | 0.099 | | | | |
| 3 | Ape. Stop | Plano | | 0.341 | | | | |
| 4 | Lens 2 | -11.7774 | (ASP) | 0.200 | Plastic | 1.650 | 21.8 | -5.51 |
| 5 | | 5.1719 | (ASP) | 0.050 | | | | |
| 6 | Lens 3 | 4.0074 | (ASP) | 0.464 | Plastic | 1.544 | 56.0 | 5.03 |
| 7 | | -8.2709 | (ASP) | 0.436 | | | | |
| 8 | Lens 4 | -3.4591 | (ASP) | 0.443 | Plastic | 1.587 | 28.3 | 2.73 |
| 9 | | -1.1478 | (ASP) | 0.030 | | | | |
| 10 | Lens 5 | 5.7026 | (ASP) | 0.335 | Plastic | 1.697 | 16.3 | -3.97 |
| 11 | | 1.8199 | (ASP) | 0.637 | | | | |
| 12 | Lens 6 | 1.2468 | (ASP) | 0.348 | Plastic | 1.566 | 37.4 | -7.01 |
| 13 | | 0.8529 | (ASP) | 0.500 | | | | |
| 14 | Filter | Plano | | 0.210 | Glass | 1.517 | 64.2 | - |
| 15 | | Plano | | 0.283 | | | | |
| 16 | Image | Plano | | - | | | | |
| Note: Reference wavelength is 587.6 nm (d-line). | | | | | | | | |

| TABLE 3B | | | | |
|---|---|---|---|---|
| Aspheric Coefficients | | | | |
| Surface # | 1 | 2 | 4 | 5 |
| k = | -2.44350E+00 | 2.10372E+01 | 0.00000E+00 | 7.87757E+00 |
| A4 = | 3.640571720E-02 | -1.850364936E-02 | -1.979247386E-01 | -3.956795239E-01 |
| A6 = | 5.695350534E-02 | 2.061392323E-03 | 6.478964528E-01 | 1.388460540E+00 |
| A8 = | -2.839587135E-01 | -7.522266573E-02 | -3.068715897E+00 | -4.331267673E+00 |
| A10 = | 7.995326773E-01 | 2.419531152E-01 | 9.241620664E+00 | 9.060965169E+00 |
| A12 = | -1.307189904E+00 | -6.900799017E-01 | -1.744139152E+01 | -1.242002699E+01 |
| A14 = | 1.233373934E+00 | 1.220800601E+00 | 1.932248721E+01 | 1.044541133E+01 |
| A16 = | -6.274645994E-01 | -1.265779570E+00 | -1.129834750E+01 | -4.812688666E+00 |
| A18 = | 1.320317891E-01 | 5.712772572E-01 | 2.553324111E+00 | 9.208802847E-01 |
| Surface # | 6 | 7 | 8 | 9 |
| k = | 3.86841E+00 | 0.00000E+00 | -4.36502E+00 | -8.86295E-01 |
| A4 = | -3.357819482E-01 | -8.108618780E-02 | -2.136741063E-01 | 5.814939835E-01 |
| A6 = | 1.084677306E+00 | -1.279227000E-01 | 6.592989128E-01 | -1.717550241E+00 |
| A8 = | -2.659262639E+00 | 1.504637565E+00 | -2.396530078E+00 | 3.392829012E+00 |
| A10 = | 3.726252236E+00 | -6.454436853E+00 | 7.222641778E+00 | -4.867123741E+00 |
| A12 = | -2.143329303E+00 | 1.671599631E+01 | -1.599907024E+01 | 4.828675295E+00 |
| A14 = | -1.894369648E+00 | -2.761521817E+01 | 2.586794172E+01 | -2.522258415E+00 |
| A16 = | 4.271471835E+00 | 2.674296448E+01 | -3.051646924E+01 | -5.781750681E-01 |
| A18 = | -3.041215032E+00 | -8.796629470E+00 | 2.605769636E+01 | 2.119456188E+00 |
| A20 = | 9.839804294E-01 | -1.206982159E+01 | -1.582439711E+01 | -1.721033869E+00 |
| A22 = | -1.208022964E-01 | 1.840003686E+01 | 6.631272414E+00 | 7.594296788E-01 |
| A24 = | - | -1.137743016E+01 | -1.817587017E+00 | -1.964629337E-01 |
| A26 = | - | 3.541805262E+00 | 2.927641845E-01 | 2.804411027E-02 |
| A28 = | - | -4.543184269E-01 | -2.098834560E-02 | -1.711550611E-03 |
| Surface # | 10 | 11 | 12 | 13 |
| k = | -2.78482E+01 | -7.62168E-01 | -1.04874E+00 | -1.01146E+00 |
| A4 = | 4.381349159E-01 | -2.957482975E-01 | -6.741019825E-01 | -7.519733704E-01 |
| A6 = | -1.082074730E+00 | 1.151073113E+00 | 7.001065473E-01 | 8.675301531E-01 |
| A8 = | 2.210342481E+00 | -2.822804189E+00 | -7.013450030E-01 | -8.648034345E-01 |
| A10 = | -4.425937800E+00 | 4.146936431E+00 | 6.432108277E-01 | 6.693426479E-01 |
| A12 = | 7.087719687E+00 | -4.081892053E+00 | -5.230043729E-01 | -3.911880633E-01 |
| A14 = | -8.276661183E+00 | 2.836936610E+00 | 3.346144380E-01 | 1.699785726E-01 |
| A16 = | 6.949646500E+00 | -1.428663658E+00 | -1.544255374E-01 | -5.440995922E-02 |
| A18 = | -4.210382386E+00 | 5.271107469E-01 | 5.008149933E-02 | 1.276284674E-02 |
| A20 = | 1.840319567E+00 | -1.424177394E-01 | -1.137073184E-02 | -2.178601259E-03 |
| A22 = | -5.743621691E-01 | 2.783072740E-02 | 1.797011928E-03 | 2.667862003E-04 |
| A24 = | 1.247164159E-01 | -3.824398549E-03 | -1.937812625E-04 | -2.278923256E-05 |
| A26 = | -1.788300325E-02 | 3.501255728E-04 | 1.360789256E-05 | 1.287569511E-06 |

(continued)

| Surface # | 10 | 11 | 12 | 13 |
|---|---|---|---|---|
| A28 = | 1.520821387E-03 | -1.915428018E-05 | -5.614304224E-07 | -4.319603480E-08 |
| A30 = | -5.803824390E-05 | 4.733485249E-07 | 1.033384017E-08 | 6.510010717E-10 |

In the 3rd embodiment, the equation of the aspheric surface profiles of the aforementioned lens elements is the same as the equation of the 1st embodiment. Also, the definitions of these parameters shown in Table 3C are the same as those stated in the 1st embodiment with corresponding values for the 3rd embodiment, so an explanation in this regard will not be provided again.

Moreover, these parameters can be calculated from Table 3A and Table 3B as the following values and satisfy the following conditions:

| TABLE 3C | | | |
|---|---|---|---|
| Schematic Parameters | | | |
| f [mm] | 3.58 | CT1/CT2 | 2.89 |
| Fno | 2.20 | 10×T23/CT1 | 0.87 |
| HFOV [deg.] | 44.6 | T23/T12 | 0.11 |
| FOV [deg.] | 89.2 | T23/(T12+T34) | 0.06 |
| TL/f | 1.39 | (T34+T56)/CT2 | 5.37 |
| TL/ImgH | 1.37 | CT3/CT6 | 1.33 |
| BL/TL | 0.20 | T56/CT5 | 1.90 |
| f/f1 | 0.67 | CT5/CT6 | 0.96 |
| f1/f4 | 1.96 | VS4 | 37.4 |
| \|f1/f6\| | 0.76 | V4 | 28.3 |
| f45/f56 | -3.39 | V6 | 37.4 |
| (\|f3\|+\|f5\|)/(\|f1\|+\|f2\|) | 0.83 | V6/V2 | 1.72 |
| R1/R2 | 0.33 | V2+V5+V6 | 75.5 |
| R11/R10 | 0.69 | ET1/ET4 | 1.21 |
| R8/R12 | -1.35 | ET2/ET3 | 1.32 |
| \|R8\|/f+\|R12\|/f | 0.56 | SAG5R1/Y5R1 | -0.13 |
| \|R11+R12\|/f | 0.59 | \|SAG3R1/SAG2R1\| | 0.04 |
| \|R8/R2\|+\|R12/R10\| | 0.66 | Y6R1/Y5R2 | 1.16 |

## 4th Embodiment

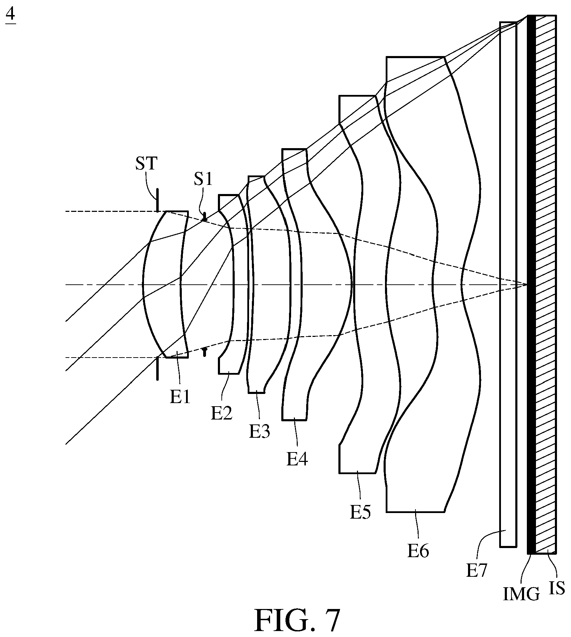

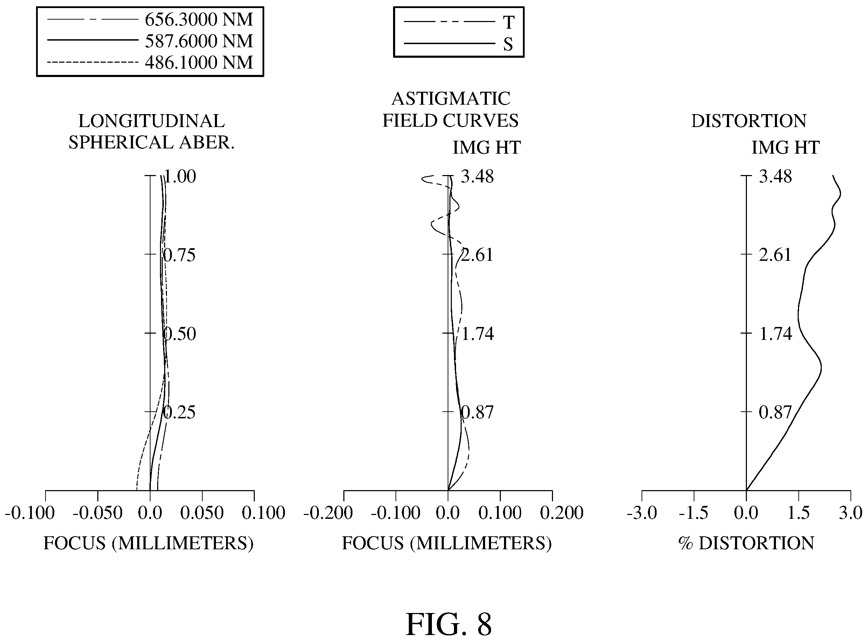

Fig. 7 is a schematic view of an image capturing unit according to the 4th embodiment of the present disclosure. Fig. 8 shows, in order from left to right, spherical aberration curves, astigmatic field curves and a distortion curve of the image capturing unit according to the 4th embodiment. In Fig. 7, the image capturing unit 4 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with positive refractive power has an object-side surface being concave in a paraxial region thereof and an image-side surface being convex in a paraxial region thereof. The second lens element E2 is made of plastic material and has the object-side surface and the image-side surface being both aspheric. The image-side surface of the second lens element E2 has three inflection points.

The third lens element E3 with negative refractive power has an object-side surface being concave in a paraxial region thereof and an image-side surface being convex in a paraxial region thereof. The third lens element E3 is made of plastic material and has the object-side surface and the image-side surface being both aspheric. The object-side surface of the third lens element E3 has three inflection points. The image-side surface of the third lens element E3 has one inflection point. The object-side surface of the third lens element E3 has one critical point in an off-axis region thereof. The image-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points. The image-side surface of the fourth lens element E4 has two inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has three inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has two inflection points. The image-side surface of the sixth lens element E6 has four inflection points. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 4th embodiment are shown in Table 4A and the aspheric surface data are shown in Table 4B below.

| TABLE 4A | | | | | | | |
|---|---|---|---|---|---|---|---|
| 4th Embodiment | | | | | | | |
| f = 3.59 mm, Fno = 1.90, HFOV = 43.3 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.187 | | | | |
| 2 | Lens 1 | 1.7160 | (ASP) | 0.488 | Plastic | 1.544 | 56.0 | 4.88 |
| 3 | | 4.3703 | (ASP) | 0.310 | | | | |
| 4 | Stop | Plano | | 0.377 | | | | |
| 5 | Lens 2 | -12.9442 | (ASP) | 0.192 | Plastic | 1.697 | 16.3 | 14.67 |
| 6 | | -5.7481 | (ASP) | 0.065 | | | | |
| 7 | Lens 3 | -3.0789 | (ASP) | 0.475 | Plastic | 1.566 | 37.4 | -6.76 |
| 8 | | -16.6535 | (ASP) | 0.144 | | | | |
| 9 | Lens 4 | -17.8687 | (ASP) | 0.650 | Plastic | 1.534 | 56.0 | 2.23 |
| 10 | | -1.1291 | (ASP) | 0.030 | | | | |
| 11 | Lens 5 | 11.6074 | (ASP) | 0.413 | Plastic | 1.697 | 16.3 | -3.88 |

(continued)

| TABLE 4A | | | | | | | |
|---|---|---|---|---|---|---|---|
| 4th Embodiment | | | | | | | |
| f = 3.59 mm, Fno = 1.90, HFOV = 43.3 deg. | | | | | | | |
| Surface # | | Curvature Radius | | Thickness | Material | Index | Abbe # | Focal Length |
| 12 | | 2.1611 | (ASP) | 0.604 | | | | |
| 13 | Lens 6 | 1.4625 | (ASP) | 0.376 | Plastic | 1.587 | 28.3 | -5.34 |
| 14 | | 0.9027 | (ASP) | 0.500 | | | | |
| 15 | Filter | Plano | | 0.210 | Glass | 1.517 | 64.2 | - |
| 16 | | Plano | | 0.150 | | | | |
| 17 | Image | Plano | | - | | | | |
| Note: Reference wavelength is 587.6 nm (d-line). | | | | | | | |
| An effective radius of the stop S1 (Surface 4) is 0.838 mm. | | | | | | | |

| TABLE 4B | | | | |
|---|---|---|---|---|
| Aspheric Coefficients | | | | |
| Surface # | 2 | 3 | 5 | 6 |
| k = | -1.51897E+00 | 1.29126E+01 | 0.00000E+00 | -8.93983E+01 |
| A4 = | 4.724758569E-02 | -2.061659751E-03 | 8.209419127E-02 | 6.279566687E-01 |
| A6 = | 3.982589746E-02 | -6.310042026E-02 | -8.706082733E-01 | -2.530714937E+00 |
| A8 = | -1.348102480E-01 | 3.366604921E-01 | 1.561419620E+00 | 4.934559075E+00 |
| A10 = | 3.599366215E-01 | -1.214869120E+00 | -9.701456112E-01 | -5.706274317E+00 |
| A12 = | -5.329141685E-01 | 2.542844638E+00 | -1.828268448E+00 | 3.734100906E+00 |
| A14 = | 4.405636685E-01 | -3.142543987E+00 | 3.914448702E+00 | -1.144270512E+00 |
| A16 = | -1.802537223E-01 | 2.089396651E+00 | -2.800807278E+00 | 2.816154770E-02 |
| A18 = | 2.408440948E-02 | -5.844311571E-01 | 6.971164699E-01 | 4.432141629E-02 |
| Surface # | 7 | 8 | 9 | 10 |
| k = | -9.02271E+01 | 0.00000E+00 | 5.15950E+01 | -8.76281E-01 |
| A4 = | 4.434244592E-01 | 1.369870329E-01 | -4.549551727E-02 | 3.086739055E-01 |
| A6 = | -1.429006856E+00 | -1.577649617E+00 | -9.542672013E-01 | -6.246577690E-01 |
| A8 = | 1.470992468E+00 | 6.674342892E+00 | 4.393046271E+00 | 1.466949562E+00 |
| A10 = | 1.317353107E+00 | -2.074184271E+01 | -1.214392874E+01 | -3.420597639E+00 |
| A12 = | -5.589117478E+00 | 4.585928949E+01 | 2.189342152E+01 | 5.829821083E+00 |
| A14 = | 7.214895742E+00 | -7.260423635E+01 | -2.661748501E+01 | -6.751028828E+00 |
| A16 = | -5.068614882E+00 | 8.361436104E+01 | 2.256104499E+01 | 5.384409958E+00 |
| A18 = | 2.071749703E+00 | -7.038313932E+01 | -1.357993764E+01 | -2.994480888E+00 |
| A20 = | -4.648281026E-01 | 4.287265638E+01 | 5.807848126E+00 | 1.159467308E+00 |
| A22 = | 4.446832037E-02 | -1.838434712E+01 | -1.730374089E+00 | -3.066024236E-01 |
| A24 = | - | 5.255933144E+00 | 3.420838598E-01 | 5.283987377E-02 |
| A26 = | - | -8.975767884E-01 | -4.038039546E-02 | -5.354315554E-03 |
| A28 = | - | 6.910286379E-02 | 2.155468455E-03 | 2.422528091E-04 |

(continued)

| Surface # | 11 | 12 | 13 | 14 |
|---|---|---|---|---|
| k = | 2.06540E+01 | -4.75136E-01 | -9.63178E-01 | -9.94573E-01 |
| A4 = | 3.260848969E-02 | -3.700666203E-01 | -6.508064686E-01 | -7.457456131E-01 |
| A6 = | 4.975938329E-01 | 1.171792969E+00 | 5.458469603E-01 | 8.814053976E-01 |
| A8 = | -1.492691669E+00 | -2.275773330E+00 | -1.190745186E-01 | -8.559324134E-01 |
| A10 = | 2.090149472E+00 | 2.740811220E+00 | -3.909160792E-01 | 6.370923537E-01 |
| A12 = | -1.794889199E+00 | -2.239278773E+00 | 5.415104982E-01 | -3.649300514E-01 |
| A14 = | 1.005438746E+00 | 1.295090057E+00 | -3.683454724E-01 | 1.593327375E-01 |
| A16 = | -3.666654613E-01 | -5.415755688E-01 | 1.593596211E-01 | -5.210525671E-02 |
| A18 = | 8.139649438E-02 | 1.652491966E-01 | -4.729447921E-02 | 1.257798494E-02 |
| A20 = | -8.181856898E-03 | -3.676306952E-02 | 9.889381506E-03 | -2.212706187E-03 |
| A22 = | -6.253414594E-04 | 5.893546628E-03 | -1.459396872E-03 | 2.788794665E-04 |
| A24 = | 2.741629092E-04 | -6.626478382E-04 | 1.490111260E-04 | -2.446450521E-05 |
| A26 = | -2.614364435E-05 | 4.956035927E-05 | -1.002723254E-05 | 1.416483213E-06 |
| A28 = | 2.586223058E-07 | -2.213279158E-06 | 4.003037589E-07 | -4.861883866E-08 |
| A30 = | 6.292048333E-08 | 4.463456710E-08 | -7.184597724E-09 | 7.488579966E-10 |

In the 4th embodiment, the equation of the aspheric surface profiles of the aforementioned lens elements is the same as the equation of the 1st embodiment. Also, the definitions of these parameters shown in Table 4C are the same as those stated in the 1st embodiment with corresponding values for the 4th embodiment, so an explanation in this regard will not be provided again.

Moreover, these parameters can be calculated from Table 4A and Table 4B as the following values and satisfy the following conditions:

| TABLE 4C | | | |
|---|---|---|---|
| Schematic Parameters | | | |
| f [mm] | 3.59 | CT1/CT2 | 2.54 |
| Fno | 1.90 | 10×T23/CT1 | 1.33 |
| HFOV [deg.] | 43.3 | T23/T12 | 0.09 |
| FOV [deg.] | 86.6 | T23/(T12+T34) | 0.08 |
| TL/f | 1.39 | (T34+T56)/CT2 | 3.90 |
| TL/ImgH | 1.43 | CT3/CT6 | 1.26 |
| BL/TL | 0.17 | T56/CT5 | 1.46 |
| f/f1 | 0.74 | CT5/CT6 | 1.10 |
| f1/f4 | 2.19 | VS4 | 37.4 |
| |f1/f6| | 0.91 | V4 | 56.0 |
| f45/f56 | -2.25 | V6 | 28.3 |
| (|f3|+|f5|)/(|f1|+|f2|) | 0.54 | V6/V2 | 1.74 |
| R1/R2 | 0.39 | V2+V5+V6 | 60.8 |
| R11/R10 | 0.68 | ET1/ET4 | 0.92 |
| R8/R12 | -1.25 | ET2/ET3 | 1.24 |
| |R8|/f+|R12|/f | 0.57 | SAG5R1/Y5R1 | -0.09 |

(continued)

| TABLE 4C | | | |
|---|---|---|---|
| Schematic Parameters | | | |
| |R11+R12|/f | 0.66 | |SAG3R1/SAG2R1| | 0.33 |
| |R8/R2|+|R12/R10| | 0.68 | Y6R1/Y5R2 | 1.07 |

## 5th Embodiment

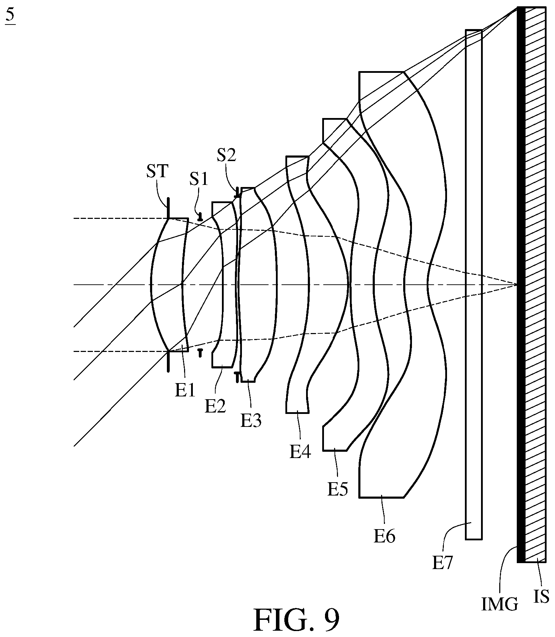

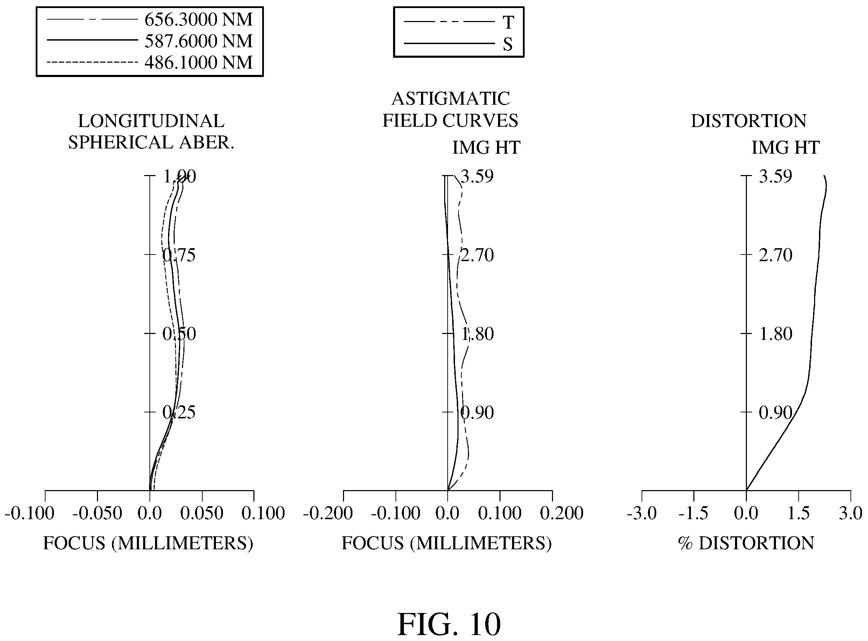

Fig. 9 is a schematic view of an image capturing unit according to the 5th embodiment of the present disclosure. Fig. 10 shows, in order from left to right, spherical aberration curves, astigmatic field curves and a distortion curve of the image capturing unit according to the 5th embodiment. In Fig. 9, the image capturing unit 5 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a stop S2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has one inflection point. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has two critical points in an off-axis region thereof. The image-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has two inflection points. The image-side surface of the fourth lens element E4 has two inflection points. The image-side surface of the fourth lens element E4 has one critical point in an off-axis region thereof.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has two inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has two inflection points. The image-side surface of the sixth lens element E6 has one inflection point. The object-side surface of the sixth lens element E6 has one critical point in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 5th embodiment are shown in Table 5A and the aspheric surface data are shown in Table 5B below.

| TABLE 5A | | | | | | | | |
|---|---|---|---|---|---|---|---|---|
| 5th Embodiment | | | | | | | | |
| f = 3.48 mm, Fno = 2.02, HFOV = 45.2 deg. | | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.223 | | | | |
| 2 | Lens 1 | 1.7698 | (ASP) | 0.406 | Plastic | 1.545 | 56.1 | 5.22 |
| 3 | | 4.3031 | (ASP) | 0.231 | | | | |
| 4 | Stop | Plano | | 0.298 | | | | |
| 5 | Lens 2 | -47.1622 | (ASP) | 0.167 | Plastic | 1.686 | 18.4 | -5.25 |
| 6 | | 3.9039 | (ASP) | 0.020 | | | | |
| 7 | Stop | Plano | | 0.015 | | | | |
| 8 | Lens 3 | 4.1287 | (ASP) | 0.497 | Plastic | 1.561 | 40.3 | 5.06 |
| 9 | | -8.6905 | (ASP) | 0.415 | | | | |
| 10 | Lens 4 | -4.0744 | (ASP) | 0.513 | Plastic | 1.581 | 32.9 | 2.35 |
| 11 | | -1.0702 | (ASP) | 0.030 | | | | |
| 12 | Lens 5 | 7.2870 | (ASP) | 0.300 | Plastic | 1.686 | 18.4 | -4.14 |
| 13 | | 2.0089 | (ASP) | 0.395 | | | | |
| 14 | Lens 6 | 1.2891 | (ASP) | 0.302 | Plastic | 1.566 | 37.4 | -5.14 |
| 15 | | 0.8179 | (ASP) | 0.500 | | | | |
| 16 | Filter | Plano | | 0.210 | Glass | 1.517 | 64.2 | - |
| 17 | | Plano | | 0.462 | | | | |
| 18 | Image | Plano | | - | | | | |
| Note: Reference wavelength is 587.6 nm (d-line). | | | | | | | | |
| An effective radius of the stop S1 (Surface 4) is 0.840 mm. | | | | | | | | |
| An effective radius of the stop S2 (Surface 7) is 1.140 mm. | | | | | | | | |

| TABLE 5B | | | | |
|---|---|---|---|---|
| Aspheric Coefficients | | | | |
| Surface # | 2 | 3 | 5 | 6 |
| k = | -2.00428E+00 | 1.38886E+01 | 0.00000E+00 | 6.27502E-02 |
| A4 = | 5.254288470E-02 | -1.822795882E-02 | -2.611021641E-01 | -4.668842850E-01 |
| A6 = | -5.916512237E-02 | 7.174572521E-02 | 1.060419808E+00 | 2.006651953E+00 |
| A8 = | 2.276318620E+00 | -2.761547742E+00 | -9.467498724E+00 | -8.251399760E+00 |
| A10 = | -2.753745955E+01 | 3.903607245E+01 | 6.374811562E+01 | 2.386401230E+01 |
| A12 = | 1.850514977E+02 | -3.292007271E+02 | -3.127242867E+02 | -4.480107891E+01 |
| A14 = | -7.729384245E+02 | 1.800214708E+03 | 1.097465016E+03 | 4.220975000E+01 |
| A16 = | 2.080021996E+03 | -6.665608456E+03 | -2.759483902E+03 | 2.292539088E+01 |
| A18 = | -3.569542173E+03 | 1.703702248E+04 | 4.968227867E+03 | -1.379708947E+02 |
| A20 = | 3.602623308E+03 | -3.011044181E+04 | -6.344425939E+03 | 2.159497572E+02 |
| A22 = | -1.460185523E+03 | 3.615813179E+04 | 5.604465132E+03 | -1.901569246E+02 |

(continued)

| TABLE 5B | | | | |
|---|---|---|---|---|
| Aspheric Coefficients | | | | |
| Surface # | 2 | 3 | 5 | 6 |
| A24 = | -8.433549108E+02 | -2.818120690E+04 | -3.251442328E+03 | 1.006126298E+02 |
| A26 = | 1.190078585E+03 | 1.286683278E+04 | 1.111324078E+03 | -2.994906482E+01 |
| A28 = | -3.873042919E+02 | -2.614078089E+03 | -1.687384964E+02 | 3.871859649E+00 |
| Surface # | 8 | 9 | 10 | 11 |
| k = | 6.45755E+00 | 0.00000E+00 | -6.16670E+00 | -9.34194E-01 |
| A4 = | -3.956579637E-01 | -9.433558311E-02 | -1.984221205E-01 | 2.975202542E-01 |
| A6 = | 1.820322331E+00 | -1.704466388E-02 | 2.706679349E-01 | -7.574984134E-01 |
| A8 = | -7.075055600E+00 | 9.449769701E-01 | 1.086827474E+00 | 2.714986331E+00 |
| A10 = | 1.929079592E+01 | -5.558754744E+00 | -6.586130891E+00 | -7.674986449E+00 |
| A12 = | -3.542911647E+01 | 1.828905607E+01 | 1.766544959E+01 | 1.484009378E+01 |
| A14 = | 3.900385103E+01 | -4.086105933E+01 | -3.093030317E+01 | -2.005904777E+01 |
| A16 = | -1.299198998E+01 | 6.521696826E+01 | 3.857699533E+01 | 1.955096171E+01 |
| A18 = | -3.127087810E+01 | -7.531750693E+01 | -3.517012937E+01 | -1.398631572E+01 |
| A20 = | 5.695605206E+01 | 6.244394554E+01 | 2.347912944E+01 | 7.377949373E+00 |
| A22 = | -4.695908854E+01 | -3.617221572E+01 | -1.131778976E+01 | -2.841678151E+00 |
| A24 = | 2.192276647E+01 | 1.386015468E+01 | 3.821562040E+00 | 7.768378422E-01 |
| A26 = | -5.591202730E+00 | -3.144029654E+00 | -8.550769487E-01 | -1.425207007E-01 |
| A28 = | 6.076680068E-01 | 3.182432636E-01 | 1.136438841E-01 | 1.569653777E-02 |
| A30 = | - | - | -6.782446622E-03 | -7.824973982E-04 |
| Surface # | 12 | 13 | 14 | 15 |
| k = | 0.00000E+00 | -7.92399E-01 | -1.04698E+00 | -1.01974E+00 |
| A4 = | 2.183024287E-01 | -9.013816971E-02 | -5.636030043E-01 | -7.677858476E-01 |
| A6 = | -1.363070346E-01 | 3.077986791E-01 | 3.356625304E-01 | 7.929908993E-01 |
| A8 = | -4.245681843E-01 | -8.442446631E-01 | -4.939818792E-02 | -6.969238004E-01 |
| A10 = | 9.279518678E-01 | 1.118790611E+00 | -1.558376842E-01 | 4.725628956E-01 |
| A12 = | -1.058808430E+00 | -9.504411666E-01 | 1.572320975E-01 | -2.413404012E-01 |
| A14 = | 8.050379556E-01 | 5.732595711E-01 | -6.616390277E-02 | 9.346465363E-02 |
| A16 = | -3.758591792E-01 | -2.566477272E-01 | 1.041453124E-02 | -2.760410911E-02 |
| A18 = | 5.264805463E-02 | 8.688352679E-02 | 2.240598756E-03 | 6.200675417E-03 |
| A20 = | 5.729138711E-02 | -2.225319129E-02 | -1.527708150E-03 | -1.047636296E-03 |
| A22 = | -4.479510894E-02 | 4.242830626E-03 | 3.703061665E-04 | 1.304569300E-04 |
| A24 = | 1.599349701E-02 | -5.817616455E-04 | -5.132243702E-05 | -1.157749936E-05 |
| A26 = | -3.250358553E-03 | 5.401418131E-05 | 4.278745046E-06 | 6.912127198E-07 |
| A28 = | 3.626265008E-04 | -3.033219474E-06 | -2.006618024E-07 | -2.483971424E-08 |
| A30 = | -1.731383301E-05 | 7.777107016E-08 | 4.087551119E-09 | 4.054581922E-10 |

In the 5th embodiment, the equation of the aspheric surface profiles of the aforementioned lens elements is the same as the equation of the 1st embodiment. Also, the definitions of these parameters shown in Table 5C are the same as those stated in the 1st embodiment with corresponding values for the 5th embodiment, so an explanation in this regard will not be provided again.

Moreover, these parameters can be calculated from Table 5A and Table 5B as the following values and satisfy the following conditions:

| TABLE 5C | | | |
|---|---|---|---|
| Schematic Parameters | | | |
| f [mm] | 3.48 | CT1/CT2 | 2.43 |
| Fno | 2.02 | 10×T23/CT1 | 0.86 |
| HFOV [deg.] | 45.2 | T23/T12 | 0.07 |
| FOV [deg.] | 90.4 | T23/(T12+T34) | 0.04 |
| TL/f | 1.37 | (T34+T56)/CT2 | 4.85 |
| TL/ImgH | 1.32 | CT3/CT6 | 1.65 |
| BL/TL | 0.25 | T56/CT5 | 1.32 |
| f/f1 | 0.67 | CT5/CT6 | 0.99 |
| f1/f4 | 2.22 | VS4 | 37.4 |
| \|f1/f6\| | 1.01 | V4 | 32.9 |
| f45/f56 | -2.40 | V6 | 37.4 |
| (\|f3\|+\|f5\|)/(\|f1\|+\|f2\|) | 0.88 | V6/V2 | 2.03 |
| R1/R2 | 0.41 | V2+V5+V6 | 74.2 |
| R11/R10 | 0.64 | ET1/ET4 | 0.86 |
| R8/R12 | -1.31 | ET2/ET3 | 1.61 |
| \|R8\|/f+\|R12\|/f | 0.54 | SAG5R1/Y5R1 | -0.20 |
| \|R11+R12\|/f | 0.61 | \|SAG3R1/SAG2R1\| | 0.24 |
| \|R8/R2\|+\|R12/R10\| | 0.66 | Y6R1/Y5R2 | 1.11 |

## 6th Embodiment

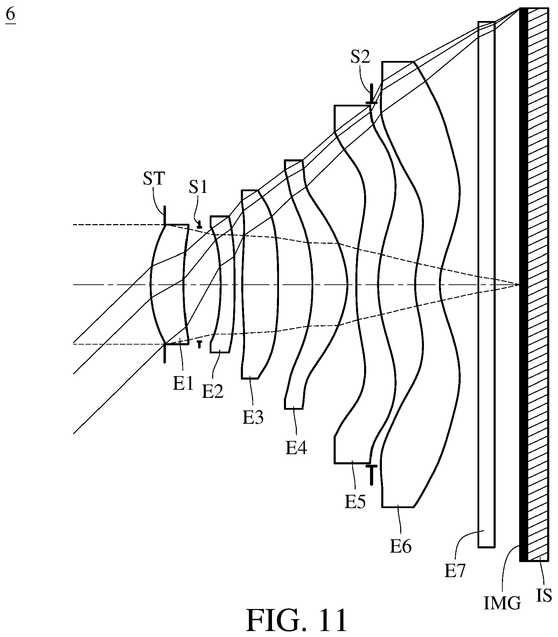

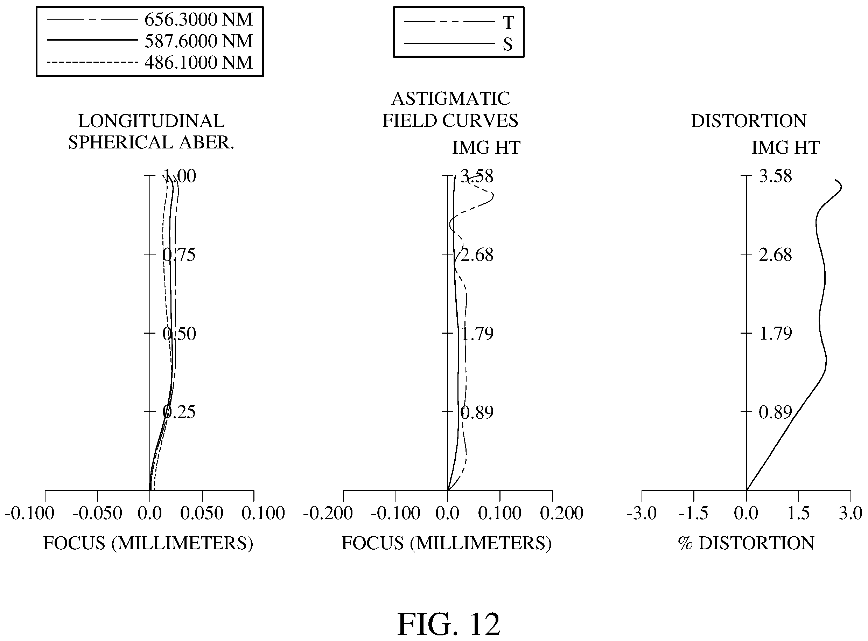

Fig. 11 is a schematic view of an image capturing unit according to the 6th embodiment of the present disclosure. Fig. 12 shows, in order from left to right, spherical aberration curves, astigmatic field curves and a distortion curve of the image capturing unit according to the 6th embodiment. In Fig. 11, the image capturing unit 6 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a stop S2, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with negative refractive power has an object-side surface being concave in a paraxial region thereof and an image-side surface being convex in a paraxial region thereof. The second lens element E2 is made of plastic material and has the object-side surface and the image-side surface being both aspheric.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points. The image-side surface of the fourth lens element E4 has two inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has three inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has five inflection points. The image-side surface of the sixth lens element E6 has one inflection point. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 6th embodiment are shown in Table 6A and the aspheric surface data are shown in Table 6B below.

| TABLE 6A | | | | | | | |
|---|---|---|---|---|---|---|---|
| 6th Embodiment | | | | | | | |
| f = 3.57 mm, Fno = 2.31, HFOV = 44.3 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.184 | | | | |
| 2 | Lens 1 | 1.6634 | (ASP) | 0.426 | Plastic | 1.544 | 56.0 | 4.81 |
| 3 | | 4.1546 | (ASP) | 0.203 | | | | |
| 4 | Stop | Plano | | 0.275 | | | | |
| 5 | Lens 2 | -3.6124 | (ASP) | 0.180 | Plastic | 1.660 | 20.4 | -5.65 |
| 6 | | -117.6471 | (ASP) | 0.100 | | | | |
| 7 | Lens 3 | 4.2558 | (ASP) | 0.466 | Plastic | 1.562 | 44.6 | 5.56 |
| 8 | | -11.2831 | (ASP) | 0.444 | | | | |
| 9 | Lens 4 | -3.1080 | (ASP) | 0.454 | Plastic | 1.566 | 37.4 | 2.51 |
| 10 | | -1.0275 | (ASP) | 0.116 | | | | |
| 11 | Lens 5 | 8.6612 | (ASP) | 0.278 | Plastic | 1.669 | 19.5 | -3.37 |
| 12 | | 1.7647 | (ASP) | -0.083 | | | | |
| 13 | Stop | Plano | | 0.563 | | | | |
| 14 | Lens 6 | 1.2047 | (ASP) | 0.320 | Plastic | 1.566 | 37.4 | -7.27 |
| 15 | | 0.8425 | (ASP) | 0.500 | | | | |
| 16 | Filter | Plano | | 0.210 | Glass | 1.517 | 64.2 | - |
| 17 | | Plano | | 0.332 | | | | |
| 18 | Image | Plano | | - | | | | |
| Note: Reference wavelength is 587.6 nm (d-line). | | | | | | | | |

(continued)

| TABLE 6A | | | | | | | |
|---|---|---|---|---|---|---|---|
| 6th Embodiment | | | | | | | |
| f = 3.57 mm, Fno = 2.31, HFOV = 44.3 deg. | | | | | | | |
| Surface # | | Curvature Radius | Thickness | Material | Index | Abbe # | Focal Length |
| An effective radius of the stop S1 (Surface 4) is 0.738 mm. | | | | | | | |
| An effective radius of the stop S2 (Surface 13) is 2.349 mm. | | | | | | | |

| TABLE 6B | | | | |
|---|---|---|---|---|
| Aspheric Coefficients | | | | |
| Surface # | 2 | 3 | 5 | 6 |
| k = | -1.32833E+00 | 1.24947E+01 | 0.00000E+00 | -9.90000E+01 |
| A4 = | 5.117884505E-02 | -1.033881504E-02 | -2.242126163E-01 | -3.592989457E-01 |
| A6 = | 5.792938902E-02 | -7.902707688E-02 | 8.150809007E-01 | 1.316462768E+00 |
| A8 = | -2.992424050E-01 | 4.979654716E-01 | -3.671183759E+00 | -3.958872119E+00 |
| A10 = | 1.273880106E+00 | -2.604049956E+00 | 9.949761756E+00 | 7.956266279E+00 |
| A12 = | -3.351849499E+00 | 7.338228523E+00 | -1.736518006E+01 | -1.060848165E+01 |
| A14 = | 5.374705977E+00 | -1.224287401E+01 | 1.763776110E+01 | 8.952501361E+00 |
| A16 = | -4.823885473E+00 | 1.097598802E+01 | -8.800006866E+00 | -4.267882446E+00 |
| A18 = | 1.811443274E+00 | -4.267677883E+00 | 1.037431237E+00 | 8.695054663E-01 |
| Surface # | 7 | 8 | 9 | 10 |
| k = | 4.68053E+00 | 0.00000E+00 | -2.98632E+00 | -9.39538E-01 |
| A4 = | -3.228528894E-01 | -1.211527550E-01 | -1.791049332E-01 | 4.700451706E-01 |
| A6 = | 9.433408429E-01 | 7.209936195E-02 | 3.686092830E-01 | -1.468035158E+00 |
| A8 = | -2.559796067E+00 | 3.402282924E-01 | -9.204514534E-01 | 3.807481292E+00 |
| A10 = | 5.227989335E+00 | -2.410706719E+00 | 2.303228079E+00 | -7.628454323E+00 |
| A12 = | -8.263265616E+00 | 8.271760923E+00 | -4.533596098E+00 | 1.143424993E+01 |
| A14 = | 9.736153287E+00 | -1.909180036E+01 | 6.252724865E+00 | -1.262478633E+01 |
| A16 = | -8.160088126E+00 | 3.093255752E+01 | -5.927749889E+00 | 1.012244293E+01 |
| A18 = | 4.550702425E+00 | -3.536276059E+01 | 3.925753523E+00 | -5.772161417E+00 |
| A20 = | -1.487965680E+00 | 2.820141953E+01 | -1.835121139E+00 | 2.283662630E+00 |
| A22 = | 2.124220645E-01 | -1.523810704E+01 | 5.988516579E-01 | -6.059757233E-01 |
| A24 = | - | 5.269509873E+00 | -1.306764752E-01 | 1.018363773E-01 |
| A26 = | - | -1.039451436E+00 | 1.722395425E-02 | -9.671415223E-03 |
| A28 = | - | 8.739611464E-02 | -1.041496772E-03 | 3.877685920E-04 |
| Surface # | 11 | 12 | 14 | 15 |
| k = | -3.07122E+01 | -7.06515E-01 | -1.03622E+00 | -1.00943E+00 |
| A4 = | 4.043805091E-01 | -1.745313771E-01 | -6.423405773E-01 | -7.515308773E-01 |
| A6 = | -1.135673182E+00 | 4.014712254E-01 | 5.523693925E-01 | 8.382250215E-01 |
| A8 = | 2.478302724E+00 | -8.087953996E-01 | -2.831290985E-01 | -7.821818753E-01 |
| A10 = | -4.414713711E+00 | 9.093265289E-01 | -3.012639757E-02 | 5.560399800E-01 |

(continued)

| Surface # | 11 | 12 | 14 | 15 |
|---|---|---|---|---|
| A12 = | 5.790471965E+00 | -6.477539199E-01 | 1.277335287E-01 | -3.034347341E-01 |
| A14 = | -5.491338763E+00 | 3.044672037E-01 | -7.051889957E-02 | 1.277794942E-01 |
| A16 = | 3.783031863E+00 | -9.281786185E-02 | 1.640312106E-02 | -4.102930387E-02 |
| A18 = | -1.899639768E+00 | 1.649066479E-02 | -1.758380309E-04 | 9.875740157E-03 |
| A20 = | 6.925313997E-01 | -8.401365070E-04 | -9.204016051E-04 | -1.751485539E-03 |
| A22 = | -1.807491067E-01 | -3.305044163E-04 | 2.652954693E-04 | 2.241904885E-04 |
| A24 = | 3.282817790E-02 | 8.835951869E-05 | -3.881186735E-05 | -2.007024314E-05 |
| A26 = | -3.932954933E-03 | -1.018286350E-05 | 3.299289925E-06 | 1.189642890E-06 |
| A28 = | 2.790080714E-04 | 5.963500143E-07 | -1.554470282E-07 | -4.188831882E-08 |
| A30 = | -8.867481322E-06 | -1.440999127E-08 | 3.157703934E-09 | 6.627399211E-10 |

In the 6th embodiment, the equation of the aspheric surface profiles of the aforementioned lens elements is the same as the equation of the 1st embodiment. Also, the definitions of these parameters shown in Table 6C are the same as those stated in the 1st embodiment with corresponding values for the 6th embodiment, so an explanation in this regard will not be provided again.

Moreover, these parameters can be calculated from Table 6A and Table 6B as the following values and satisfy the following conditions:

| TABLE 6C | | | |
|---|---|---|---|
| Schematic Parameters | | | |
| f [mm] | 3.57 | CT1/CT2 | 2.37 |
| Fno | 2.31 | 10×T23/CT1 | 2.35 |
| HFOV [deg.] | 44.3 | T23/T12 | 0.21 |
| FOV [deg.] | 88.6 | T23/(T12+T34) | 0.11 |
| TL/f | 1.34 | (T34+T56)/CT2 | 5.13 |
| TL/ImgH | 1.34 | CT3/CT6 | 1.46 |
| BL/TL | 0.22 | T56/CT5 | 1.73 |
| f/f1 | 0.74 | CT5/CT6 | 0.87 |
| f1/f4 | 1.91 | VS4 | 37.4 |
| \|f1/f6\| | 0.66 | V4 | 37.4 |
| f45/f56 | -3.98 | V6 | 37.4 |
| (\|f3\|+\|f5\|)/(\|f1\|+\|f2\|) | 0.85 | V6/V2 | 1.84 |
| R1/R2 | 0.40 | V2+V5+V6 | 77.3 |
| R11/R10 | 0.68 | ET1/ET4 | 1.28 |
| R8/R12 | -1.22 | ET2/ET3 | 1.23 |
| \|R8\|/f+\|R12\|/f | 0.52 | SAG5R1/Y5R1 | -0.14 |
| \|R11+R12\|/f | 0.57 | \|SAG3R1/SAG2R1\| | 0.03 |
| \|R8/R2\|+\|R12/R10\| | 0.72 | Y6R1/Y5R2 | 1.13 |

## 7th Embodiment

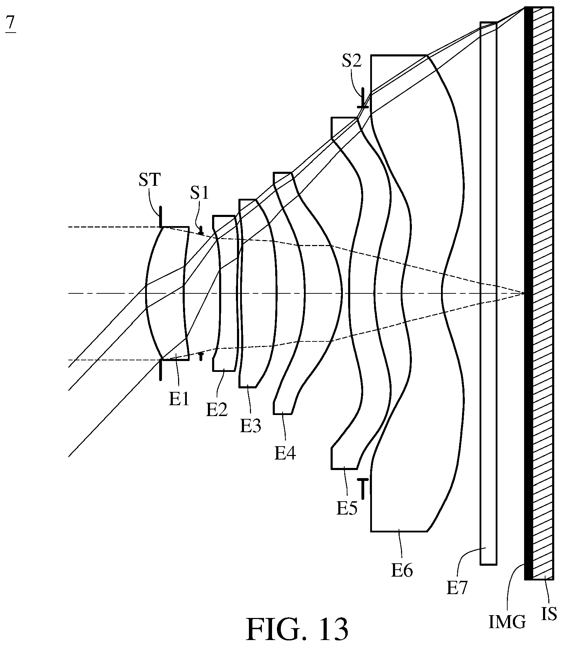

Fig. 13 is a schematic view of an image capturing unit according to the 7th embodiment of the present disclosure.

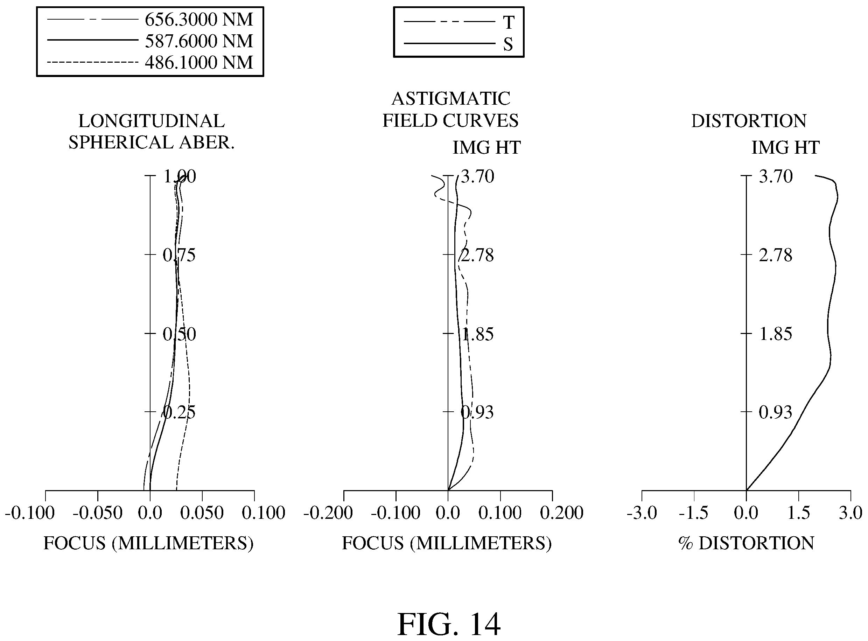

Fig. 14 shows, in order from left to right, spherical aberration curves, astigmatic field curves and a distortion curve of the image capturing unit according to the 7th embodiment. In Fig. 13, the image capturing unit 7 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a stop S2, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has one inflection point. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points. The image-side surface of the fourth lens element E4 has two inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has two inflection points. The image-side surface of the fifth lens element E5 has two inflection points. The object-side surface of the fifth lens element E5 has one critical point in an off-axis region thereof. The image-side surface of the fifth lens element E5 has one critical point in an off-axis region thereof.

The sixth lens element E6 with positive refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has five inflection points. The image-side surface of the sixth lens element E6 has one inflection point. The object-side surface of the sixth lens element E6 has three critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 7th embodiment are shown in Table 7A and the aspheric surface data are shown in Table 7B below.

| TABLE 7A | | | | | | | |
|---|---|---|---|---|---|---|---|
| 7th Embodiment | | | | | | | |
| f = 3.44 mm, Fno = 2.00, HFOV = 46.4 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.190 | | | | |
| 2 | Lens 1 | 1.7986 | (ASP) | 0.488 | Plastic | 1.544 | 56.0 | 5.30 |
| 3 | | 4.3244 | (ASP) | 0.223 | | | | |

(continued)

| TABLE 7A | | | | | | | | |
|---|---|---|---|---|---|---|---|---|
| 7th Embodiment | | | | | | | | |
| f = 3.44 mm, Fno = 2.00, HFOV = 46.4 deg. | | | | | | | | |
| Surface # | | Curvature Radius | | Thickness | Material | Index | Abbe # | Focal Length |
| 4 | Stop | Plano | | 0.250 | | | | |
| 5 | Lens 2 | -55.2956 | (ASP) | 0.218 | Plastic | 1.680 | 18.2 | -6.37 |
| 6 | | 4.7046 | (ASP) | 0.051 | | | | |
| 7 | Lens 3 | 4.4795 | (ASP) | 0.461 | Plastic | 1.544 | 56.0 | 5.90 |
| 8 | | -10.9276 | (ASP) | 0.366 | | | | |
| 9 | Lens 4 | -3.0343 | (ASP) | 0.481 | Plastic | 1.562 | 44.6 | 2.82 |
| 10 | | -1.0997 | (ASP) | 0.093 | | | | |
| 11 | Lens 5 | 11.8228 | (ASP) | 0.328 | Plastic | 1.697 | 16.3 | -3.09 |
| 12 | | 1.8032 | (ASP) | -0.150 | | | | |
| 13 | Stop | Plano | | 0.500 | | | | |
| 14 | Lens 6 | 1.1082 | (ASP) | 0.522 | Plastic | 1.614 | 26.0 | 122.32 |
| 15 | | 0.9233 | (ASP) | 0.500 | | | | |
| 16 | Filter | Plano | | 0.210 | Glass | 1.517 | 64.2 | - |
| 17 | | Plano | | 0.370 | | | | |
| 18 | Image | Plano | | - | | | | |
| Note: Reference wavelength is 587.6 nm (d-line). | | | | | | | | |
| An effective radius of the stop S1 (Surface 4) is 0.779 mm. | | | | | | | | |
| An effective radius of the stop S2 (Surface 13) is 2.409 mm. | | | | | | | | |

| TABLE 7B | | | | |
|---|---|---|---|---|
| Aspheric Coefficients | | | | |
| Surface # | 2 | 3 | 5 | 6 |
| k = | -1.92407E+00 | 9.48902E+00 | 0.00000E+00 | 1.57992E+00 |
| A4 = | 4.920428372E-02 | -1.029157758E-02 | -1.813407769E-01 | -3.822880950E-01 |
| A6 = | 4.811061304E-03 | -1.057745806E-01 | 4.618410058E-01 | 1.281037507E+00 |
| A8 = | 9.539849165E-02 | 7.276747432E-01 | -2.363975901E+00 | -3.833472662E+00 |
| A10 = | -7.410745568E-01 | -3.435308141E+00 | 7.078320332E+00 | 7.416766153E+00 |
| A12 = | 2.510980505E+00 | 9.140910111E+00 | -1.340910139E+01 | -9.204672464E+00 |
| A14 = | -4.426270751E+00 | -1.407027475E+01 | 1.514469146E+01 | 7.037744024E+00 |
| A16 = | 3.944031645E+00 | 1.152330386E+01 | -9.291927329E+00 | -2.987671258E+00 |
| A18 = | -1.413441605E+00 | -3.920054758E+00 | 2.301350670E+00 | 5.345959794E-01 |
| Surface # | 7 | 8 | 9 | 10 |
| k = | 2.14694E+00 | 0.00000E+00 | -6.82456E-01 | -8.26258E-01 |
| A4 = | -3.898811531E-01 | -1.466128808E-01 | -2.111700842E-01 | 5.421058301E-01 |
| A6 = | 1.198378649E+00 | -4.986262938E-02 | 2.956158677E-01 | -1.601161043E+00 |
| A8 = | -2.673534558E+00 | 1.601530149E+00 | -3.147444060E-01 | 3.322384926E+00 |

(continued)

| Surface # | 7 | 8 | 9 | 10 |
|---|---|---|---|---|
| A10 = | 3.060115244E+00 | -7.596864317E+00 | 1.163382366E-01 | -5.184429077E+00 |
| A12 = | -4.743372144E-01 | 2.183668692E+01 | 1.442523315E+00 | 6.034316155E+00 |
| A14 = | -3.546237842E+00 | -4.344932174E+01 | -5.557711456E+00 | -4.876999020E+00 |
| A16 = | 4.963870524E+00 | 6.089210982E+01 | 1.013519289E+01 | 2.279116731E+00 |
| A18 = | -3.108571302E+00 | -5.955347237E+01 | -1.095951698E+01 | -1.026121436E-01 |
| A20 = | 9.641204036E-01 | 3.964914627E+01 | 7.528794935E+00 | -6.054020268E-01 |
| A22 = | -1.198922718E-01 | -1.710712717E+01 | -3.334545702E+00 | 4.031477693E-01 |
| A24 = | - | 4.315754332E+00 | 9.251887061E-01 | -1.275980132E-01 |
| A26 = | - | -4.862948751E-01 | -1.464676646E-01 | 2.088861188E-02 |
| A28 = | - | 1.359849532E-03 | 1.009577339E-02 | -1.421247835E-03 |
| Surface # | 11 | 12 | 14 | 15 |
| k = | 2.53196E+01 | -8.49474E-01 | -1.07158E+00 | -9.72595E-01 |
| A4 = | 4.027835171E-01 | -4.829380002E-01 | -6.951971731E-01 | -6.029466783E-01 |
| A6 = | -7.606480996E-01 | 1.656966404E+00 | 7.182869327E-01 | 5.741224868E-01 |
| A8 = | 1.247339616E+00 | -3.467236595E+00 | -5.551811136E-01 | -4.274835351E-01 |
| A10 = | -2.113474383E+00 | 4.650960501E+00 | 2.863471707E-01 | 2.182291090E-01 |
| A12 = | 2.948191368E+00 | -4.382545359E+00 | -1.465461460E-01 | -7.468399993E-02 |
| A14 = | -3.056150209E+00 | 3.009062548E+00 | 1.007606224E-01 | 1.679635309E-02 |
| A16 = | 2.303755665E+00 | -1.528087894E+00 | -5.933022930E-02 | -2.237102520E-03 |
| A18 = | -1.258299294E+00 | 5.763376792E-01 | 2.353142029E-02 | 7.760329998E-05 |
| A20 = | 4.955310395E-01 | -1.606486148E-01 | -6.182015224E-03 | 3.279769707E-05 |
| A22 = | -1.389285235E-01 | 3.258197876E-02 | 1.087669449E-03 | -7.415174639E-06 |
| A24 = | 2.700808550E-02 | -4.663299450E-03 | -1.273461459E-04 | 8.071948051E-07 |
| A26 = | -3.457976015E-03 | 4.453740054E-04 | 9.551670755E-06 | -5.134012852E-08 |
| A28 = | 2.621980571E-04 | -2.541996514E-05 | -4.163199700E-07 | 1.828075615E-09 |
| A30 = | -8.919159710E-06 | 6.546996745E-07 | 8.034272478E-09 | -2.830131526E-11 |

In the 7th embodiment, the equation of the aspheric surface profiles of the aforementioned lens elements is the same as the equation of the 1st embodiment. Also, the definitions of these parameters shown in Table 7C are the same as those stated in the 1st embodiment with corresponding values for the 7th embodiment, so an explanation in this regard will not be provided again.

Moreover, these parameters can be calculated from Table 7A and Table 7B as the following values and satisfy the following conditions:

| TABLE 7C | | | |
|---|---|---|---|
| Schematic Parameters | | | |
| f [mm] | 3.44 | CT1/CT2 | 2.24 |
| Fno | 2.00 | 10×T23/CT1 | 1.05 |
| HFOV [deg.] | 46.4 | T23/T12 | 0.11 |
| FOV [deg.] | 92.8 | T23/(T12+T34) | 0.06 |
| TL/f | 1.43 | (T34+T56)/CT2 | 3.28 |

(continued)

| TABLE 7C | | | |
|---|---|---|---|
| Schematic Parameters | | | |
| TL/ImgH | 1.33 | CT3/CT6 | 0.88 |
| BL/TL | 0.22 | T56/CT5 | 1.07 |
| f/f1 | 0.65 | CT5/CT6 | 0.63 |
| f1/f4 | 1.88 | VS4 | 44.6 |
| \|f1/f6\| | 0.04 | V4 | 44.6 |
| f45/f56 | -7.62 | V6 | 26.0 |
| (\|f3\|+\|f5\|)/(\|f1\|+\|f2\|) | 0.77 | V6/V2 | 1.43 |
| R1/R2 | 0.42 | V2+V5+V6 | 60.4 |
| R11/R10 | 0.61 | ET1/ET4 | 1.42 |
| R8/R12 | -1.19 | ET2/ET3 | 1.40 |
| \|R8\|/f+\|R12\|/f | 0.59 | SAG5R1/Y5R1 | -0.11 |
| \|R11+R12\|/f | 0.59 | \|SAG3R1/SAG2R1\| | 0.16 |
| \|R8/R2\|+\|R12/R10\| | 0.77 | Y6R1/Y5R2 | 1.14 |

## 8th Embodiment

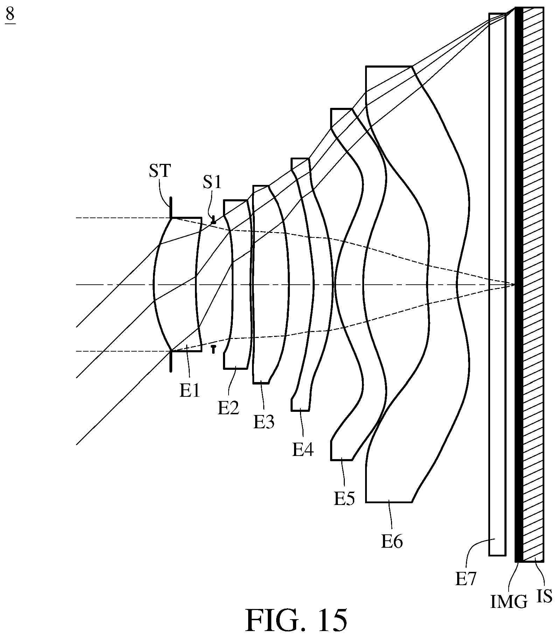

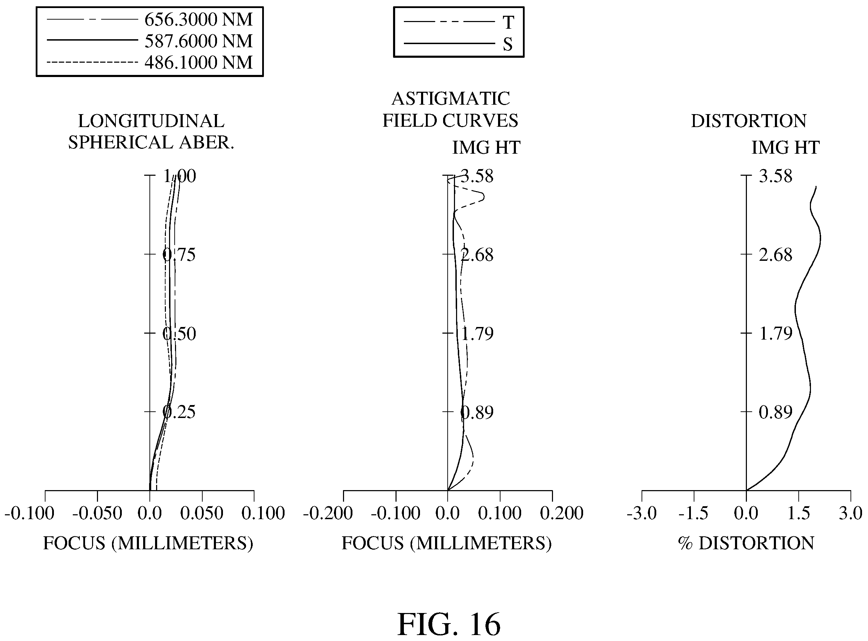

Fig. 15 is a schematic view of an image capturing unit according to the 8th embodiment of the present disclosure. Fig. 16 shows, in order from left to right, spherical aberration curves, astigmatic field curves and a distortion curve of the image capturing unit according to the 8th embodiment. In Fig. 15, the image capturing unit 8 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has two inflection points. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has two critical points in an off-axis region thereof.

The fourth lens element E4 with negative refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points. The image-side surface of the fourth lens element E4 has three inflection points.

The fifth lens element E5 with positive refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has two inflection points. The image-side surface of the fifth lens element E5 has two inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has two inflection points. The image-side surface of the sixth lens element E6 has five inflection points. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 8th embodiment are shown in Table 8A and the aspheric surface data are shown in Table 8B below.

| TABLE 8A | | | | | | | | |
|---|---|---|---|---|---|---|---|---|
| 8th Embodiment | | | | | | | | |
| f = 3.54 mm, Fno = 2.05, HFOV = 44.7 deg. | | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.222 | | | | |
| 2 | Lens 1 | 1.7328 | (ASP) | 0.547 | Plastic | 1.544 | 56.0 | 5.07 |
| 3 | | 4.1474 | (ASP) | 0.228 | | | | |
| 4 | Stop | Plano | | 0.248 | | | | |
| 5 | Lens 2 | -130.2605 | (ASP) | 0.231 | Plastic | 1.697 | 16.3 | -5.98 |
| 6 | | 4.3083 | (ASP) | 0.033 | | | | |
| 7 | Lens 3 | 5.4775 | (ASP) | 0.471 | Plastic | 1.544 | 56.0 | 5.08 |
| 8 | | -5.4153 | (ASP) | 0.322 | | | | |
| 9 | Lens 4 | -1.8498 | (ASP) | 0.248 | Plastic | 1.639 | 23.5 | -8.93 |
| 10 | | -2.8807 | (ASP) | 0.030 | | | | |
| 11 | Lens 5 | 1.1311 | (ASP) | 0.363 | Plastic | 1.566 | 37.4 | 3.93 |
| 12 | | 2.0333 | (ASP) | 0.830 | | | | |
| 13 | Lens 6 | 2.1032 | (ASP) | 0.385 | Plastic | 1.584 | 28.2 | -3.99 |
| 14 | | 1.0309 | (ASP) | 0.420 | | | | |
| 15 | Filter | Plano | | 0.210 | Glass | 1.517 | 64.2 | - |
| 16 | | Plano | | 0.130 | | | | |
| 17 | Image | Plano | | - | | | | |
| Note: Reference wavelength is 587.6 nm (d-line). | | | | | | | | |
| An effective radius of the stop S1 (Surface 4) is 0.799 mm. | | | | | | | | |

| TABLE 8B | | | | |
|---|---|---|---|---|
| Aspheric Coefficients | | | | |
| Surface # | 2 | 3 | 5 | 6 |
| k = | -1.85554E+00 | 1.40556E+01 | 0.00000E+00 | 3.14879E+00 |
| A4 = | 5.154211649E-02 | -2.001007366E-02 | -1.911682784E-01 | -4.633797825E-01 |

(continued)

| TABLE 8B | | | | |
|---|---|---|---|---|
| Aspheric Coefficients | | | | |
| Surface # | 2 | 3 | 5 | 6 |
| A6 = | 8.749170296E-03 | -2.543881181E-02 | 4.663766159E-01 | 1.762145444E+00 |
| A8 = | 4.215226861E-02 | 5.505724911E-02 | -2.302862531E+00 | -5.282747841E+00 |
| A10 = | -3.251841383E-01 | -2.904005127E-01 | 6.820643820E+00 | 9.850083988E+00 |
| A12 = | 1.036137172E+00 | 6.187899659E-01 | -1.276006674E+01 | -1.154943164E+01 |
| A14 = | -1.673623399E+00 | -7.831305749E-01 | 1.431002026E+01 | 8.273426439E+00 |
| A16 = | 1.358995761E+00 | 4.956398568E-01 | -8.799042309E+00 | -3.291484217E+00 |
| A18 = | -4.438800327E-01 | -1.422184153E-01 | 2.249048879E+00 | 5.557926050E-01 |
| Surface # | 7 | 8 | 9 | 10 |
| k = | 1.19505E+01 | 0.00000E+00 | -3.93674E+01 | 4.29814E-01 |
| A4 = | -4.519711877E-01 | 9.084014415E-03 | -3.338328113E-02 | 1.908079738E-01 |
| A6 = | 1.844188067E+00 | -4.539748375E-01 | 3.891500387E-01 | -5.496473994E-01 |
| A8 = | -4.808367483E+00 | 3.093413568E+00 | -2.093112282E+00 | 2.699788604E-01 |
| A10 = | 7.145263597E+00 | -1.207868464E+01 | 6.880519203E+00 | 1.955395613E+00 |
| A12 = | -5.461486122E+00 | 3.090183930E+01 | -1.496276669E+01 | -5.924373012E+00 |
| A14 = | 4.868852066E-01 | -5.557577517E+01 | 2.234556369E+01 | 9.022437847E+00 |
| A16 = | 2.872948632E+00 | 7.163159873E+01 | -2.369705630E+01 | -8.900237361E+00 |
| A18 = | -2.518292349E+00 | -6.598295476E+01 | 1.814393814E+01 | 6.078051596E+00 |
| A20 = | 9.198815229E-01 | 4.270682610E+01 | -9.989801259E+00 | -2.903739178E+00 |
| A22 = | -1.301266007E-01 | -1.877604358E+01 | 3.855929119E+00 | 9.504964773E-01 |
| A24 = | - | 5.265233176E+00 | -9.887304950E-01 | -2.025007524E-01 |
| A26 = | - | -8.304494391E-01 | 1.509609327E-01 | 2.523169393E-02 |
| A28 = | - | 5.369208097E-02 | -1.036437555E-02 | -1.392788745E-03 |
| Surface # | 11 | 12 | 13 | 14 |
| k = | -1.17760E+01 | -5.98632E-01 | -6.84721E-01 | -9.77936E-01 |
| A4 = | 4.414872687E-01 | -1.326902646E-01 | -7.433241256E-01 | -7.722695980E-01 |
| A6 = | -1.145058980E+00 | 7.171638929E-01 | 1.085194767E+00 | 1.034022270E+00 |
| A8 = | 2.385117015E+00 | -1.844855706E+00 | -1.634074164E+00 | -1.148069880E+00 |
| A10 = | -4.102104228E+00 | 2.795297940E+00 | 1.946291162E+00 | 9.288921136E-01 |
| A12 = | 5.375311974E+00 | -2.906881754E+00 | -1.669820434E+00 | -5.389557297E-01 |
| A14 = | -5.240960860E+00 | 2.158092270E+00 | 1.013541634E+00 | 2.257594433E-01 |
| A16 = | 3.755905268E+00 | -1.160124401E+00 | -4.359642459E-01 | -6.888392128E-02 |
| A18 = | -1.960333313E+00 | 4.538952737E-01 | 1.336691099E-01 | 1.538935610E-02 |
| A20 = | 7.376746167E-01 | -1.289013043E-01 | -2.926450233E-02 | -2.512505858E-03 |
| A22 = | -1.970017320E-01 | 2.623550750E-02 | 4.539234339E-03 | 2.961200917E-04 |
| A24 = | 3.630636515E-02 | -3.722956836E-03 | -4.873654520E-04 | -2.451336525E-05 |
| A26 = | -4.382556862E-03 | 3.492879255E-04 | 3.446569023E-05 | 1.351451926E-06 |
| A28 = | 3.115245078E-04 | -1.944994218E-05 | -1.445006216E-06 | -4.453465607E-08 |

(continued)

| Surface # | 11 | 12 | 13 | 14 |
|---|---|---|---|---|
| A30 = | -9.880795595E-06 | 4.862978783E-07 | 2.722466994E-08 | 6.633925305E-10 |

In the 8th embodiment, the equation of the aspheric surface profiles of the aforementioned lens elements is the same as the equation of the 1st embodiment. Also, the definitions of these parameters shown in Table 8C are the same as those stated in the 1st embodiment with corresponding values for the 8th embodiment, so an explanation in this regard will not be provided again.

Moreover, these parameters can be calculated from Table 8A and Table 8B as the following values and satisfy the following conditions:

| TABLE 8C | | | |
|---|---|---|---|
| Schematic Parameters | | | |
| f [mm] | 3.54 | CT1/CT2 | 2.37 |
| Fno | 2.05 | 10×T23/CT1 | 0.60 |
| HFOV [deg.] | 44.7 | T23/T12 | 0.07 |
| FOV [deg.] | 89.4 | T23/(T12+T34) | 0.04 |
| TL/f | 1.33 | (T34+T56)/CT2 | 4.99 |
| TL/ImgH | 1.31 | CT3/CT6 | 1.22 |
| BL/TL | 0.16 | T56/CT5 | 2.29 |
| f/f1 | 0.70 | CT5/CT6 | 0.94 |
| f1/f4 | -0.57 | VS4 | 37.4 |
| |f1/f6| | 1.27 | V4 | 23.5 |
| f45/f56 | 0.81 | V6 | 28.2 |
| (|f3|+|f5|)/(|f1|+|f2|) | 0.82 | V6/V2 | 1.73 |
| R1/R2 | 0.42 | V2+V5+V6 | 81.9 |
| R11/R10 | 1.03 | ET1/ET4 | 1.72 |
| R8/R12 | -2.79 | ET2/ET3 | 1.51 |
| |R8|/f+|R12|/f | 1.11 | SAG5R1/Y5R1 | -0.03 |
| |R11+R12|/f | 0.89 | |SAG3R1/SAG2R1| | 0.05 |
| |R8/R2|+|R12/R10| | 1.20 | Y6R1/Y5R2 | 1.10 |

## 9th Embodiment

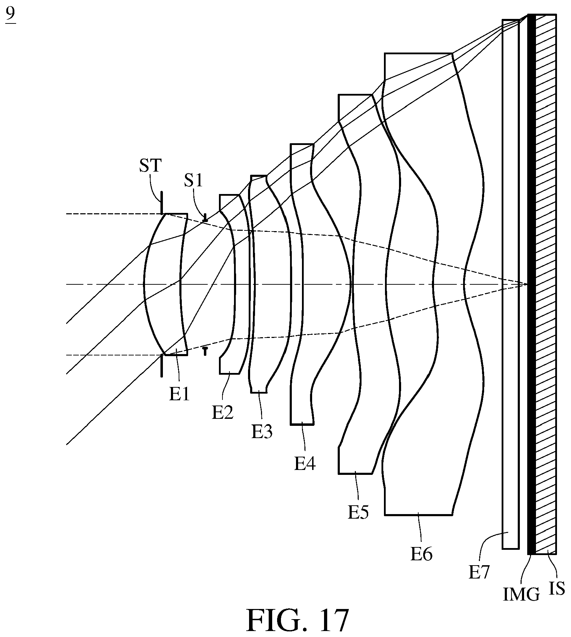

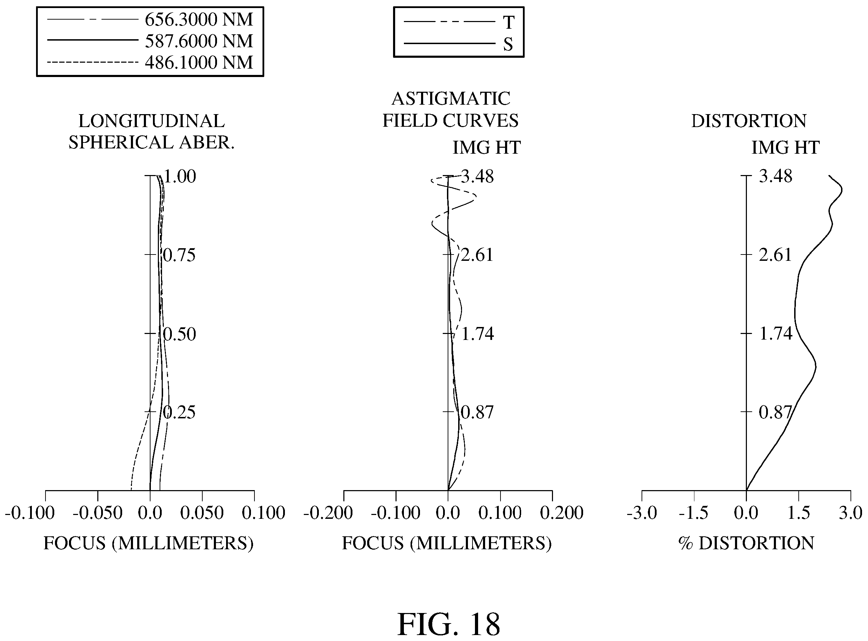

Fig. 17 is a schematic view of an image capturing unit according to the 9th embodiment of the present disclosure. Fig. 18 shows, in order from left to right, spherical aberration curves, astigmatic field curves and a distortion curve of the image capturing unit according to the 9th embodiment. In Fig. 17, the image capturing unit 9 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric.

The second lens element E2 with positive refractive power has an object-side surface being concave in a paraxial region thereof and an image-side surface being convex in a paraxial region thereof. The second lens element E2 is made of plastic material and has the object-side surface and the image-side surface being both aspheric. The image-side surface of the second lens element E2 has two inflection points. The image-side surface of the second lens element E2 has two critical points in an off-axis region thereof.

The third lens element E3 with negative refractive power has an object-side surface being concave in a paraxial region thereof and an image-side surface being convex in a paraxial region thereof. The third lens element E3 is made of plastic material and has the object-side surface and the image-side surface being both aspheric. The object-side surface of the third lens element E3 has three inflection points. The image-side surface of the third lens element E3 has one inflection point. The object-side surface of the third lens element E3 has one critical point in an off-axis region thereof. The image-side surface of the third lens element E3 has one critical point in an off-axis region thereof.

The fourth lens element E4 with positive refractive power has an object-side surface being convex in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points. The image-side surface of the fourth lens element E4 has two inflection points. The object-side surface of the fourth lens element E4 has three critical points in an off-axis region thereof. The image-side surface of the fourth lens element E4 has two critical points in an off-axis region thereof.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has three inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has two inflection points. The image-side surface of the sixth lens element E6 has four inflection points. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 9th embodiment are shown in Table 9A and the aspheric surface data are shown in Table 9B below.

| TABLE 9A | | | | | | | |
|---|---|---|---|---|---|---|---|
| 9th Embodiment | | | | | | | |
| f = 3.60 mm, Fno = 1.97, HFOV = 43.3 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.229 | | | | |
| 2 | Lens 1 | 1.7156 | (ASP) | 0.470 | Plastic | 1.544 | 56.0 | 4.89 |
| 3 | | 4.3721 | (ASP) | 0.321 | | | | |
| 4 | Stop | Plano | | 0.388 | | | | |
| 5 | Lens 2 | -12.5360 | (ASP) | 0.192 | Plastic | 1.697 | 16.3 | 21.56 |
| 6 | | -6.8781 | (ASP) | 0.065 | | | | |
| 7 | Lens 3 | -3.3778 | (ASP) | 0.465 | Plastic | 1.551 | 44.8 | -7.30 |
| 8 | | -22.2363 | (ASP) | 0.152 | | | | |
| 9 | Lens 4 | 196.0784 | (ASP) | 0.620 | Plastic | 1.529 | 45.4 | 2.23 |
| 10 | | -1.1835 | (ASP) | 0.030 | | | | |
| 11 | Lens 5 | 12.3827 | (ASP) | 0.425 | Plastic | 1.697 | 16.3 | -3.85 |
| 12 | | 2.1736 | (ASP) | 0.608 | | | | |

(continued)

| TABLE 9A | | | | | | | |
|---|---|---|---|---|---|---|---|
| 9th Embodiment | | | | | | | |
| f = 3.60 mm, Fno = 1.97, HFOV = 43.3 deg. | | | | | | | |
| Surface # | | Curvature Radius | | Thickness | Material | Index | Abbe # | Focal Length |
| 13 | Lens 6 | 1.4766 | (ASP) | 0.401 | Plastic | 1.566 | 37.4 | -5.35 |
| 14 | | 0.8951 | (ASP) | 0.500 | | | | |
| 15 | Filter | Plano | | 0.210 | Glass | 1.517 | 64.2 | - |
| 16 | | Plano | | 0.119 | | | | |
| 17 | Image | Plano | | - | | | | |
| Note: Reference wavelength is 587.6 nm (d-line). | | | | | | | |
| An effective radius of the stop S1 (Surface 4) is 0.824 mm. | | | | | | | |

| TABLE 9B | | | | |
|---|---|---|---|---|
| Aspheric Coefficients | | | | |
| Surface # | 2 | 3 | 5 | 6 |
| k = | -1.55355E+00 | 1.33028E+01 | 0.00000E+00 | -8.39478E+01 |
| A4 = | 4.786245665E-02 | -3.433662490E-03 | 5.968741493E-02 | 5.947582416E-01 |
| A6 = | 4.943953908E-02 | -3.878332609E-02 | -8.370297327E-01 | -2.458910977E+00 |
| A8 = | -2.097581283E-01 | 1.633924743E-01 | 1.610115303E+00 | 4.940266683E+00 |
| A10 = | 6.866321921E-01 | -4.701672951E-01 | -1.277528784E+00 | -6.017465657E+00 |
| A12 = | -1.327197652E+00 | 6.408196381E-01 | -1.305580454E+00 | 4.321141558E+00 |
| A14 = | 1.530383287E+00 | -3.170648827E-01 | 3.446295210E+00 | -1.659172239E+00 |
| A16 = | -9.682211871E-01 | -1.602021211E-01 | -2.539554888E+00 | 2.554334370E-01 |
| A18 = | 2.574263551E-01 | 1.562063006E-01 | 6.151727152E-01 | 3.286945602E-03 |
| Surface # | 7 | 8 | 9 | 10 |
| k = | -9.38353E+01 | 0.00000E+00 | 9.80274E+01 | -8.90741E-01 |
| A4 = | 4.709722891E-01 | 1.222093762E-01 | -2.886169153E-02 | 2.988361977E-01 |
| A6 = | -1.644421414E+00 | -1.521591588E+00 | -9.532781386E-01 | -6.322115058E-01 |
| A8 = | 2.310403562E+00 | 6.478870983E+00 | 4.096925319E+00 | 1.458548317E+00 |
| A10 = | -7.067081924E-01 | -2.049202031E+01 | -1.069798723E+01 | -3.039802212E+00 |
| A12 = | -2.448060190E+00 | 4.648161008E+01 | 1.829946664E+01 | 4.529701431E+00 |
| A14 = | 4.064414564E+00 | -7.570970453E+01 | -2.104137656E+01 | -4.579472552E+00 |
| A16 = | -3.045082293E+00 | 8.967369816E+01 | 1.674606480E+01 | 3.194739098E+00 |
| A18 = | 1.268620461E+00 | -7.742530787E+01 | -9.387287953E+00 | -1.558503174E+00 |
| A20 = | -2.854028090E-01 | 4.817176750E+01 | 3.710649118E+00 | 5.307845949E-01 |
| A22 = | 2.720377916E-02 | -2.099716433E+01 | -1.015338907E+00 | -1.237257470E-01 |
| A24 = | - | 6.073384411E+00 | 1.834329627E-01 | 1.882801667E-02 |
| A26 = | - | -1.045133284E+00 | -1.971336764E-02 | -1.686982375E-03 |
| A28 = | - | 8.082674912E-02 | 9.553977646E-04 | 6.757841319E-05 |

(continued)

| Surface # | 11 | 12 | 13 | 14 |
|---|---|---|---|---|
| k = | 2.73994E+01 | -4.80778E-01 | -9.65604E-01 | -9.93602E-01 |
| A4 = | 3.366034052E-02 | -3.605848437E-01 | -6.296787123E-01 | -7.089681021E-01 |
| A6 = | 3.686091633E-01 | 1.067795696E+00 | 4.397805783E-01 | 7.523515539E-01 |
| A8 = | -9.584508921E-01 | -1.957370854E+00 | 5.575007400E-02 | -6.428171153E-01 |
| A10 = | 9.792968954E-01 | 2.239621131E+00 | -5.256973618E-01 | 4.269542515E-01 |
| A12 = | -3.305454311E-01 | -1.751783236E+00 | 5.848578876E-01 | -2.263020483E-01 |
| A14 = | -3.355951172E-01 | 9.770564709E-01 | -3.604008462E-01 | 9.477592114E-02 |
| A16 = | 5.232811233E-01 | -3.961568934E-01 | 1.457658067E-01 | -3.038785306E-02 |
| A18 = | -3.530793948E-01 | 1.175590133E-01 | -4.105465569E-02 | 7.259247133E-03 |
| A20 = | 1.474431476E-01 | -2.546064239E-02 | 8.225419563E-03 | -1.266679712E-03 |
| A22 = | -4.085907195E-02 | 3.971451417E-03 | -1.171192480E-03 | 1.582312745E-04 |
| A24 = | 7.549638589E-03 | -4.337932493E-04 | 1.160004909E-04 | -1.373209862E-05 |
| A26 = | -8.963550518E-04 | 3.144423499E-05 | -7.603497385E-06 | 7.849112137E-07 |
| A28 = | 6.196648097E-05 | -1.356927560E-06 | 2.966320344E-07 | -2.654268235E-08 |
| A30 = | -1.898262706E-06 | 2.634813697E-08 | -5.215725272E-09 | 4.020519642E-10 |

In the 9th embodiment, the equation of the aspheric surface profiles of the aforementioned lens elements is the same as the equation of the 1st embodiment. Also, the definitions of these parameters shown in Table 9C are the same as those stated in the 1st embodiment with corresponding values for the 9th embodiment, so an explanation in this regard will not be provided again.

Moreover, these parameters can be calculated from Table 9A and Table 9B as the following values and satisfy the following conditions:

| TABLE 9C | | | |
|---|---|---|---|
| Schematic Parameters | | | |
| f [mm] | 3.60 | CT1/CT2 | 2.45 |
| Fno | 1.97 | 10×T23/CT1 | 1.38 |
| HFOV [deg.] | 43.3 | T23/T12 | 0.09 |
| FOV [deg.] | 86.6 | T23/(T12+T34) | 0.08 |
| TL/f | 1.38 | (T34+T56)/CT2 | 3.96 |
| TL/ImgH | 1.43 | CT3/CT6 | 1.16 |
| BL/TL | 0.17 | T56/CT5 | 1.43 |
| f/f1 | 0.74 | CT5/CT6 | 1.06 |
| f1/f4 | 2.20 | VS4 | 44.8 |
| |f1/f6| | 0.91 | V4 | 45.4 |
| f45/f56 | -2.25 | V6 | 37.4 |
| (|f3|+|f5|)/(|f1|+|f2|) | 0.42 | V6/V2 | 2.30 |
| R1/R2 | 0.39 | V2+V5+V6 | 70.0 |
| R11/R10 | 0.68 | ET1/ET4 | 0.95 |
| R8/R12 | -1.32 | ET2/ET3 | 1.23 |
| |R8|/f+|R12|/f | 0.58 | SAG5R1/Y5R1 | -0.09 |

(continued)

| TABLE 9C | | | |
|---|---|---|---|
| Schematic Parameters | | | |
| \|R11+R12\|/f | 0.66 | \|SAG3R1/SAG2R1\| | 0.25 |
| \|R8/R2\|+\|R12/R10\| | 0.68 | Y6R1/Y5R2 | 1.08 |

## 10th Embodiment

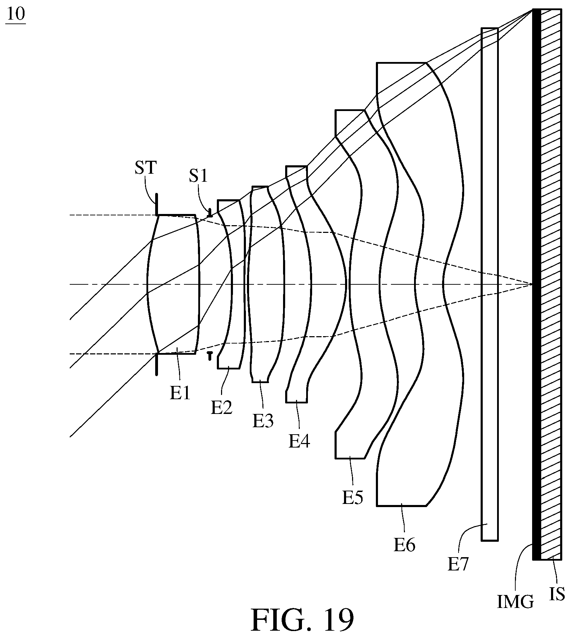

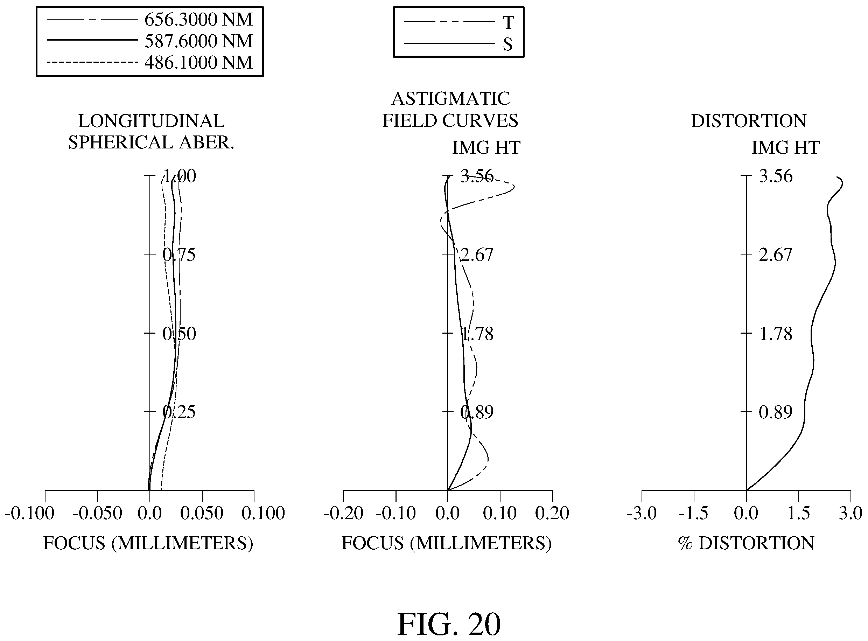

Fig. 19 is a schematic view of an image capturing unit according to the 10th embodiment of the present disclosure. Fig. 20 shows, in order from left to right, spherical aberration curves, astigmatic field curves and a distortion curve of the image capturing unit according to the 10th embodiment. In Fig. 19, the image capturing unit 10 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being convex in a paraxial region thereof. The first lens element E1 is made of glass material and has the object-side surface and the image-side surface being both aspheric. The object-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has one inflection point. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of glass material and has the object-side surface and the image-side surface being both aspheric. The object-side surface of the third lens element E3 has two inflection points. The image-side surface of the third lens element E3 has one inflection point. The object-side surface of the third lens element E3 has two critical points in an off-axis region thereof. The image-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has two inflection points. The image-side surface of the fourth lens element E4 has three inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has three inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has four inflection points. The image-side surface of the sixth lens element E6 has four inflection points. The object-side surface of the sixth lens element E6 has one critical point in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 10th embodiment are shown in Table 10A and the aspheric surface data are shown in Table 10B below.

| TABLE 10A | | | | | | | |
|---|---|---|---|---|---|---|---|
| 10th Embodiment | | | | | | | |
| f = 3.59 mm, Fno = 2.00, HFOV = 43.9 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.121 | | | | |
| 2 | Lens 1 | 2.4097 | (ASP) | 0.674 | Glass | 1.500 | 62.1 | 4.69 |
| 3 | | -76.9231 | (ASP) | 0.137 | | | | |
| 4 | Stop | Plano | | 0.287 | | | | |
| 5 | Lens 2 | -5.4366 | (ASP) | 0.160 | Plastic | 1.614 | 26.0 | -4.55 |
| 6 | | 5.8049 | (ASP) | 0.047 | | | | |
| 7 | Lens 3 | 3.1435 | (ASP) | 0.470 | Glass | 1.487 | 70.4 | 5.67 |
| 8 | | -21.8368 | (ASP) | 0.350 | | | | |
| 9 | Lens 4 | -3.5697 | (ASP) | 0.453 | Plastic | 1.566 | 37.4 | 2.60 |
| 10 | | -1.0901 | (ASP) | 0.045 | | | | |
| 11 | Lens 5 | 5.8139 | (ASP) | 0.387 | Plastic | 1.669 | 19.5 | -3.72 |
| 12 | | 1.6951 | (ASP) | 0.459 | | | | |
| 13 | Lens 6 | 1.1722 | (ASP) | 0.365 | Plastic | 1.551 | 44.8 | -9.60 |
| 14 | | 0.8534 | (ASP) | 0.500 | | | | |
| 15 | Filter | Plano | | 0.210 | Glass | 1.517 | 64.2 | - |
| 16 | | Plano | | 0.458 | | | | |
| 17 | Image | Plano | | - | | | | |
| Note: Reference wavelength is 587.6 nm (d-line). | | | | | | | |
| An effective radius of the stop S1 (Surface 4) is 0.882 mm. | | | | | | | |

| TABLE 10B | | | | |
|---|---|---|---|---|
| Aspheric Coefficients | | | | |
| Surface # | 2 | 3 | 5 | 6 |
| k = | -6.29886E+00 | 9.90000E+01 | 0.00000E+00 | 1.33989E+01 |
| A4 = | 4.498173605E-02 | -5.279679267E-02 | -1.997611441E-01 | -3.836237801E-01 |
| A6 = | -8.721759760E-02 | 1.939697256E-02 | 5.157130320E-01 | 9.527510323E-01 |
| A8 = | 2.863447940E-01 | -2.903827319E-01 | -1.905392201E+00 | -1.942721485E+00 |
| A10 = | -9.097398468E-01 | 8.782035404E-01 | 5.021162799E+00 | 2.847796493E+00 |
| A12 = | 1.820948368E+00 | -1.523156696E+00 | -9.333715001E+00 | -3.170774482E+00 |
| A14 = | -2.274516745E+00 | 1.444409665E+00 | 1.085428790E+01 | 2.390911033E+00 |
| A16 = | 1.592353416E+00 | -6.802982761E-01 | -6.897214239E+00 | -1.004471466E+00 |
| A18 = | -4.780873660E-01 | 1.126089406E-01 | 1.805188023E+00 | 1.703124253E-01 |
| Surface # | 7 | 8 | 9 | 10 |
| k = | 9.15131E-01 | 0.00000E+00 | -2.21063E+00 | -9.29360E-01 |
| A4 = | -2.854044512E-01 | 4.744570557E-02 | -1.575894441E-01 | 4.807487438E-01 |
| A6 = | 2.077820372E-01 | -1.716717386E+00 | 3.319428427E-02 | -1.581434973E+00 |

(continued)

| Surface # | 7 | 8 | 9 | 10 |
|---|---|---|---|---|
| A8 = | 1.505080366E+00 | 1.192739284E+01 | 1.080199086E+00 | 3.866000034E+00 |
| A10 = | -7.426469477E+00 | -5.222448095E+01 | -3.973017618E+00 | -5.891763113E+00 |
| A12 = | 1.711639709E+01 | 1.546746190E+02 | 7.958735259E+00 | 4.157774674E+00 |
| A14 = | -2.382384926E+01 | -3.204339509E+02 | -1.085625942E+01 | 2.328193017E+00 |
| A16 = | 2.062165310E+01 | 4.718616287E+02 | 1.092168329E+01 | -8.752936258E+00 |
| A18 = | -1.075732943E+01 | -4.958491213E+02 | -8.422160241E+00 | 9.887473637E+00 |
| A20 = | 3.086892267E+00 | 3.686178379E+02 | 5.035758879E+00 | -6.430260540E+00 |
| A22 = | -3.741631260E-01 | -1.890898838E+02 | -2.265475936E+00 | 2.618971158E+00 |
| A24 = | - | 6.358598748E+01 | 7.084964006E-01 | -6.603172366E-01 |
| A26 = | - | -1.260018228E+01 | -1.341132911E-01 | 9.448130488E-02 |
| A28 = | - | 1.114084544E+00 | 1.137130139E-02 | -5.877093778E-03 |
| Surface # | 11 | 12 | 13 | 14 |
| k = | -1.21406E+01 | -8.76080E-01 | -1.06140E+00 | -1.00095E+00 |
| A4 = | 4.110325253E-01 | -2.089736144E-01 | -6.810313955E-01 | -7.321610424E-01 |
| A6 = | -1.259812348E+00 | 5.396584868E-01 | 8.132947279E-01 | 8.118104323E-01 |
| A8 = | 3.096943735E+00 | -1.072918063E+00 | -9.664921795E-01 | -7.631285389E-01 |
| A10 = | -5.989236947E+00 | 1.232746135E+00 | 1.004901252E+00 | 5.484602634E-01 |
| A12 = | 8.316292198E+00 | -9.228472934E-01 | -8.797531718E-01 | -3.009553903E-01 |
| A14 = | -8.269694535E+00 | 4.747916875E-01 | 5.903233667E-01 | 1.265893486E-01 |
| A16 = | 5.969675588E+00 | -1.729194455E-01 | -2.844096758E-01 | -4.038117432E-02 |
| A18 = | -3.155600100E+00 | 4.595751737E-02 | 9.652368459E-02 | 9.616262948E-03 |
| A20 = | 1.220615241E+00 | -9.326146652E-03 | -2.300905637E-02 | -1.681856073E-03 |
| A22 = | -3.413295372E-01 | 1.526059701E-03 | 3.827869715E-03 | 2.117541690E-04 |
| A24 = | 6.711785905E-02 | -2.045807667E-04 | -4.353161335E-04 | -1.860937050E-05 |
| A26 = | -8.795870710E-03 | 2.080751073E-05 | 3.227479872E-05 | 1.081194175E-06 |
| A28 = | 6.891660844E-04 | -1.353390139E-06 | -1.406722213E-06 | -3.727480915E-08 |
| A30 = | -2.440134811E-05 | 4.045761246E-08 | 2.735880673E-08 | 5.770161902E-10 |

In the 10th embodiment, the equation of the aspheric surface profiles of the aforementioned lens elements is the same as the equation of the 1st embodiment. Also, the definitions of these parameters shown in Table 10C are the same as those stated in the 1st embodiment with corresponding values for the 10th embodiment, so an explanation in this regard will not be provided again.

Moreover, these parameters can be calculated from Table 10A and Table 10B as the following values and satisfy the following conditions:

| TABLE 10C | | | |
|---|---|---|---|
| Schematic Parameters | | | |
| f [mm] | 3.59 | CT1/CT2 | 4.21 |
| Fno | 2.00 | 10×T23/CT1 | 0.70 |
| HFOV [deg.] | 43.9 | T23/T12 | 0.11 |
| FOV [deg.] | 87.8 | T23/(T12+T34) | 0.06 |

(continued)

| TABLE 10C | | | |
|---|---|---|---|
| Schematic Parameters | | | |
| TL/f | 1.39 | (T34+T56)/CT2 | 5.06 |
| TL/ImgH | 1.41 | CT3/CT6 | 1.29 |
| BL/TL | 0.23 | T56/CT5 | 1.19 |
| f/f1 | 0.77 | CT5/CT6 | 1.06 |
| f1/f4 | 1.80 | VS4 | 44.8 |
| |f1/f6| | 0.49 | V4 | 37.4 |
| f45/f56 | -2.97 | V6 | 44.8 |
| (|f3|+|f5|)/(|f1|+|f2|) | 1.02 | V6/V2 | 1.72 |
| R1/R2 | -0.03 | V2+V5+V6 | 90.2 |
| R11/R10 | 0.69 | ET1/ET4 | 1.73 |
| R8/R12 | -1.28 | ET2/ET3 | 1.37 |
| |R8|/f+|R12|/f | 0.54 | SAG5R1/Y5R1 | -0.10 |
| |R11+R12|/f | 0.56 | |SAG3R1/SAG2R1| | 0.31 |
| |R8/R2|+|R12/R10| | 0.52 | Y6R1/Y5R2 | 1.09 |

## 11th Embodiment

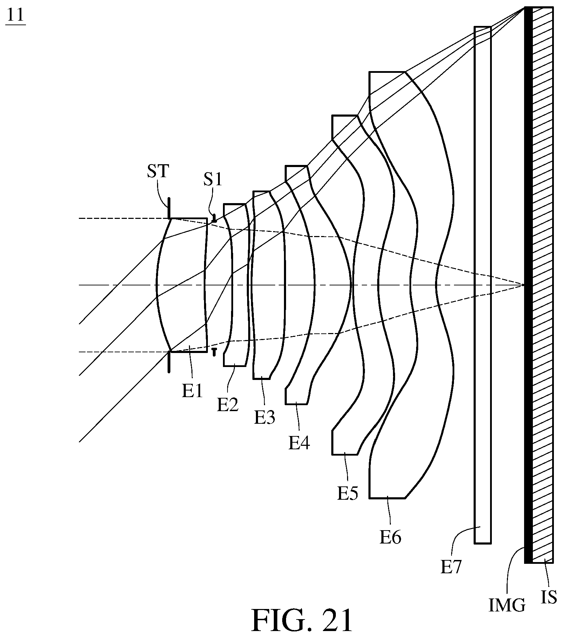

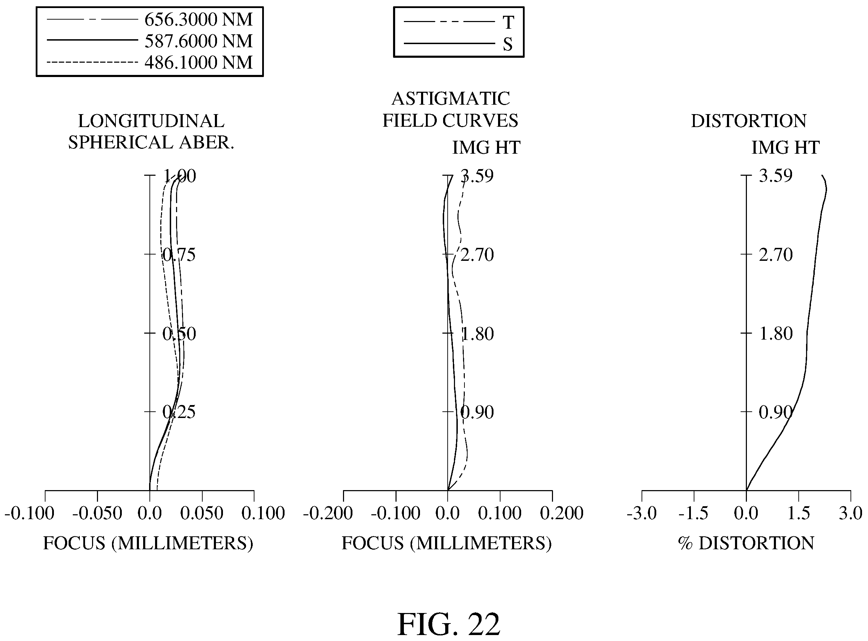

Fig. 21 is a schematic view of an image capturing unit according to the 11th embodiment of the present disclosure. Fig. 22 shows, in order from left to right, spherical aberration curves, astigmatic field curves and a distortion curve of the image capturing unit according to the 11th embodiment. In Fig. 21, the image capturing unit 11 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point. The image-side surface of the first lens element E1 has one critical point in an off-axis region thereof.

The second lens element E2 with negative refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point. The image-side surface of the second lens element E2 has one inflection point. The object-side surface of the second lens element E2 has one critical point in an off-axis region thereof. The image-side surface of the second lens element E2 has one critical point in an off-axis region thereof.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric. The object-side surface of the third lens element E3 has two inflection points. The image-side surface of the third lens element E3 has two inflection points. The object-side surface of the third lens element E3 has two critical points in an off-axis region thereof. The image-side surface of the third lens element E3 has one critical point in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The image-side surface of the fourth lens element E4 has two inflection points.

The fifth lens element E5 with negative refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has three inflection points. The object-side surface of the fifth lens element E5 has one critical point in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has four inflection points. The image-side surface of the sixth lens element E6 has two inflection points. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 11th embodiment are shown in Table 11A and the aspheric surface data are shown in Table 11B below.

| TABLE 11A | | | | | | | |
|---|---|---|---|---|---|---|---|
| 11th Embodiment | | | | | | | |
| f = 3.48 mm, Fno = 2.01, HFOV = 45.2 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.159 | | | | |
| 2 | Lens 1 | 1.9695 | (ASP) | 0.616 | Plastic | 1.545 | 56.1 | 5.17 |
| 3 | | 5.8158 | (ASP) | 0.124 | | | | |
| 4 | Stop | Plano | | 0.235 | | | | |
| 5 | Lens 2 | 197.0314 | (ASP) | 0.200 | Plastic | 1.669 | 19.5 | -6.12 |
| 6 | | 4.0106 | (ASP) | 0.048 | | | | |
| 7 | Lens 3 | 3.2510 | (ASP) | 0.434 | Plastic | 1.544 | 56.0 | 6.07 |
| 8 | | 200.0000 | (ASP) | 0.384 | | | | |
| 9 | Lens 4 | -3.1468 | (ASP) | 0.469 | Plastic | 1.566 | 37.4 | 2.46 |
| 10 | | -1.0173 | (ASP) | 0.030 | | | | |
| 11 | Lens 5 | 5.7902 | (ASP) | 0.320 | Plastic | 1.669 | 19.5 | -3.89 |
| 12 | | 1.7571 | (ASP) | 0.415 | | | | |
| 13 | Lens 6 | 1.2761 | (ASP) | 0.334 | Plastic | 1.566 | 37.4 | -7.34 |
| 14 | | 0.8838 | (ASP) | 0.500 | | | | |
| 15 | Filter | Plano | | 0.210 | Glass | 1.517 | 64.2 | - |
| 16 | | Plano | | 0.441 | | | | |
| 17 | Image | Plano | | - | | | | |
| Note: Reference wavelength is 587.6 nm (d-line). | | | | | | | |
| An effective radius of the stop S1 (Surface 4) is 0.825 mm. | | | | | | | |

| TABLE 11B | | | | |
|---|---|---|---|---|
| Aspheric Coefficients | | | | |
| Surface # | 2 | 3 | 5 | 6 |
| k = | -3.23625E+00 | 2.19545E+00 | 0.00000E+00 | 2.58956E+00 |
| A4 = | 4.306406748E-02 | -3.081324955E-02 | -1.897435946E-01 | -4.124143612E-01 |
| A6 = | 2.233185953E-02 | -2.759494827E-02 | 4.592275006E-01 | 1.530148015E+00 |
| A8 = | -8.857934544E-02 | -6.804527129E-02 | -2.310050345E+00 | -5.710011605E+00 |
| A10 = | -9.796824896E-02 | 2.895519102E-01 | 7.223987711E+00 | 1.538597033E+01 |
| A12 = | 1.001488572E+00 | -7.884012846E-01 | -1.527638747E+01 | -2.928565495E+01 |
| A14 = | -2.215464703E+00 | 1.002235401E+00 | 2.081422478E+01 | 3.891451375E+01 |
| A16 = | 2.139311581E+00 | -6.014665736E-01 | -1.757468507E+01 | -3.553578197E+01 |
| A18 = | -7.889865554E-01 | 1.256851227E-01 | 8.360583093E+00 | 2.129444200E+01 |
| A20 = | - | - | -1.711485092E+00 | -7.496497085E+00 |
| A22 = | - | - | - | 1.163759733E+00 |
| Surface # | 7 | 8 | 9 | 10 |
| k = | 2.88008E+00 | 0.00000E+00 | -3.01359E+00 | -9.69670E-01 |
| A4 = | -4.061364973E-01 | -1.018788090E-01 | -2.543434197E-01 | 5.157327829E-01 |
| A6 = | 1.454064515E+00 | -9.689899416E-02 | 8.827898390E-01 | -1.614829263E+00 |
| A8 = | -4.686367339E+00 | 2.152054934E+00 | -2.026838892E+00 | 4.595184524E+00 |
| A10 = | 9.5699568162E+00 | -1.215571605E+01 | 4.047672480E+00 | -1.047102887E+01 |
| A12 = | -9.068521308E+00 | 3.903159807E+01 | -8.588083169E+00 | 1.752842411E+01 |
| A14 = | -8.909416217E+00 | -8.210996478E+01 | 1.697857248E+01 | -2.093481664E+01 |
| A16 = | 4.313348413E+01 | 1.178203143E+02 | -2.611958790E+01 | 1.775687070E+01 |
| A18 = | -6.832219355E+01 | -1.161443587E+02 | 2.890759863E+01 | -1.066430228E+01 |
| A20 = | 6.138897346E+01 | 7.737629450E+01 | -2.231018005E+01 | 4.500248327E+00 |
| A22 = | -3.281019940E+01 | -3.327920864E+01 | 1.167072903E+01 | -1.309548731E+00 |
| A24 = | 9.710281516E+00 | 8.340842926E+00 | -3.935886313E+00 | 2.518846072E-01 |
| A26 = | -1.226336774E+00 | -9.251768172E-01 | 7.705239300E-01 | -2.907108860E-02 |
| A28 = | - | - | -6.639202435E-02 | 1.538101838E-03 |
| Surface # | 11 | 12 | 13 | 14 |
| k = | -6.78872E+00 | -8.13729E-01 | -1.01998E+00 | -1.00392E+00 |
| A4 = | 4.057391697E-01 | -2.218836010E-01 | -5.771759443E-01 | -6.942525109E-01 |
| A6 = | -9.156016919E-01 | 7.979259034E-01 | 3.683622596E-01 | 6.788854807E-01 |
| A8 = | 1.536388689E+00 | -2.070318507E+00 | -3.414453239E-02 | -5.620597928E-01 |
| A10 = | -2.646496033E+00 | 3.111241163E+00 | -2.698744229E-01 | 3.538768082E-01 |
| A12 = | 3.805679582E+00 | -3.134454719E+00 | 3.016692315E-01 | -1.694052422E-01 |
| A14 = | -4.048383061E+00 | 2.250475483E+00 | -1.626163664E-01 | 6.382462273E-02 |
| A16 = | 3.114508718E+00 | -1.182325392E+00 | 5.135355502E-02 | -1.925216857E-02 |
| A18 = | -1.734226829E+00 | 4.587977563E-01 | -9.656687028E-03 | 4.597516303E-03 |
| A20 = | 6.975217070E-01 | -1.311323669E-01 | 9.151614118E-04 | -8.445086517E-04 |
| A22 = | -2.002795502E-01 | 2.719839851E-02 | 1.402200584E-05 | 1.151085441E-04 |

(continued)

| Surface # | 11 | 12 | 13 | 14 |
|---|---|---|---|---|
| A24 = | 3.997619479E-02 | -3.971246176E-03 | -1.507316495E-05 | -1.114864053E-05 |
| A26 = | -5.265362089E-03 | 3.860207067E-04 | 1.827601870E-06 | 7.208922195E-07 |
| A28 = | 4.112085447E-04 | -2.237530466E-05 | -1.015883225E-07 | -2.779970730E-08 |
| A30 = | -1.441444096E-05 | 5.841164824E-07 | 2.276238650E-09 | 4.824401807E-10 |

In the 11th embodiment, the equation of the aspheric surface profiles of the aforementioned lens elements is the same as the equation of the 1st embodiment. Also, the definitions of these parameters shown in Table 11C are the same as those stated in the 1st embodiment with corresponding values for the 11th embodiment, so an explanation in this regard will not be provided again.

Moreover, these parameters can be calculated from Table 11A and Table 11B as the following values and satisfy the following conditions:

| TABLE 11C | | | |
|---|---|---|---|
| Schematic Parameters | | | |
| f [mm] | 3.48 | CT1/CT2 | 3.08 |
| Fno | 2.01 | 10×T23/CT1 | 0.78 |
| HFOV [deg.] | 45.2 | T23/T12 | 0.13 |
| FOV [deg.] | 90.4 | T23/(T12+T34) | 0.06 |
| TL/f | 1.37 | (T34+T56)/CT2 | 4.00 |
| TL/ImgH | 1.32 | CT3/CT6 | 1.30 |
| BL/TL | 0.24 | T56/CT5 | 1.30 |
| f/f1 | 0.67 | CT5/CT6 | 0.96 |
| f1/f4 | 2.10 | VS4 | 37.4 |
| \|f1/f6\| | 0.71 | V4 | 37.4 |
| f45/f56 | -2.61 | V6 | 37.4 |
| (\|f3\|+\|f5\|)/(\|f1\|+\|f2\|) | 0.88 | V6/V2 | 1.92 |
| R1/R2 | 0.34 | V2+V5+V6 | 76.3 |
| R11/R10 | 0.73 | ET1/ET4 | 1.64 |
| R8/R12 | -1.15 | ET2/ET3 | 1.33 |
| \|R8\|/f+\|R12\|/f | 0.55 | SAG5R1/Y5R1 | -0.14 |
| \|R11+R12\|/f | 0.62 | \|SAG3R1/SAG2R1\| | 0.24 |
| \|R8/R2\|+\|R12/R10\| | 0.68 | Y6R1/Y5R2 | 1.12 |

## 12th Embodiment

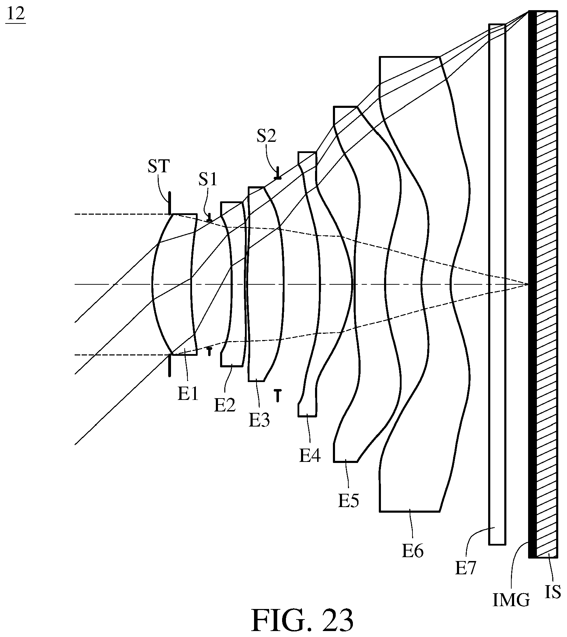

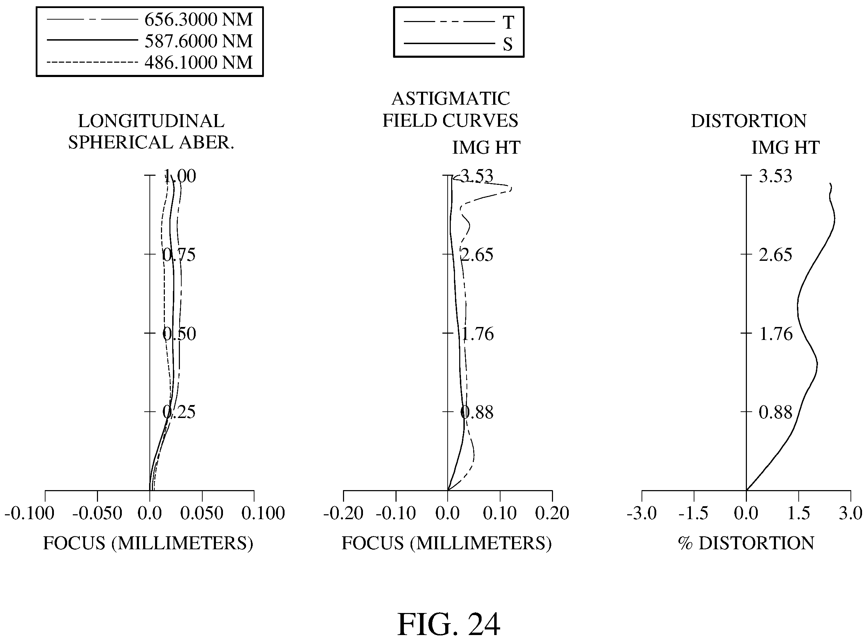

Fig. 23 is a schematic view of an image capturing unit according to the 12th embodiment of the present disclosure. Fig. 24 shows, in order from left to right, spherical aberration curves, astigmatic field curves and a distortion curve of the image capturing unit according to the 12th embodiment. In Fig. 23, the image capturing unit 12 includes the photography optical lens assembly (its reference numeral is omitted) of the present disclosure and an image sensor IS. The photography optical lens assembly includes, in order from an object side to an image side along an optical axis, an aperture stop ST, a first lens element E1, a stop S1, a second lens element E2, a third lens element E3, a stop S2, a fourth lens element E4, a fifth lens element E5, a sixth lens element E6, a filter E7 and an image surface IMG. The photography optical lens assembly includes six lens elements (E1, E2, E3, E4, E5 and E6) with no additional lens element disposed between each of the adjacent six lens elements. There is an air gap in a paraxial region between each of all adjacent lens elements of the six lens elements of the photography optical lens assembly.

The first lens element E1 with positive refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has one inflection point.

The second lens element E2 with negative refractive power has an object-side surface being concave in a paraxial region thereof and an image-side surface being concave in a paraxial region thereof. The second lens element E2 is made of plastic material and has the object-side surface and the image-side surface being both aspheric. The image-side surface of the second lens element E2 has one inflection point. The image-side surface of the second lens element E2 has one critical point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has two inflection points. The image-side surface of the third lens element E3 has one inflection point. The object-side surface of the third lens element E3 has two critical points in an off-axis region thereof.

The fourth lens element E4 with positive refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has two inflection points. The image-side surface of the fourth lens element E4 has two inflection points. The image-side surface of the fourth lens element E4 has two critical points in an off-axis region thereof.

The fifth lens element E5 with negative refractive power has an object-side surface being concave in a paraxial region thereof and an image-side surface being concave in a paraxial region thereof. The fifth lens element E5 is made of plastic material and has the object-side surface and the image-side surface being both aspheric. The object-side surface of the fifth lens element E5 has three inflection points. The image-side surface of the fifth lens element E5 has two inflection points. The object-side surface of the fifth lens element E5 has two critical points in an off-axis region thereof. The image-side surface of the fifth lens element E5 has one critical point in an off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has two inflection points. The image-side surface of the sixth lens element E6 has five inflection points. The object-side surface of the sixth lens element E6 has two critical points in an off-axis region thereof. The image-side surface of the sixth lens element E6 has one critical point in an off-axis region thereof.

The filter E7 is made of glass material and located between the sixth lens element E6 and the image surface IMG, and will not affect the focal length of the photography optical lens assembly. The image sensor IS is disposed on or near the image surface IMG of the photography optical lens assembly.

The detailed optical data of the 12th embodiment are shown in Table 12A and the aspheric surface data are shown in Table 12B below.

| TABLE 12A | | | | | | | |
|---|---|---|---|---|---|---|---|
| 12th Embodiment | | | | | | | |
| f = 3.64 mm, Fno = 2.00, HFOV = 43.4 deg. | | | | | | | |
| Surface # | | Curvature Radius | | Thickness | Material | Index | Abbe # | Focal Length |
| 0 | Object | Infinity | | Infinity | | | | |
| 1 | Ape. Stop | Plano | | -0.225 | | | | |
| 2 | Lens 1 | 1.7198 | (ASP) | 0.498 | Plastic | 1.529 | 45.4 | 4.87 |
| 3 | | 4.6482 | (ASP) | 0.236 | | | | |
| 4 | Stop | Plano | | 0.290 | | | | |
| 5 | Lens 2 | -9.6320 | (ASP) | 0.170 | Plastic | 1.697 | 16.3 | -4.69 |
| 6 | | 4.9833 | (ASP) | 0.030 | | | | |
| 7 | Lens 3 | 4.0374 | (ASP) | 0.473 | Plastic | 1.551 | 44.8 | 5.39 |
| 8 | | -10.7320 | (ASP) | -0.077 | | | | |
| 9 | Stop | Plano | | 0.547 | | | | |
| 10 | Lens 4 | -9.2650 | (ASP) | 0.419 | Plastic | 1.614 | 25.6 | 2.10 |

(continued)

| TABLE 12A | | | | | | | |
|---|---|---|---|---|---|---|---|
| 12th Embodiment | | | | | | | |
| f = 3.64 mm, Fno = 2.00, HFOV = 43.4 deg. | | | | | | | |
| Surface # | | Curvature Radius | | Thickness | Material | Index | Abbe # | Focal Length |
| 11 | | -1.1513 | (ASP) | 0.030 | | | | |
| 12 | Lens 5 | -36.7905 | (ASP) | 0.390 | Plastic | 1.661 | 20.3 | -2.57 |
| 13 | | 1.7893 | (ASP) | 0.472 | | | | |
| 14 | Lens 6 | 1.2308 | (ASP) | 0.377 | Plastic | 1.551 | 44.8 | -8.84 |
| 15 | | 0.8756 | (ASP) | 0.500 | | | | |
| 16 | Filter | Plano | | 0.210 | Glass | 1.517 | 64.2 | - |
| 17 | | Plano | | 0.307 | | | | |
| 18 | Image | Plano | | - | | | | |
| Note: Reference wavelength is 587.6 nm (d-line). | | | | | | | | |
| An effective radius of the stop S1 (Surface 4) is 0.827 mm. | | | | | | | | |
| An effective radius of the stop S2 (Surface 9) is 1.371 mm. | | | | | | | | |

| TABLE 12B | | | | |
|---|---|---|---|---|
| Aspheric Coefficients | | | | |
| Surface # | 2 | 3 | 5 | 6 |
| k = | -1.66685E+00 | 1.66288E+01 | 0.00000E+00 | 1.09069E+01 |
| A4 = | 4.905660579E-02 | -1.424820415E-02 | -1.639913771E-01 | -3.894603356E-01 |
| A6 = | 1.894456326E-02 | -3.794118566E-02 | 3.040442203E-01 | 1.223531181E+00 |
| A8 = | -2.906779973E-02 | 1.074266954E-01 | -1.337010890E+00 | -3.222489354E+00 |
| A10 = | 2.287116670E-02 | -2.918412637E-01 | 3.556581861E+00 | 5.472554559E+00 |
| A12 = | 7.416279665E-02 | 2.318584230E-01 | -6.309938496E+00 | -5.995757991E+00 |
| A14 = | -1.926211720E-01 | 1.713292083E-01 | 7.009076997E+00 | 4.083660097E+00 |
| A16 = | 1.731801151E-01 | -4.481418685E-01 | -4.444124241E+00 | -1.566466942E+00 |
| A18 = | -6.176639666E-02 | 2.049936730E-01 | 1.191366925E+00 | 2.585098696E-01 |
| Surface # | 7 | 8 | 10 | 11 |
| k = | 5.17580E+00 | 0.00000E+00 | 1.29438E+01 | -9.07445E-01 |
| A4 = | -4.001384145E-01 | -8.373492970E-02 | -2.023328478E-01 | 3.968356313E-01 |
| A6 = | 1.367777733E+00 | -3.269810457E-01 | 1.229397888E-02 | -1.010279623E+00 |
| A8 = | -3.636943422E+00 | 3.269186156E+00 | 1.341677504E+00 | 2.560629278E+00 |
| A10 = | 6.826652238E+00 | -1.582847904E+01 | -4.856215189E+00 | -5.698341926E+00 |
| A12 = | -9.569143293E+00 | 4.932127812E+01 | 1.003716069E+01 | 9.520391043E+00 |
| A14 = | 1.010688213E+01 | -1.060146485E+02 | -1.407662195E+01 | -1.129418748E+01 |
| A16 = | -7.839114565E+00 | 1.611896458E+02 | 1.406024472E+01 | 9.445601712E+00 |
| A18 = | 4.169389361E+00 | -1.747010579E+02 | -1.009817584E+01 | -5.545990695E+00 |
| A20 = | -1.328794808E+00 | 1.340557668E+02 | 5.167603761E+00 | 2.262250220E+00 |
| A22 = | 1.875687167E-01 | -7.109606468E+01 | -1.836126929E+00 | -6.263575129E-01 |

(continued)

| Surface # | 7 | 8 | 10 | 11 |
|---|---|---|---|---|
| A24 = | - | 2.476125055E+01 | 4.300424783E-01 | 1.121895025E-01 |
| A26 = | - | -5.088978776E+00 | -5.964707009E-02 | -1.172722762E-02 |
| A28 = | - | 4.670491508E-01 | 3.708063924E-03 | 5.435313533E-04 |
| Surface # | 12 | 13 | 14 | 15 |
| k = | -9.90000E+01 | -8.11025E-01 | -1.04825E+00 | -9.88953E-01 |
| A4 = | 2.554731587E-01 | -3.966481911E-01 | -7.101536372E-01 | -7.461112403E-01 |
| A6 = | -9.536724159E-03 | 1.286258482E+00 | 7.168536038E-01 | 8.184753952E-01 |
| A8 = | -8.618797627E-01 | -2.749680978E+00 | -4.567284231E-01 | -7.136027676E-01 |
| A10 = | 1.593338634E+00 | 3.703003773E+00 | 7.640396932E-02 | 4.565157086E-01 |
| A12 = | -1.558214225E+00 | -3.440502072E+00 | 9.812900597E-02 | -2.187281322E-01 |
| A14 = | 9.408462440E-01 | 2.305785294E+00 | -8.149274023E-02 | 7.971581130E-02 |
| A16 = | -3.363362775E-01 | -1.137858619E+00 | 3.143144607E-02 | -2.202277129E-02 |
| A18 = | 4.314403459E-02 | 4.161007126E-01 | -7.439738192E-03 | 4.558206689E-03 |
| A20 = | 2.069957891E-02 | -1.122420145E-01 | 1.153806046E-03 | -6.964233857E-04 |
| A22 = | -1.290874374E-02 | 2.198305766E-02 | -1.178375801E-04 | 7.699158116E-05 |
| A24 = | 3.410030138E-03 | -3.031304861E-03 | 7.611686845E-06 | -5.968406690E-06 |
| A26 = | -5.068957671E-04 | 2.782757508E-04 | -2.768238461E-07 | 3.070547597E-07 |
| A28 = | 4.124145850E-05 | -1.523264666E-05 | 3.843601883E-09 | -9.403075014E-09 |
| A30 = | -1.435148443E-06 | 3.754840416E-07 | 2.758845543E-11 | 1.296172401E-10 |

In the 12th embodiment, the equation of the aspheric surface profiles of the aforementioned lens elements is the same as the equation of the 1st embodiment. Also, the definitions of these parameters shown in Table 12C are the same as those stated in the 1st embodiment with corresponding values for the 12th embodiment, so an explanation in this regard will not be provided again.

Moreover, these parameters can be calculated from Table 12A and Table 12B as the following values and satisfy the following conditions:

| TABLE 12C | | | |
|---|---|---|---|
| Schematic Parameters | | | |
| f [mm] | 3.64 | CT1/CT2 | 2.93 |
| Fno | 2.00 | 10×T23/CT1 | 0.60 |
| HFOV [deg.] | 43.4 | T23/T12 | 0.06 |
| FOV [deg.] | 86.8 | T23/(T12+T34) | 0.03 |
| TL/f | 1.34 | (T34+T56)/CT2 | 5.54 |
| TL/ImgH | 1.38 | CT3/CT6 | 1.25 |
| BL/TL | 0.21 | T56/CT5 | 1.21 |
| f/f1 | 0.75 | CT5/CT6 | 1.03 |
| f1/f4 | 2.32 | VS4 | 44.8 |
| |f1/f6| | 0.55 | V4 | 25.6 |
| f45/f56 | -4.57 | V6 | 44.8 |
| (|f3|+|f5|)/(|f1|+|f2|) | 0.83 | V6/V2 | 2.75 |

(continued)

| TABLE 12C | | | |
|---|---|---|---|
| Schematic Parameters | | | |
| R1/R2 | 0.37 | V2+V5+V6 | 81.4 |
| R11/R10 | 0.69 | ET1/ET4 | 1.31 |
| R8/R12 | -1.31 | ET2/ET3 | 1.41 |
| \|R8\|/f+\|R12\|/f | 0.56 | SAG5R1/Y5R1 | -0.13 |
| \|R11+R12\|/f | 0.58 | \|SAG3R1/SAG2R1\| | 0.13 |
| \|R8/R2\|+\|R12/R10\| | 0.74 | Y6R1/Y5R2 | 1.13 |

## 13th Embodiment

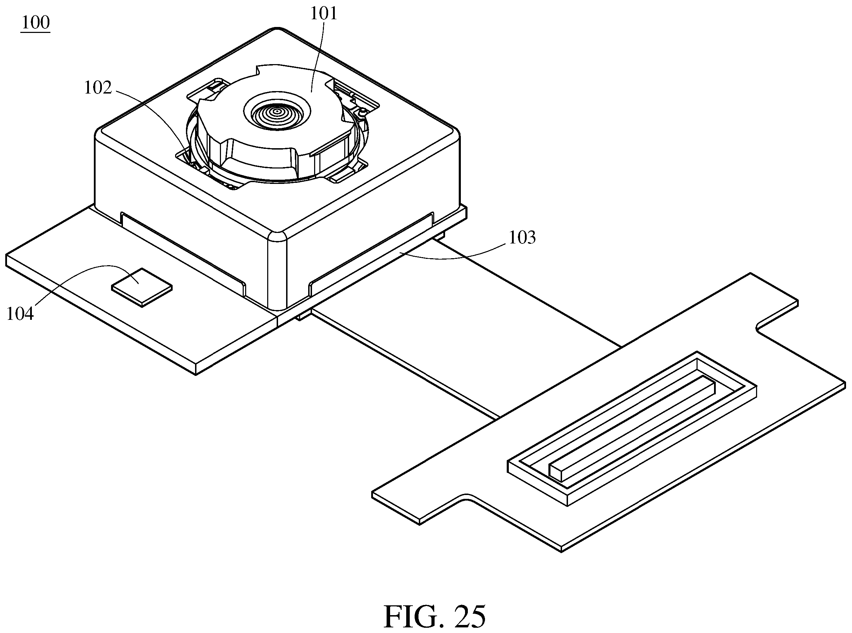

Fig. 25 is a perspective view of an image capturing unit according to the 13th embodiment of the present disclosure. In this embodiment, an image capturing unit 100 is a camera module including a lens unit 101, a driving device 102, an image sensor 103 and an image stabilizer 104. The lens unit 101 includes the photography optical lens assembly disclosed in the 1st embodiment, a barrel and a holder member (their reference numerals are omitted) for holding the photography optical lens assembly. However, the lens unit 101 may alternatively be provided with the photography optical lens assembly disclosed in other embodiments of the present disclosure, and the present disclosure is not limited thereto. The imaging light converges in the lens unit 101 of the image capturing unit 100 to generate an image with the driving device 102 utilized for image focusing on the image sensor 103, and the generated image is then digitally transmitted to other electronic component for further processing.

The driving device 102 can have auto focusing functionality, and different driving configurations can be obtained through the usages of voice coil motors (VCM), micro electromechanical systems (MEMS), piezoelectric systems, or shape memory alloy materials. The driving device 102 is favorable for obtaining a better imaging position of the lens unit 101, so that a clear image of the imaged object can be captured by the lens unit 101 with different object distances. The image sensor 103 (for example, CCD or CMOS), which can feature high photosensitivity and low noise, is disposed on the image surface of the photography optical lens assembly to provide higher image quality.

The image stabilizer 104, such as an accelerometer, a gyro sensor and a Hall effect sensor, is configured to work with the driving device 102 to provide optical image stabilization (OIS). The driving device 102 working with the image stabilizer 104 is favorable for compensating for pan and tilt of the lens unit 101 to reduce blurring associated with motion during exposure. In some cases, the compensation can be provided by electronic image stabilization (EIS) with image processing software, thereby improving image quality while in motion or low-light conditions.

## 14th Embodiment

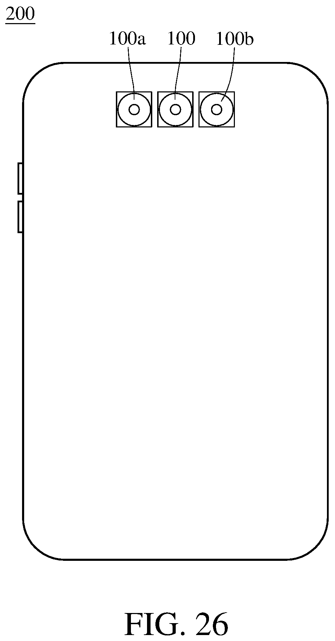

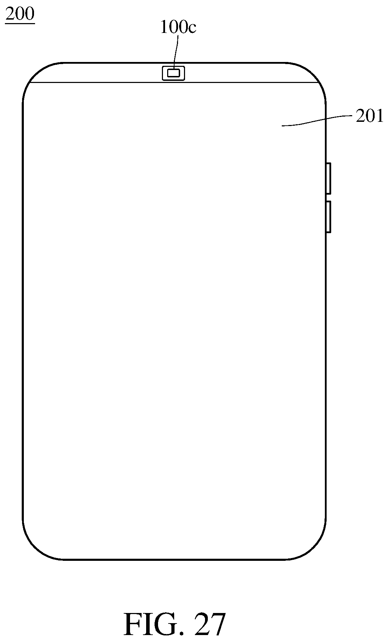

Fig. 26 is a perspective view of an electronic device according to the 14th embodiment of the present disclosure. Fig. 27 is another perspective view of the electronic device in Fig. 26.

In this embodiment, an electronic device 200 is a smartphone including the image capturing unit 100 disclosed in the 13th embodiment, an image capturing unit 100a, an image capturing unit 100b, an image capturing unit 100c and a display unit 201. As shown in Fig. 26, the image capturing unit 100, the image capturing unit 100a and the image capturing unit 100b are disposed on the same side of the electronic device 200 and face the same side, and each of the image capturing units 100, 100a and 100b has a single focal point. As shown in Fig. 27, the image capturing unit 100c and the display unit 201 are disposed on the opposite side of the electronic device 200, such that the image capturing unit 100c can be a front-facing camera of the electronic device 200 for taking selfies, but the present disclosure is not limited thereto. Furthermore, each of the image capturing units 100a, 100b and 100c can include the photography optical lens assembly of the present disclosure and can have a configuration similar to that of the image capturing unit 100. In detail, each of the image capturing units 100a, 100b and 100c can include a lens unit, a driving device, an image sensor and an image stabilizer, and each of the lens unit can include a photography optical lens assembly such as the photography optical lens assembly of the present disclosure, a barrel and a holder member for holding the photography optical lens assembly.

The image capturing unit 100 is a wide-angle image capturing unit, the image capturing unit 100a is a telephoto image capturing unit, the image capturing unit 100b is an ultra-wide-angle image capturing unit, and the image capturing unit 100c is a wide-angle image capturing unit. In this embodiment, the image capturing units 100, 100a and 100b have different fields of view, such that the electronic device 200 can have various magnification ratios so as to meet the requirement of optical zoom functionality. Moreover, as shown in Fig. 27, the image capturing unit 100c can have a non-circular opening, and the lens barrel or the lens elements in the image capturing unit 100c can have one or more trimmed edges at outer diameter positions thereof for corresponding to the non-circular opening. Therefore, it is favorable for further reducing the length of the image capturing unit 100c along single axis, thereby reducing the overall size of the lens, increasing the area ratio of the display unit 201 with respect to the electronic device 200, reducing the thickness of the electronic device 200, and achieving compactness of the overall module. In this embodiment, the electronic device 200 includes multiple image capturing units 100, 100a, 100b and 100c, but the present disclosure is not limited to the number and arrangement of image capturing units.

## 15th Embodiment

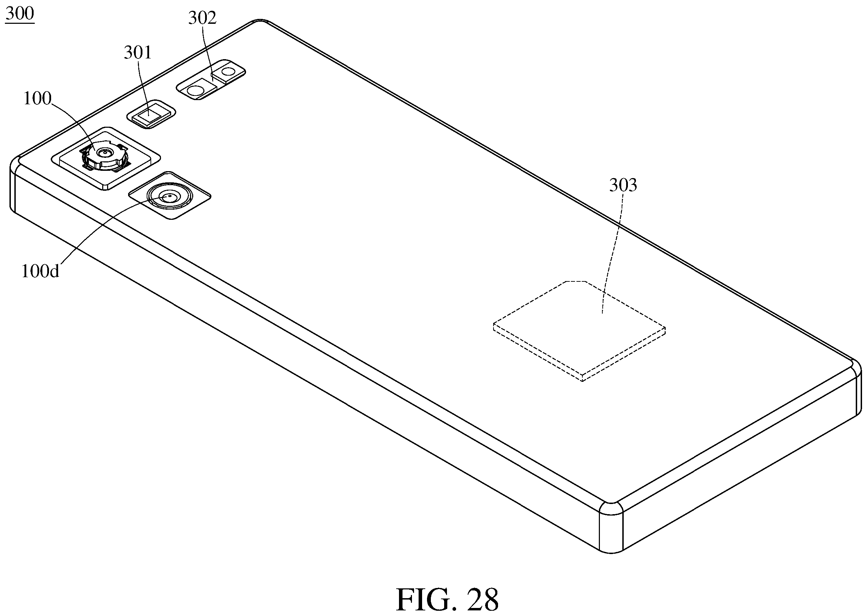

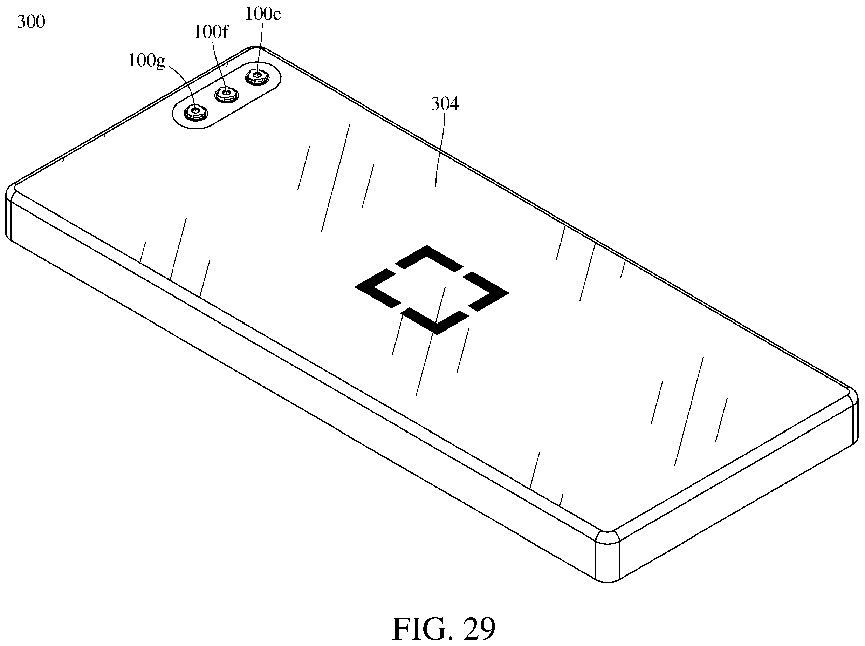

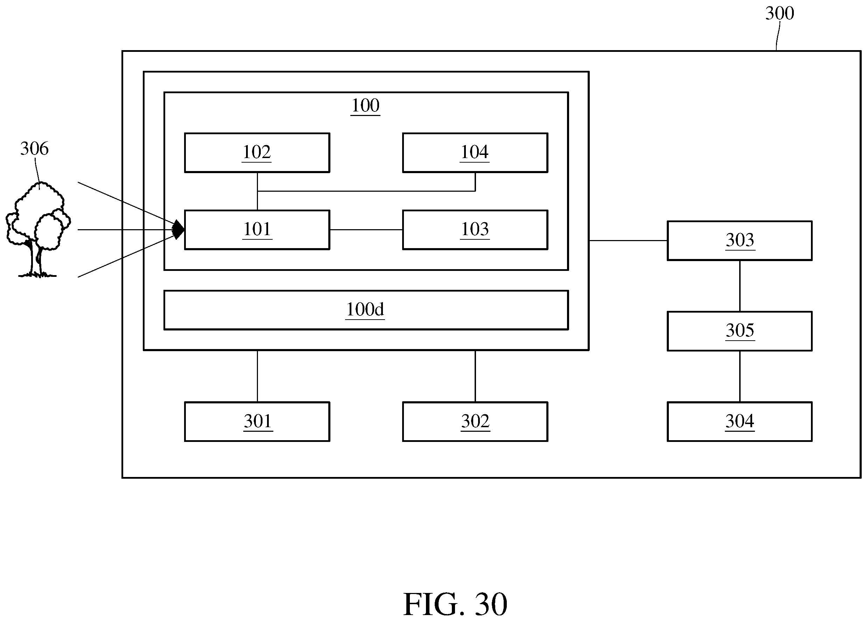

Fig. 28 is a perspective view of an electronic device according to the 15th embodiment of the present disclosure. Fig. 29 is another perspective view of the electronic device in Fig. 28. Fig. 30 is a block diagram of the electronic device in Fig. 28.

In this embodiment, an electronic device 300 is a smartphone including the image capturing unit 100 disclosed in the 13th embodiment, an image capturing unit 100d, an image capturing unit 100e, an image capturing unit 100f, an image capturing unit 100g, a flash module 301, a focus assist module 302, an image signal processor 303, a display module 304 and an image software processor 305. The image capturing unit 100 and the image capturing unit 100d are disposed on the same side of the electronic device 300. The focus assist module 302 can be a laser rangefinder or a ToF (time of flight) module, but the present disclosure is not limited thereto. The image capturing unit 100e, the image capturing unit 100f, the image capturing unit 100g and the display module 304 are disposed on the opposite side of the electronic device 300, and the display module 304 can be a user interface, such that the image capturing units 100e, 100f, 100g can be front-facing cameras of the electronic device 300 for taking selfies, but the present disclosure is not limited thereto. Furthermore, each of the image capturing units 100d, 100e, 100f and 100g can include the photography optical lens assembly of the present disclosure and can have a configuration similar to that of the image capturing unit 100. In detail, each of the image capturing units 100d, 100e, 100f and 100g can include a lens unit, a driving device, an image sensor and an image stabilizer, and each of the lens unit can include a photography optical lens assembly such as the photography optical lens assembly of the present disclosure, a barrel and a holder member for holding the photography optical lens assembly.

The image capturing unit 100 is a wide-angle image capturing unit, the image capturing unit 100d is an ultra-wide-angle image capturing unit, the image capturing unit 100e is a wide-angle image capturing unit, the image capturing unit 100f is an ultra-wide-angle image capturing unit, and the image capturing unit 100g is a ToF image capturing unit. In this embodiment, the image capturing units 100 and 100d have different fields of view, such that the electronic device 300 can have various magnification ratios so as to meet the requirement of optical zoom functionality. In addition, the image capturing unit 100g can determine depth information of the imaged object. In this embodiment, the electronic device 300 includes multiple image capturing units 100, 100d, 100e, 100f and 100g, but the present disclosure is not limited to the number and arrangement of image capturing units.

When a user captures images of an object 306, the light rays converge in the image capturing unit 100 or the image capturing unit 100d to generate images, and the flash module 301 is activated for light supplement. The focus assist module 302 detects the object distance of the imaged object 306 to achieve fast auto focusing. The image signal processor 303 is configured to optimize the captured image to improve image quality. The light beam emitted from the focus assist module 302 can be either conventional infrared or laser. In addition, the light rays may converge in the image capturing unit 100e, 100f or 100g to generate images. The display module 304 can include a touch screen, and the user is able to interact with the display module 304 and the image software processor 305 having multiple functions to capture images and complete image processing. Alternatively, the user may capture images via a physical button. The image processed by the image software processor 305 can be displayed on the display module 304.

## 16th Embodiment

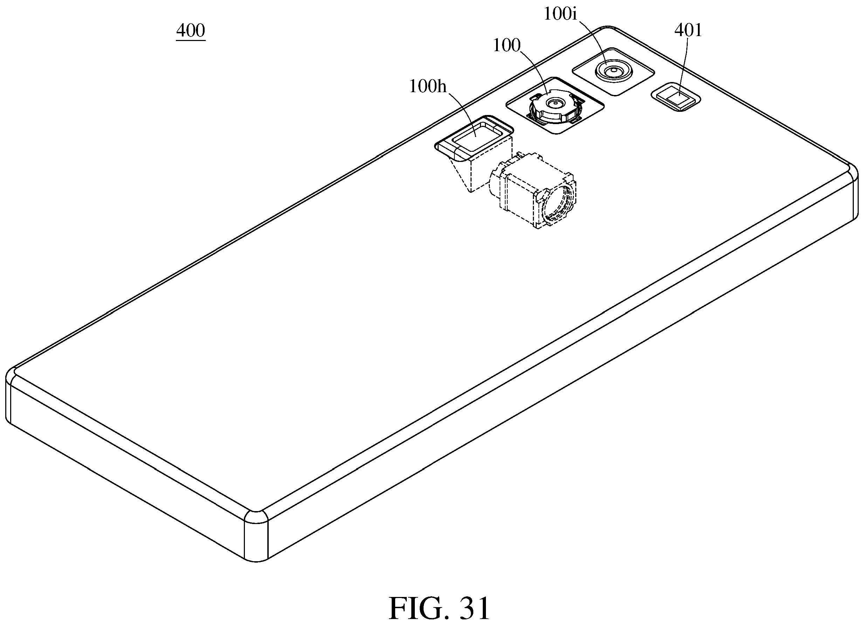

Fig. 31 is a perspective view of an electronic device according to the 16th embodiment of the present disclosure.

In this embodiment, an electronic device 400 is a smartphone including the image capturing unit 100 disclosed in the 13th embodiment, an image capturing unit 100h, an image capturing unit 100i, a flash module 401, a focus assist module, an image signal processor, a display module and an image software processor (not shown). The image capturing unit 100, the image capturing unit 100h and the image capturing unit 100i are disposed on the same side of the electronic device 400, while the display module is disposed on the opposite side of the electronic device 400. Furthermore, each of the image capturing units 100h and 100i can include the photography optical lens assembly of the present disclosure and can have a configuration similar to that of the image capturing unit 100, and the details in this regard will not be provided again.

The image capturing unit 100 is a wide-angle image capturing unit, the image capturing unit 100h is a telephoto image capturing unit, and the image capturing unit 100i is an ultra-wide-angle image capturing unit. In this embodiment, the image capturing units 100, 100h and 100i have different fields of view, such that the electronic device 400 can have various magnification ratios so as to meet the requirement of optical zoom functionality. Moreover, the image capturing unit 100h can be a telephoto image capturing unit having a light-folding element configuration, such that the total track length of the image capturing unit 100h is not limited by the thickness of the electronic device 400. Moreover, the light-folding element configuration of the image capturing unit 100h can be similar to, for example, one of the structures shown in Fig. 35 to Fig. 37, which can be referred to foregoing descriptions corresponding to Fig. 35 to Fig. 37, and the details in this regard will not be provided again. In this embodiment, the electronic device 400 includes multiple image capturing units 100, 100h and 100i, but the present disclosure is not limited to the number and arrangement of image capturing units. When a user captures images of an object, light rays converge in the image capturing unit 100, 100h or 100i to generate images, and the flash module 401 is activated for light supplement. Further, the subsequent processes are performed in a manner similar to the abovementioned embodiment, so the details in this regard will not be provided again.

## 17th Embodiment

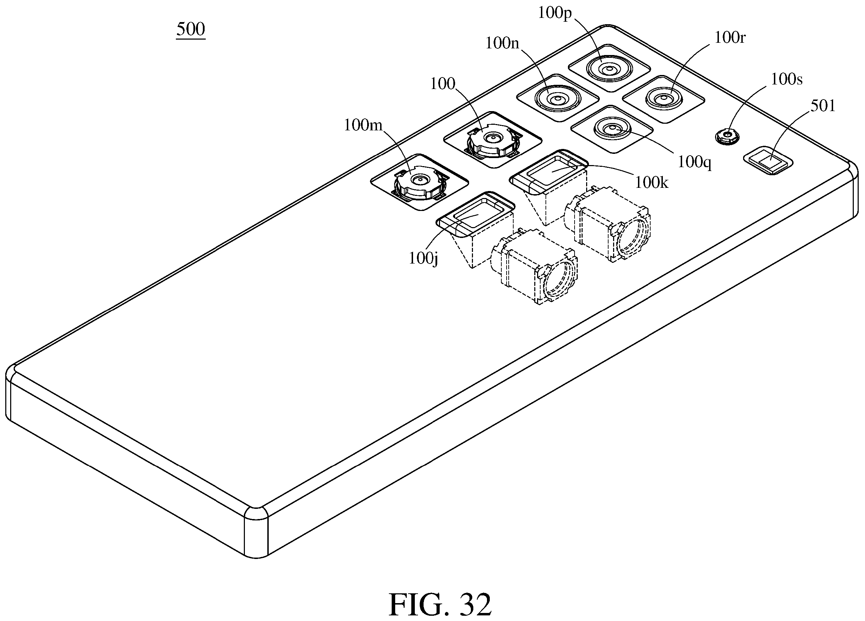

Fig. 32 is a perspective view of an electronic device according to the 17th embodiment of the present disclosure.

In this embodiment, an electronic device 500 is a smartphone including the image capturing unit 100 disclosed in the 13th embodiment, an image capturing unit 100j, an image capturing unit 100k, an image capturing unit 100m, an image capturing unit 100n, an image capturing unit 100p, an image capturing unit 100q, an image capturing unit 100r, an image capturing unit 100s, a flash module 501, a focus assist module, an image signal processor, a display module and an image software processor (not shown). The image capturing units 100, 100j, 100k, 100m, 100n, 100p, 100q, 100r and 100s are disposed on the same side of the electronic device 500, while the display module is disposed on the opposite side of the electronic device 500. Furthermore, each of the image capturing units 100j, 100k, 100m, 100n, 100p, 100q, 100r and 100s can include the photography optical lens assembly of the present disclosure and can have a configuration similar to that of the image capturing unit 100, and the details in this regard will not be provided again.

The image capturing unit 100 is a wide-angle image capturing unit, the image capturing unit 100j is a telephoto image capturing unit, the image capturing unit 100k is a telephoto image capturing unit, the image capturing unit 100m is a wide-angle image capturing unit, the image capturing unit 100n is an ultra-wide-angle image capturing unit, the image capturing unit 100p is an ultra-wide-angle image capturing unit, the image capturing unit 100q is a telephoto image capturing unit, the image capturing unit 100r is a telephoto image capturing unit, and the image capturing unit 100s is a ToF image capturing unit. In this embodiment, the image capturing units 100, 100j, 100k, 100m, 100n, 100p, 100q and 100r have different fields of view, such that the electronic device 500 can have various magnification ratios so as to meet the requirement of optical zoom functionality. Moreover, each of the image capturing units 100j and 100k can be a telephoto image capturing unit having a light-folding element configuration. Moreover, the light-folding element configuration of each of the image capturing unit 100j and 100k can be similar to, for example, one of the structures shown in Fig. 35 to Fig. 37, which can be referred to foregoing descriptions corresponding to Fig. 35 to Fig. 37, and the details in this regard will not be provided again. In addition, the image capturing unit 100s can determine depth information of the imaged object. In this embodiment, the electronic device 500 includes multiple image capturing units 100, 100j, 100k, 100m, 100n, 100p, 100q, 100r and 100s, but the present disclosure is not limited to the number and arrangement of image capturing units. When a user captures images of an object, the light rays converge in the image capturing unit 100, 100j, 100k, 100m, 100n, 100p, 100q, 100r or 100s to generate images, and the flash module 501 is activated for light supplement. Further, the subsequent processes are performed in a manner similar to the abovementioned embodiments, and the details in this regard will not be provided again.

The smartphone in several embodiments is only exemplary for showing the image capturing unit of the present disclosure installed in an electronic device, and the present disclosure is not limited thereto. The image capturing unit can be optionally applied to optical systems with a movable focus. Furthermore, the photography optical lens assembly of the image capturing unit features good capability in aberration corrections and high image quality, and can be applied to 3D (three-dimensional) image capturing applications, in products such as digital cameras, mobile devices, digital tablets, smart televisions, network surveillance devices, dashboard cameras, vehicle backup cameras, multi-camera devices, image recognition systems, motion sensing input devices, wearable devices and other electronic imaging devices.

The foregoing description, for the purpose of explanation, has been described with reference to specific embodiments. It is to be noted that TABLES 1A-12C show different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

**Claims**

1. A photography optical lens assembly comprising six lens elements (E1, E2, E3, E4, E5, E6), the six lens elements (E1, E2, E3, E4, E5, E6) being, in order from an object side to an image side along an optical path, a first lens element (E1), a second lens element (E2), a third lens element (E3), a fourth lens element (E4), a fifth lens element (E5) and a sixth lens element (E6), and each of the six lens elements (E1, E2, E3, E4, E5, E6) having an object-side surface facing toward the object side and an image-side surface facing toward the image side;

   wherein the first lens element (E1) has positive refractive power, the image-side surface of the fifth lens element (E5) is concave in a paraxial region thereof and has at least one critical point (C) in an off-axis region thereof, and the object-side surface of the sixth lens element (E6) is convex in a paraxial region thereof and has at least one critical point (C) in an off-axis region thereof;
   wherein a fourth smallest value among Abbe numbers of all lens elements of the photography optical lens assembly is VS4, a central thickness of the first lens element (E1) is CT1, a central thickness of the second lens element (E2) is CT2, an axial distance between the first lens element (E1) and the second lens element (E2) is T12, an axial distance between the second lens element (E2) and the third lens element (E3) is T23, a curvature radius of the image-side surface of the fourth lens element (E4) is R8, a curvature radius of the image-side surface of the sixth lens element (E6) is R12, and the following conditions are satisfied:

$$10.0 < VS4 < 46.0;$$

$$1.50 < CT1/CT2 < 7.00;$$

$$0.00 < T23/T12 < 0.72;$$

   and

$$-4.80 < R8/R12 < -0.80.$$

2. The photography optical lens assembly according to claim 1, wherein the object-side surface of the first lens element (E1) is convex in a paraxial region thereof, the image-side surface of the fourth lens element (E4) is convex in a paraxial region thereof, the image-side surface of the sixth lens element (E6) is concave in a paraxial region thereof, and there is an air gap in a paraxial region between each of all adjacent lens elements of the photography optical lens assembly.

3. The photography optical lens assembly according to claim 1 or 2, wherein a curvature radius of the object-side surface of the first lens element (E1) is R1, a curvature radius of the image-side surface of the first lens element (E1) is R2, an f-number of the photography optical lens assembly is Fno, and the following conditions are satisfied:

$$-0.30 < R1/R2 < 2.00;$$

   and

$$1.20 < Fno < 2.50.$$

4. The photography optical lens assembly according to any one of the preceding claims, wherein the axial distance between the first lens element (E1) and the second lens element (E2) is T12, the axial distance between the second lens element (E2) and the third lens element (E3) is T23, an axial distance between the third lens element (E3) and the fourth lens element (E4) is T34, an Abbe number of the sixth lens element (E6) is V6, and the following conditions are satisfied:

$$0.00 < T23/(T12+T34) < 0.20;$$

   and

$$10.0 < V6 < 48.0.$$

5. The photography optical lens assembly according to any one of the preceding claims, wherein a central thickness of the fifth lens element (E5) is CT5, a central thickness of the sixth lens element (E6) is CT6, an axial distance between the image-side surface of the sixth lens element (E6) and an image surface (IMG) is BL, an axial distance between the object-side surface of the first lens element (E1) and the image surface (IMG) is TL, and the following conditions are satisfied:

$$0.30 < CT5/CT6 < 1.50;$$

and

$$0.05 < BL/TL < 0.35.$$

6. The photography optical lens assembly according to any one of the preceding claims, wherein an axial distance between the third lens element (E3) and the fourth lens element (E4) is T34, an axial distance between the fifth lens element (E5) and the sixth lens element (E6) is T56, the central thickness of the second lens element (E2) is CT2, and the following condition is satisfied:

$$2.00 < (T34+T56)/CT2 < 8.00.$$

7. The photography optical lens assembly according to any one of the preceding claims, wherein a curvature radius of the image-side surface of the fifth lens element (E5) is R10, a curvature radius of the object-side surface of the sixth lens element (E6) is R11, and the following condition is satisfied:

$$0.03 < R11/R10 < 1.43.$$

8. The photography optical lens assembly according to any one of the preceding claims, further comprising an aperture stop (ST) located at an object side of the second lens element (E2);
wherein an axial distance between the object-side surface of the first lens element (E1) and an image surface (IMG) is TL, a focal length of the photography optical lens assembly is f, and the following condition is satisfied:

$$1.00 < TL/f < 1.48.$$

9. The photography optical lens assembly according to any one of the preceding claims, wherein an Abbe number of the second lens element (E2) is V2, an Abbe number of the sixth lens element (E6) is V6, a composite focal length of the fourth lens element (E4) and the fifth lens element (E5) is f45, a composite focal length of the fifth lens element (E5) and the sixth lens element (E6) is f56, and the following conditions are satisfied:

$$1.10 < V6/V2 < 3.80;$$

and

$$-18.00 < f45/f56 < 1.30.$$

10. The photography optical lens assembly according to any one of the preceding claims, wherein an axial distance between the object-side surface of the first lens element (E1) and an image surface (IMG) is TL, a maximum image height of the photography optical lens assembly is ImgH, and the following condition is satisfied:

$$0.80 < TL/ImgH < 1.80.$$

11. The photography optical lens assembly according to any one of the preceding claims, wherein a displacement in parallel with an optical axis from an axial vertex on the object-side surface of the fifth lens element (E5) to a maximum effective radius position on the object-side surface of the fifth lens element (E5) is SAG5R1, a maximum effective radius of the object-side surface of the fifth lens element (E5) is Y5R1, and the following condition is satisfied:

$$-0.30 < SAG5R1/Y5R1 < 0.10.$$

12. The photography optical lens assembly according to any one of the preceding claims, wherein a distance in parallel with an optical axis between a maximum effective radius position of the object-side surface of the second lens element (E2) and a maximum effective radius position of the image-side surface of the second lens element (E2) is ET2, a distance in parallel with the optical axis between a maximum effective radius position of the object-side surface of the third lens element (E3) and a maximum effective radius position of the image-side surface of the third lens element (E3) is ET3, a maximum effective radius of the image-side surface of the fifth lens element (E5) is Y5R2, a maximum effective radius of the object-side surface of the sixth lens element (E6) is Y6R1, and the following conditions are satisfied:

$$1.00 < ET2/ET3 < 2.00;$$

and

$$1.00 < Y6R1/Y5R2 < 1.30.$$

13. An image capturing unit (100), comprising:

the photography optical lens assembly according to claim 1; and
an image sensor (103) disposed on an image surface (IMG) of the photography optical lens assembly.

14. An electronic device (200), comprising:
the image capturing unit (100) according to claim 13.

15. A photography optical lens assembly comprising six lens elements (E1, E2, E3, E4, E5, E6), the six lens elements (E1, E2, E3, E4, E5, E6) being, in order from an object side to an image side along an optical path, a first lens element (E1), a second lens element (E2), a third lens element (E3), a fourth lens element (E4), a fifth lens element (E5) and a sixth lens element (E6), and each of the six lens elements (E1, E2, E3, E4, E5, E6) having an object-side surface facing toward the object side and an image-side surface facing toward the image side;

wherein the object-side surface of the fourth lens element (E4) is concave in a paraxial region thereof, the image-side surface of the fourth lens element (E4) is convex in a paraxial region thereof, the image-side surface of the fifth lens element (E5) is concave in a paraxial region thereof, and the object-side surface of the sixth lens element (E6) is convex in a paraxial region thereof and has at least one critical point (C) in an off-axis region thereof;
wherein a fourth smallest value among Abbe numbers of all lens elements of the photography optical lens assembly is VS4, a central thickness of the first lens element (E1) is CT1, a central thickness of the second lens element (E2) is CT2, an axial distance between the second lens element (E2) and the third lens element (E3) is T23, a curvature radius of the image-side surface of the fourth lens element (E4) is R8, a curvature radius of the image-side surface of the sixth lens element (E6) is R12, a focal length of the photography optical lens assembly is f, and the following conditions are satisfied:

$$10.0 < VS4 < 46.0;$$

$$1.50 < CT1/CT2 < 7.00;$$

$$0.00 < 10 \times T23/CT1 < 3.00;$$

and

$$0.01 < |R8|/f + |R12|/f < 3.00.$$

16. The photography optical lens assembly according to claim 15, wherein the first lens element (E1) has positive refractive power, and the image-side surface of the sixth lens element (E6) is concave in a paraxial region thereof and has at least one critical point (C) in an off-axis region thereof.

17. The photography optical lens assembly according to claim 15 or 16, wherein an axial distance between the first lens element (E1) and the second lens element (E2) is T12, the axial distance between the second lens element (E2) and the third lens element (E3) is T23, an Abbe number of the second lens element (E2) is V2, an Abbe number of the fifth lens element (E5) is V5, an Abbe number of the sixth lens element (E6) is V6, and the following conditions are satisfied:

$$0.00 < T23/T12 < 0.72;$$

and

$$30.0 < V2+V5+V6 < 95.2.$$

18. The photography optical lens assembly according to any one of claims 15 to 17, wherein a central thickness of the third lens element (E3) is CT3, a central thickness of the sixth lens element (E6) is CT6, a focal length of the first lens element (E1) is f1, a focal length of the sixth lens element (E6) is f6, and the following conditions are satisfied:

$$0.50 < CT3/CT6 < 1.80;$$

and

$$0.00 < |f1/f6| < 3.10.$$

19. The photography optical lens assembly according to any one of claims 15 to 18, wherein a focal length of the first lens element (E1) is f1, a focal length of the second lens element (E2) is f2, a focal length of the third lens element (E3) is f3, a focal length of the fifth lens element (E5) is f5, an Abbe number of the fourth lens element (E4) is V4, and the following conditions are satisfied:

$$0.10 < (|f3|+|f5|)/(|f1|+|f2|) < 1.50;$$

and

$$10.0 < V4 < 48.0.$$

20. The photography optical lens assembly according to any one of claims 15 to 19, wherein a curvature radius of the object-side surface of the sixth lens element (E6) is R11, the curvature radius of the image-side surface of the sixth lens element (E6) is R12, the focal length of the photography optical lens assembly is f, and the following condition is satisfied:

$$0.03 < |R11+R12|/f < 2.30.$$

21. The photography optical lens assembly according to any one of claims 15 to 20, wherein a curvature radius of the image-side surface of the first lens element (E1) is R2, the curvature radius of the image-side surface of the fourth lens element (E4) is R8, a curvature radius of the image-side surface of the fifth lens element (E5) is R10, the curvature radius of the image-side surface of the sixth lens element (E6) is R12, an axial distance between the fifth lens element (E5) and the sixth lens element (E6) is T56, a central thickness of the fifth lens element (E5) is CT5, and the following conditions are satisfied:

$$0.10 < |R8/R2|+|R12/R10| < 2.30;$$

and

$$0.50 < T56/CT5 < 4.50.$$

22. The photography optical lens assembly according to any one of claims 15 to 21, wherein a focal length of the first lens element (E1) is f1, a focal length of the fourth lens element (E4) is f4, and the following condition is satisfied:

$$1.00 < f1/f4 < 7.00.$$

23. The photography optical lens assembly according to any one of claims 15 to 22, wherein the focal length of the photography optical lens assembly is f, a focal length of the first lens element (E1) is f1, and the following condition is satisfied:

$$0.30 < f/f1 < 1.00.$$

24. The photography optical lens assembly according to any one of claims 15 to 23, wherein a displacement in parallel with an optical axis from an axial vertex on the object-side surface of the second lens element (E2) to a maximum effective radius position on the object-side surface of the second lens element (E2) is SAG2R1, a displacement in parallel with the optical axis from an axial vertex on the object-side surface of the third lens element (E3) to a maximum effective radius position on the object-side surface of the third lens element (E3) is SAG3R1, a distance in parallel with the optical axis between a maximum effective radius position of the object-side surface of the first lens element (E1) and a maximum effective radius position of the image-side surface of the first lens element (E1) is ET1, a distance in parallel with the optical axis between a maximum effective radius position of the object-side surface of the fourth lens element (E4) and a maximum effective radius position of the image-side surface of the fourth lens element (E4) is ET4, and the following conditions are satisfied:

$$0.00 \le |SAG3R1/SAG2R1| < 0.85;$$

and

$$0.60 < ET1/ET4 < 2.10.$$

25. The photography optical lens assembly according to any one of claims 15 to 24, wherein the fourth smallest value among Abbe numbers of all lens elements of the photography optical lens assembly is VS4, the central thickness of the first lens element (E1) is CT1, the central thickness of the second lens element (E2) is CT2, an axial distance between the first lens element (E1) and the second lens element (E2) is T12, the axial distance between the second lens element (E2) and the third lens element (E3) is T23, the curvature radius of the image-side surface of the fourth lens element (E4) is R8, the curvature radius of the image-side surface of the sixth lens element (E6) is R12, the focal length of the photography optical lens assembly is f, and the following conditions are satisfied:

$$28.2 \le VS4 \le 44.8;$$

$$2.24 \le CT1/CT2 \le 4.21;$$

$$0.06 \le T23/T12 \le 0.21;$$

$$-2.79 \le R8/R12 \le -1.15;$$

$$0.58 \le 10 \times T23/CT1 \le 2.35;$$

and

$$0.52 \le |R8|/f + |R12|/f \le 1.11.$$

FIG. 1

LONGITUDINAL
SPHERICAL ABER.

| | 656.3000 NM |
| | 587.6000 NM |
| | 486.1000 NM |

ASTIGMATIC
FIELD CURVES
IMG HT

| | T |
| | S |

DISTORTION
IMG HT

FOCUS (MILLIMETERS)

FOCUS (MILLIMETERS)

% DISTORTION

FIG. 2

EP 4 667 996 A2

FIG. 3

EP 4 667 996 A2

| | |
|---|---|
| — · — | 656.3000 NM |
| —— | 587.6000 NM |
| ------- | 486.1000 NM |

| | |
|---|---|
| — — | T |
| —— | S |

LONGITUDINAL
SPHERICAL ABER.

ASTIGMATIC
FIELD CURVES
IMG HT

DISTORTION
IMG HT

FOCUS (MILLIMETERS)

FOCUS (MILLIMETERS)

% DISTORTION

FIG. 4

FIG. 5

LONGITUDINAL SPHERICAL ABER.

656.3000 NM
587.6000 NM
486.1000 NM

1.00
0.75
0.50
0.25

-0.100   -0.050   0.0   0.050   0.100

FOCUS (MILLIMETERS)

ASTIGMATIC FIELD CURVES
IMG HT

T
S

3.62
2.71
1.81
0.90

-0.20   -0.10   0.0   0.10   0.20

FOCUS (MILLIMETERS)

DISTORTION
IMG HT

3.62
2.71
1.81
0.90

-3.0   -1.5   0.0   1.5   3.0

% DISTORTION

FIG. 6

FIG. 7

FIG. 8

EP 4 667 996 A2

**FIG. 9**

LONGITUDINAL
SPHERICAL ABER.

656.3000 NM
587.6000 NM
486.1000 NM

ASTIGMATIC
FIELD CURVES
IMG HT

T
S

DISTORTION
IMG HT

FOCUS (MILLIMETERS)

FOCUS (MILLIMETERS)

% DISTORTION

FIG. 10

EP 4 667 996 A2

FIG. 11

LONGITUDINAL
SPHERICAL ABER.

656.3000 NM
587.6000 NM
486.1000 NM

1.00

0.75

0.50

0.25

-0.100  -0.050  0.0  0.050  0.100
FOCUS (MILLIMETERS)

ASTIGMATIC
FIELD CURVES
IMG HT

T
S

3.58

2.68

1.79

0.89

-0.200  -0.100  0.0  0.100  0.200
FOCUS (MILLIMETERS)

DISTORTION
IMG HT

3.58

2.68

1.79

0.89

-3.0  -1.5  0.0  1.5  3.0
% DISTORTION

FIG. 12

FIG. 13

LONGITUDINAL
SPHERICAL ABER.

| 656.3000 NM |
| 587.6000 NM |
| 486.1000 NM |

ASTIGMATIC
FIELD CURVES
IMG HT

| T |
| S |

DISTORTION
IMG HT

FIG. 14

FIG. 15

EP 4 667 996 A2

FIG. 16

FIG. 17

EP 4 667 996 A2

FIG. 18

EP 4 667 996 A2

FIG. 19

FIG. 20

FIG. 21

FIG. 22

FIG. 23

EP 4 667 996 A2

FIG. 24

FIG. 25

FIG. 26

FIG. 27

EP 4 667 996 A2

FIG. 28

EP 4 667 996 A2

FIG. 29

FIG. 30

FIG. 31

FIG. 32

FIG. 33

EP 4 667 996 A2

FIG. 34

FIG. 35

FIG. 36

FIG. 37